(19) Europäisches Patentamt
European Patent Office
Office européen des brevets

(11) EP 2 738 194 A1

(12) **EUROPEAN PATENT APPLICATION**
published in accordance with Art. 153(4) EPC

(43) Date of publication:
**04.06.2014 Bulletin 2014/23**

(21) Application number: **12820198.5**

(22) Date of filing: **27.07.2012**

(51) Int Cl.:
***C08G 61/00*** *(2006.01)* ***H01B 1/06*** *(2006.01)*
***H01M 8/02*** *(2006.01)* ***H01M 8/10*** *(2006.01)*

(86) International application number:
**PCT/JP2012/069108**

(87) International publication number:
**WO 2013/018677 (07.02.2013 Gazette 2013/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2011 JP 2011167376**

(71) Applicant: **JSR Corporation**
**Minato-ku**
**Tokyo 105-8640 (JP)**

(72) Inventors:
- **MURAKAMI, Takuya**
  **Tokyo 105-8640 (JP)**
- **KADOTA, Toshiaki**
  **Tokyo 105-8640 (JP)**
- **YAMAKAWA, Yoshitaka**
  **Tokyo 105-8640 (JP)**

(74) Representative: **TBK**
**Bavariaring 4-6**
**80336 München (DE)**

# (54) AROMATIC COPOLYMER HAVING PROTON CONDUCTIVE GROUP AND APPLICATION THEREOF

(57) An aromatic copolymer comprises a hydrophilic segment (A) and a hydrophobic segment (B), wherein the hydrophilic segment (A) comprises a structural unit (1) having a proton conductive group, and the hydrophobic segment (B) comprises at least one structural unit selected from the group consisting of a structural unit (2) and a structural unit (3), wherein the structural unit (2) is a divalent structural unit having an aromatic ring and no proton conductive groups and having two bonding sites at the para-position of one ring included in the aromatic ring, and the structural unit (3) is a divalent structural unit having a benzene ring and is a structural unit different from the structural unit (2), the hydrophobic segment (B) in its entirety contained in the aromatic copolymer including both the structural unit (2) and the structural unit (3).

EP 2 738 194 A1

## Description

### TECHNICAL FIELD

The present invention relates to a novel aromatic copolymer having a proton conductive group, a polymer electrolyte membrane comprising said aromatic copolymer and uses thereof.

### BACKGROUND ART

Electrolyte is often used as an (aqueous) solution state, but recently the tendency has been increasing to use solid electrolytes. This tendency is firstly because those solid electrolytes have good processability in application in electric and electronic materials, and secondly because of the transition to size and weight reduction and electric power saving.

Inorganic and organic proton conductive materials have been known. As the inorganic materials, hydrates such as uranyl phosphate are used. However, it is difficult that the inorganic materials are enough contacted with substrate or electrode interface. As a result, many problems in forming a conductive layer on a substrate or an electrode are caused.

On the other hand, the organic materials include polymers that belong to cation exchange resins with examples including sulfonated vinyl polymers such as polystyrenesulfonic acid, perfluoroalkylsulfonic acid polymers represented by Nafion (product name; manufactured by DuPont), and perfluoroalkylcarboxylic acid polymers; and organic polymers obtained by introducing sulfonic acid groups or phosphoric acid groups in heat resistant polymers such as polybenzimidazole and polyether ether ketone.

Ordinary, in the manufacturing of fuel cells, an electrolyte membrane of the perfluoroalkylsulfonic acid polymer is sandwiched between electrodes and heat processed by hot pressing or the like to give a membrane-electrode assembly. The fluorine-based membranes such as perfluoroalkylsulfonic acid polymers are thermally deformed at relatively low temperatures around 80 °C and can be joined to others easily. However, the temperature can rise to 80°C or above by reaction heat during the electric power generation of the fuel cells. In this case, the electrolyte membrane is easily softened and creeps to cause short circuits between the electrodes, resulting in power generation failure.

To prevent the above problem, the thickness of the electrolyte membranes is increased to some degree or fuel cells are designed such that the power generation temperature will not exceed 80°C. Consequently, the maximum output of power generation of the fuel cells thus designed is decreased.

The electrolyte formed from the perfluoroalkylsulfonic acid polymers has poor mechanical characteristics at high temperatures since the polymer has low thermal deformation temperature. To solve the problems, solid polymer electrolyte membranes that have aromatic polymers used in engineering plastics have been developed.

For example, U.S. Patent No. 5,403,675 (Patent Literature 1) discloses solid polymer electrolytes comprising a rigid sulfonated polyphenylene. This polymer contains a main component polymer obtained by polymerizing an aromatic compound composed of phenylene chains, the main component polymer being reacted with a sulfonating agent and thus having a sulfonic acid group introduced thereto. The electrolyte membranes of this polymer have a thermal deformation temperature of 180°C or above and are excellent in creeping resistance at high temperatures.

However, this electrolyte membrane has large swelling in hot water and large shrinkage in drying, and is thus still insufficient for use in the electrolyte membranes employed for polymer electrolyte fuel cells.

### CITATION LIST

### PATENT LITERATURE

[Patent Literature 1] U.S. Patent No. 5,403,675

### SUMMARY OF INVENTION

### TECHNICAL PROBLEM

It is an object of the present invention to provide an aromatic copolymer having a proton conductive group that is capable of forming a solid polymer electrolyte membrane that has high proton conductivity and is excellent in electrical power generation durability, and has reduced swelling in hot water and reduced shrinkage in drying; and uses thereof.

### TECHNICAL SOLUTION

The present inventors studied diligently to solve the aforementioned problem and have found that the above

problem can be solved by an aromatic copolymer comprising specific structural units, thereby perfecting the present invention.

Embodiments of the present invention are indicated in the following [1] to [11].

[1] An aromatic copolymer comprising a hydrophilic segment (A) and a hydrophobic segment (B), wherein
the hydrophilic segment (A) comprises a structural unit (1) having a proton conductive group, and
the hydrophobic segment (B) comprises at least one structural unit selected from the group consisting of a structural unit (2) and a structural unit (3),
wherein the structural unit (2) is a divalent structural unit having an aromatic ring and no proton conductive groups and having two bonding sites at the para-position of one ring included in the aromatic ring, and
the structural unit (3) is a divalent structural unit having a benzene ring and is a structural unit different from the structural unit (2),
the hydrophobic segment (B) in its entirety contained in the aromatic copolymer comprising both the structural unit (2) and the structural unit (3).

[2] The aromatic copolymer according to [1], wherein the structural unit (2) is a structural unit represented by the following formula (2).

[Chem. 1]

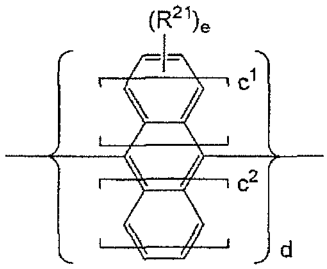

· · · (2)

In the formula (2):

a replaceable carbon atom constituting an aromatic ring may be replaced with a nitrogen atom,
$R^{21}$ is independently a halogen atom, a hydroxyl group, a nitro group, a nitrile group or $R^{22}$-E- (E is a direct bond, -O-, -S-, -CO-, $-SO_2-$, -CONH-, -COO-, $-CF_2-$, $-CH_2-$, $-C(CF_3)_2-$, or $-C(CH_3)_2-$), and $R^{22}$ is an alkyl group, a halogenated alkyl group, an alkenyl group, an aryl group, a halogenated aryl group or a nitrogen-containing heterocyclic ring, wherein a hydrogen atom of these groups may be replaced with at least one group selected from the group consisting of a hydroxyl group, a nitro group, a nitrile group and $R^{22}$-E-), and multiple $R^{21}$S may be bonded to one another to form a ring structure,
$c^1$ and $c^2$ are each independently an integer of 0, or 1 or greater,
d is an integer of 1 or greater, and
e is independently an integer of 0 to $(2c^1+2c^2+4)$.

[3] The aromatic copolymer according to [1] or [2], wherein the structural unit (3) is at least one structural unit selected from the group consisting of structural units represented by the following formula (3a) and structural units represented by the following formula (3b).

[Chem. 2]

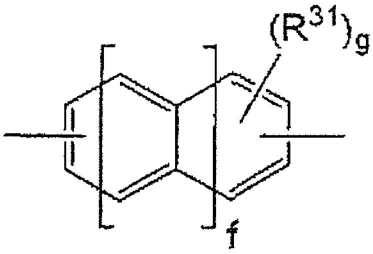

· · · (3 a)

In the formula (3a):

a replaceable carbon atom constituting an aromatic ring may be replaced with a nitrogen atom,
$R^{31}$ is independently a halogen atom, a hydroxyl group, a nitro group, a nitrile group, a proton conductive group, or $R^{22}$-E- (E and $R^{22}$ are each independently synonymous with E and $R^{22}$ in the formula (2), respectively), and multiple $R^{31}$s may be bonded to one another to form a ring structure,
f is an integer of 0, or 1 or greater, and
g is an integer of 0 to (2f+4).

[Chem. 3]

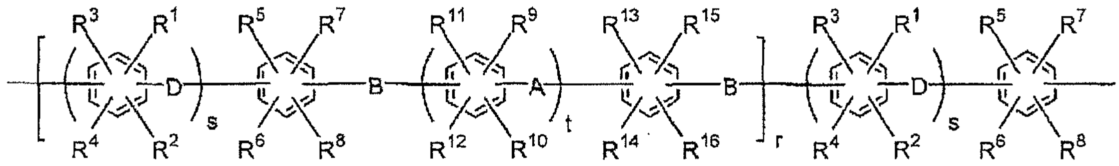

・・・(3 b)

In the formula (3b):

A and D are each independently a direct bond, -O-, -S-, -CO-, $-SO_2-$, -SO-, -CONH-, -COO-, $-(CF_2)_i-$ (i is an integer of 1 to 10), $-(CH_2)_j-$ (j is an integer of 1 to 10), $-CR'_2-$ (R' is an aliphatic hydrocarbon group, an aromatic hydrocarbon group or a halogenated hydrocarbon group), a cyclohexylidene group, or a fluorenylidene group,
B is independently an oxygen atom or a sulfur atom,
$R^1$ to $R^{16}$ are each independently a hydrogen atom, a halogen atom, a hydroxyl group, a nitro group, a nitrile group, a proton conductive group, or $R^{22}$-E- (E and $R^{22}$ are each independently synonymous with E and $R^{22}$ in the structural unit (2), respectively), and multiple groups of $R^1$ to $R^{16}$ may be bonded to one another to form a ring structure,
s and t are each independently an integer of 0 to 4, and
r is an integer of 0, or 1 or greater.

[4] The aromatic copolymer according to any one of [1] to [3], wherein the hydrophobic segment (B) comprises the structural unit (2) and the structural unit (3), and the structural unit (3) is a structural unit represented by the formula (3a).
[5] The aromatic copolymer according to any one of [1] to [4], wherein the structural unit (1) is a divalent structural unit having a proton conductive group and an aromatic ring and having two bonding sites, wherein the two bonding sites are bonded to one aromatic ring, or one of the two bonding sites is bonded to one aromatic ring (a) and the other bonding site is bonded to an aromatic ring (b) that is bonded to the aromatic ring (a) via a single bond or via at least one aromatic ring.
[6] The aromatic copolymer according to any one of [1] to [5], wherein the structural unit (1) is a structural unit represented by the following formula (1).

[Chem. 4]

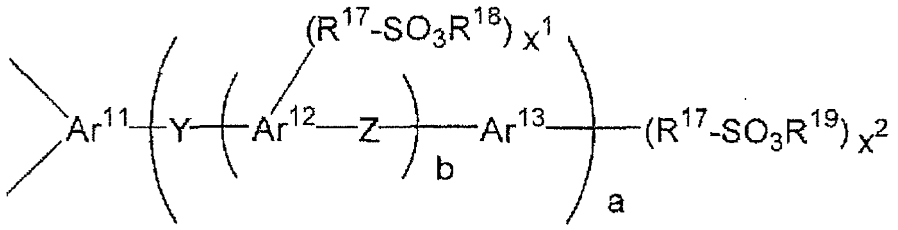

・・・(1)

In the formula (1):

$Ar^{11}$, $Ar^{12}$ and $Ar^{13}$ are each independently a benzene ring, a condensed aromatic ring, or an aromatic group having a nitrogen-containing heterocyclic ring, which may be replaced with a halogen atom, a C1-20 monovalent hydrocarbon group or a C1-20 monovalent halogenated hydrocarbon group,

Y and Z are each independently a direct bond, -O-, -S-, -CO-, $-SO_2-$, -SO-, $-(CH_2)_u-$, $-(CF_2)_u-$ (u is an integer of 1 to 10), $-C(CH_3)_2-$, or $-C(CF_3)_2-$,

$R^{17}$ is independently a direct bond, $-O(CH_2)_p-$, $-O(CF_2)_p-$, $-(CH_2)_p-$ or $-(CF_2)_p-$ (p is an integer of 1 to 12),

$R^{18}$ and $R^{19}$ are each independently a hydrogen atom or a protective group, wherein at least one of all $R^{18}$s and $R^{19}$s which are contained in the structural unit (1) is a hydrogen atom,

$x^1$ is independently an integer of 0 to 6,

$x^2$ is an integer of 1 to 7,

a is 0 or 1, and

b is an integer of 0 to 20.

[7] The aromatic copolymer according to any one of [1] to [6], wherein the hydrophobic segment (B) is a segment in which the structural unit (2) is randomly copolymerized with the structural unit (3).

[8] The aromatic copolymer according to any one of [1] to [7], wherein the structural unit (2) is contained at 33 to 99 wt%, provided that the total content of the structural units (2) and (3) is 100 wt%.

[9] A polymer electrolyte membrane comprising the aromatic copolymer according to any one of [1] to [8].

[10] A membrane-electrode assembly comprising a gas diffusion layer, a catalyst layer, the polymer electrolyte membrane according to [9], a catalyst layer and a gas diffusion layer that are laminated in this order.

[11] A polymer electrolyte fuel cell comprising the membrane-electrode assembly according to [10].

ADVANTAGEOUS EFFECTS OF INVENTION

By using the aromatic copolymer having a proton conductive group according to the present invention, which has specific structural units, a polymer electrolyte and a proton conductive membrane can be obtained which have high radical resistance and high gas barrier properties and is excellent in proton conductivity, hot water resistance and mechanical strength, as well as having sufficient toughness.

Furthermore, because of having reduced swelling in hot water and reduced shrinkage in drying, and thus being excellent in electrical power generation durability and in dimension stability in response to wet and dry change, the aromatic copolymer having a proton conductive group according to the present invention can be suitably used for a proton conductive membrane for a fuel cell.

BRIEF DESCRIPTION OF DRAWINGS

[Fig.1] Fig. 1 is $^1$H-NMR spectrum (DMSO-$d^6$) of a polymer obtained in Example 1.

[Fig.2] Fig. 2 is $^1$H-NMR spectrum (DMSO-$d^6$) of an intermediate of a polymer obtained in Example 1 (neopentyl sulfonate).

[Fig.3] Fig. 3 is $^1$H-NMR spectrum (DMSO-$d^6$) of an oligomer consisting only of a structural unit (2) and a structural unit (3) that is obtained in Example 1.

[Fig.4] Fig. 4 is $^1$H-NMR spectrum (DMSO-$d^6$) of a polymer obtained in Example 6.

[Fig.5] Fig. 5 is $^1$H-NMR spectrum (DMSO-$d^6$) of an oligomer consisting only of a structural unit (2) that is obtained in Example 6.

[Fig.6] Fig. 6 is $^1$H-NMR spectrum (DMSO-$d^6$) of a compound represented by the formula (3-3) described later that is obtained in Synthesis Example 3-3.

[Fig.7] Fig. 7 is $^1$H-NMR spectrum (DMSO-$d^6$) of a polymer obtained in Comparative Example 1.

[Fig.8] Fig. 8 is $^1$H-NMR spectrum (DMSO-$d^6$) of a polymer obtained in Comparative Example 2.

DESCRIPTION OF EMBODIMENTS

Hereinafter, the aromatic copolymer according to the present invention and uses thereof are described in detail.

[Aromatic Copolymer]

The aromatic copolymer of the present invention is an aromatic copolymer comprising a hydrophilic segment (A) and a hydrophobic segment (B), wherein

the hydrophilic segment (A) comprises a structural unit (1) having a proton conductive group,
the hydrophobic segment (B) comprises at least one structural unit selected from the group consisting of a structural unit (2) and a structural unit (3), wherein
the structural unit (2) is a divalent structural unit having an aromatic ring and no proton conductive groups and having two bonding sites at the para-position of one ring contained in the aromatic ring, and
the structural unit (3) is a divalent structural unit having a benzene ring and is a structural unit different from the structural unit (2),
the hydrophobic segment (B) in its entirety contained in the aromatic copolymer comprising both the structural unit (2) and the structural unit (3).

The aromatic copolymer of the present invention is preferably an aromatic block copolymer comprising the hydrophilic segment (A) and the hydrophobic segment (B), the aromatic copolymer being obtained by block copolymerizing the structural unit (1) with at least one structural unit selected from the group consisting of the structural unit (2) and the structural unit (3), wherein
the hydrophilic segment (A) has a structure in which a plurality of the structural unit (1) having a proton conductive group are connected via a direct bond; and
the hydrophobic segment (B) has a polyarylene structure in which a plurality of the structural unit (2) that have no proton conductive groups and/or the structural unit (3) are connected via a direct bond, and the hydrophobic segment (B) in its entirety comprises both the structural unit (2) and the structural unit (3).

Here, the segment refers to an oligomer unit or a polymer unit in which three or more structural units constituting the segment are connected with one another. From the viewpoints such as proton conductivity and hot water resistance, it is preferable that five or more structural units constituting the segment are connected with one another, and it is more preferable that ten or more structural units constituting the segment are connected with one another.

The block copolymer refers to a molecular structure in which heterogeneous segments are covalently bonded to each other to form a long chain. Such block copolymers include a main chain-type copolymer in which the hydrophilic segment and the hydrophobic segment form the main chain structure, and a graft-type copolymer in which one segment forms the main chain structure and the other block forms the side chain structure. The block copolymer may be a diblock polymer or a triblock polymer, or may be a polymer resultant from more structural units being connected.

Further, the hydrophilic segment refers to a segment in which an average of 0.5 or more of proton conductive group is present per one structural unit constituting the segment. In terms of electric power generation performance, in the hydrophilic segment, it is preferable that an average of not less than 1.0 of proton conductive group is present per one structural unit, and it is more preferable that an average of not less than 2.0 proton conductive groups are present per one structural unit.

On the other hand, the hydrophobic segment refers to a segment in which an average of not more than 0.1 of proton conductive group is present per one structural unit constituting the segment. In terms of hot water resistance and dimension stability, in the hydrophobic segment, it is preferable that an average of not more than 0.05 of proton conductive group is present per one structural unit, and it is more preferable that no proton conductive groups are present per one structural unit.

<Segment (A)>

The segment (A), constituting the aromatic copolymer of the present invention, comprises the structural unit (1) having a proton conductive group.

The inclusion in the aromatic copolymer of the present invention of the structural unit (1) leads to the provision of a copolymer excellent in proton conductivity.

Examples of the proton conductive group include a sulfonic acid group, a phosphonic acid group, a carboxyl group, and a bissulfonylimide group.

The segment (A) is formed by three or more structural units (1) that are continuous. From the viewpoints such as obtaining a copolymer excellent in proton conductivity, the segment (A) in which five or more structural units (1) are continuous is preferable, and the segment (A) in which ten or more structural units (1) are continuous is more preferable.

The segment (A) preferably has a molecular weight of 1,000 to 40, 000, more preferably 1, 000 to 20, 000, still more preferably 1,500 to 15,000, particularly preferably 2,000 to 10,000. The molecular weight within the above range is preferable, in which case the copolymer has high proton conductivity. How to measure the molecular weight is as described in Examples.

The structural unit (1) is not particularly limited as long as having a proton conductive group, but is preferably a divalent structural unit having a proton conductive group and an aromatic ring and having two bonding sites wherein the two bonding sites are bonded to one aromatic ring, or one bonding site of the two bonding sites is boned to one aromatic ring (a), and the other bonding site of the two bonding sites is bonded to an aromatic ring (b) that is bonded to the aromatic ring (a) via a single bond or via at least one aromatic ring.

The structure in which one bonding site of the two bonding sites is bonded to one aromatic ring (a) and the other bonding site is bonded to an aromatic ring (b) [$Ar^b$] that is bonded to the aromatic ring (a) [$Ar^a$] via a single bond or via at least one aromatic ring refers to, for example, a structure represented by the following formula (i).

[Chem. 5]

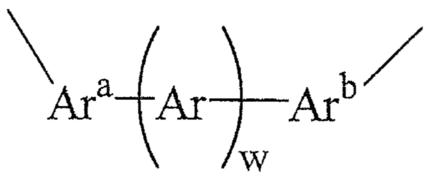

• • • (i)

In the formula (i):
Ar, $Ar^a$ and $Ar^b$ are each independently a benzene ring, a condensed aromatic ring, or an aromatic group having a nitrogen-containing heterocyclic ring, which may be replaced with a halogen atom, a C1-20 monovalent hydrocarbon group or a C1-20 monovalent halogenated hydrocarbon group, and
w is 0 or a positive integer,
wherein at least one of Ar, $Ar^a$ and $Ar^b$ has a proton conductive group.

Examples of the benzene ring, the condensed aromatic ring or the aromatic group having a nitrogen-containing heterocyclic ring, which may be replaced with a halogen atom, a C1-20 monovalent hydrocarbon group or a C1-20 monovalent halogenated hydrocarbon group, in Ar, $Ar^a$ and $Ar^b$, may be the same groups mentioned for a benzene ring, a condensed aromatic ring or an aromatic group having a nitrogen-containing heterocyclic ring, which may be replaced with a halogen atom, a C1-20 monovalent hydrocarbon group or a C1-20 monovalent halogenated hydrocarbon group, in $Ar^{11}$, $Ar^{12}$ and $Ar^{13}$ described later.

In the structural unit (1), iwhen the two bonding sites are bonded to one phenylene group, provided that structural units where the bonding sites bonded to said phenylene group are situated at the para-position and structural units where the bonding sites bonded to said phenylene group are situated at the meta-position totals 100%, the content of the structural unit where the bonding sites bonded to said phenylene group are situated at the meta-position in the structural unit (1) is preferably at 10% or more, more preferably at 50% or more, further preferably at 100% or more.

The structural unit (1) is more preferably a structural unit represented by the following formula (1) (hereinafter also referred to as the "structural unit (1')").

[Chem. 6]

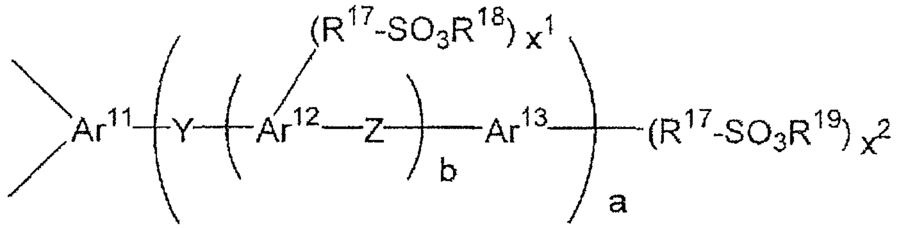

• • • (1)

In the formula (1), $Ar^{11}$, $Ar^{12}$ and $Ar^{13}$ are each independently a benzene ring , a condensed aromatic ring, or an aromatic group having a nitrogen-containing heterocyclic ring, which may be replaced with a halogen atom, a C1-20 monovalent hydrocarbon group or a C1-20 monovalent halogenated hydrocarbon group.

For example, when b is 2 or greater, the structural unit (1') has multiple Zs, wherein the multiple Zs may be the same or different from one another. The same applies to the other symbols in this formula and to symbols in the other formulae.

In the formula (1), single lines which are illustrated at the end of the structural unit and do not have a substituent illustrated at one end thereof (hereinafter also referred to as the "bonding site") means the connection to an adjacent structural unit. In the specification of the present invention, this illustration is used to mean the same as described above. The divalent structural unit thus refers to a structural unit having two bonding sites.

The halogen atom is preferably a fluorine atom.

Examples of the C1-20 monovalent hydrocarbon group include:

C1-20 alkyl groups such as a methyl group, an ethyl group, a propyl group, an isopropyl group, a butyl group, an isobutyl group, a t-butyl group, a neopentyl group, a tetramethylbutyl group, an amyl group, a pentyl group, a hexyl group and an octyl group;
C3-20 cycloalkyl groups such as a cyclopentyl group and a cyclohexyl group;
C6-20 aromatic hydrocarbon groups such as a phenyl group, a naphthyl group and a biphenyl group; and
C2-20 alkenyl groups such as a vinyl group, an allyl group and a propenyl group.

Examples of the C1-20 monovalent halogenated hydrocarbon group include C1-20 halogenated alkyl groups, C3-20 halogenated cycloalkyl groups, and C6-20 halogenated aromatic hydrocarbon groups.

Examples of the halogenated alkyl group include a trichloromethyl group, a trifluoromethyl group, a tribromomethyl group, a pentachloroethyl group, a pentafluoroethyl group, a pentabromoethylgroup, a perfluoropropyl group, a perfluorobutyl group, a perfluoropentyl group and a perfluorohexyl group;

Examples of the halogenated cycloalkyl group include a chlorocyclopentyl group, a fluorocyclopentyl group, a chlorocyclohexyl group and a fluorocyclohexyl group;

Examples of the halogenated aromatic hydrocarbon group include a chlorophenyl group, a chloronaphthyl group, a fluorophenyl group and a fluoronaphthyl group.

Examples of the condensed aromatic ring include naphthalene ring, fluorene ring, dibenzofuran ring and dibenzothiophene ring.

Examples of the nitrogen-containing heterocyclic rings include nitrogen atom-containing five-membered and six-membered ring structures. The number of nitrogen atoms in the heterocyclic ring is not particularly limited as long as being one or more. The heterocyclic ring may contain, in addition to nitrogen, an oxygen atom and a sulfur atom. Specific examples thereof include 1H-pyrrole ring, 2H-pyrrole ring, imidazole ring, pyrazole ring, isothiazole ring, isoxazole ring, pyridine ring, pyrazine ring, pyrimidine ring, pyridazine ring, indolizine ring, isoindole ring, 3H-indole ring, 1H-indole ring, 1H-indazole ring, purine ring, 4H-quinolizine ring, quinoline ring, isoquinoline ring, phthalazine ring, naphthyridine ring, quinoxaline ring, quinazoline ring, cinnoline ring, pteridine ring, carbazole ring, carboline ring, phenanthridine ring, acridine ring, perimidine ring, phenanthroline ring, phenazine ring, phenothiazine ring, furazan ring, phenoxazine ring, pyrrolidine ring, pyrroline ring, imidazoline ring, imidazolidine ring, indoline ring, isoindoline ring, oxazole ring, benzoxazole ring, 1,3,5-triazine ring, purine ring, tetrazole ring, tetrazine ring, triazole ring, phenarsazine ring, benzoimidazole ring, benzotriazole ring, thiazole ring, benzothiazole ring, and benzothiadiazole ring. Of these, imidazole ring, pyridine ring, 1,3,5-triazine ring and triazole ring are preferable.

The nitrogen-containing heterocyclic ring may have a substituent, with examples of the substituent including alkyl groups such as a methyl group, an ethyl group and a propyl group, aryl groups such as a phenyl group, a toluyl group and a naphthyl group, a cyano group, and a fluorine atom.

$Ar^{11}$ is preferably a benzene ring or biphenyl, and is more preferably a benzene ring.

Y and Z are each independently a direct bond, -O-, -S-, -CO-, $-SO_2-$, -SO-, - $(CH_2)_u$-, - $(CF_2)_u$- (u is an integer of 1 to 10), $-C(CH_3)_2-$, or $-C(CF_3)_2-$. Of these, a direct bond, -O-, -CO-, $SO_2$- or -$(CF_2)_u$- is preferable.

$R^{17}$ is independently a direct bond, -$O(CH_2)_p$-, -$O(CF_2)_p$-, - $(CH_2)_p$- or - $(CF_2)_p$- (p is an integer of 1 to 12). Of these, a direct bond, -$O(CF_2)_p$-, and -$(CF_2)_p$- are preferable in terms of proton conductivity.
p is preferably an integer of 1 to 6, preferably an integer of 1 to 4.

$R^{18}$ and $R^{19}$ are each independently a hydrogen atom or a protective group, provided that at least one of all $R^{18}$s and $R^{19}$s contained in the structural unit (1') is a hydrogen atom.

The protective group refers to an ion, an atom, an atomic group or the like that is used to temporarily protect a reactive group ($-SO_3$- or $-SO_3^-$). Specific examples thereof include alkali metal atoms, aliphatic hydrocarbon groups, alicyclic groups, oxygen-containing heterocyclic groups and nitrogen-containing cations.

Examples of the aliphatic hydrocarbon groups may be the same groups mentioned for the C1-20 monovalent hydrocarbon groups in the substituents of $Ar^{11}$, $Ar^{12}$ and $Ar^{13}$ described above.

Examples of the alicyclic groups include C3-20 cycloalkyl groups such as a cyclopentyl group and a cyclohexyl group.

Examples of the oxygen-containing heterocyclic groups include furan tetrahydrofuran and lactone.

Examples of the nitrogen-containing cations include ammonia cations, primary ammonium cations, secondary ammonium cations, tertiary ammonium cations, quaternary ammonium cations, pyridinium cation and imidazolium cation.

Of these, $R^{18}$ and $R^{19}$ are preferably a hydrogen atom or a nitrogen-containing cation.

$x^1$ is independently an integer of 0 to 6, preferably an integer of 0 to 4, more preferably an integer of 0 to 2,
$x^2$ is an integer of 1 to 7, preferably an integer of 1 to 5, more preferably an integer of 1 to 3, still more preferably an integer of 1 or 2,
a is 0 or 1, preferably 0, and
b is an integer of 0 to 20, preferably an integer of 0 to 3, more preferably an integer of 0 or 1, still more preferably 0.

Preferred units of the structural unit (1) are a structural unit (1a) represented by the following formula (1a) and a structural unit (1b) represented by the following formula (1b).

[Chem. 7]

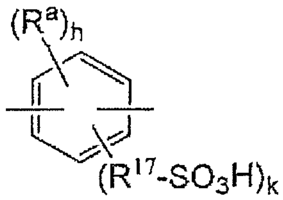

... (1 a)

In the formula (1a):

$R^a$ is independently a halogen atom, a C1-20 monovalent hydrocarbon group or a C1-20 monovalent halogenated hydrocarbon group,
h is an integer of 0 to 3, preferably 0 or 1, more preferably 0,
$R^{17}$ is independently synonymous with $R^{17}$ in the formula (1), and
k is an integer of 1 to (4-h), preferably 1 or 2.

Examples of the C1-20 monovalent hydrocarbon group and the C1-20 monovalent halogenated hydrocarbon group in $R^a$ described above may be, for example, the same groups mentioned for the C1-20 monovalent hydrocarbon groups and the C1-20 monovalent halogenated hydrocarbon groups indicated in the description of the formula (1).
Examples of the structural unit (1a) or the combination of the structural units (1a) are those described below.

[Chem. 8]

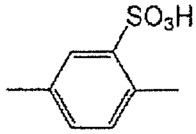
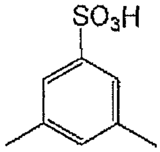
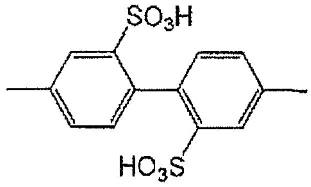
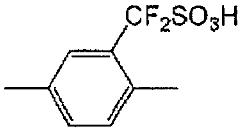
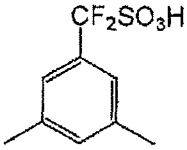
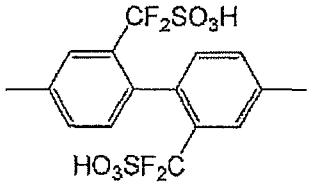
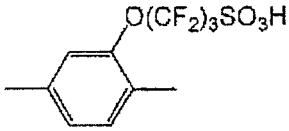
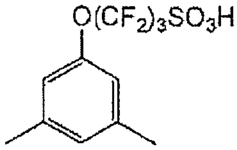
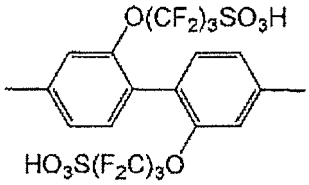
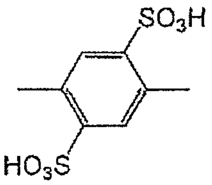
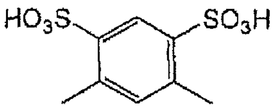
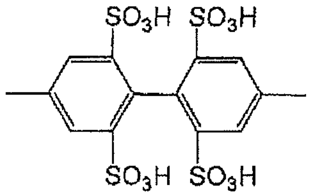
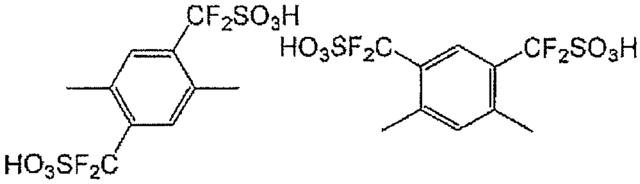

[Chem. 9]

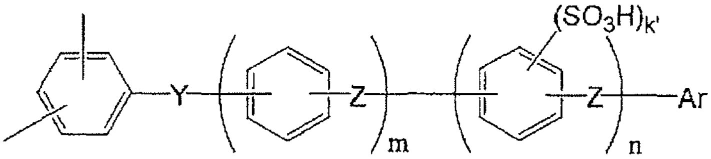
・・・(1 b)

In the formula (1b):

Y and Z are each independently synonymous with Y and Z in the formula (1), respectively,
Ar is an aromatic group having a substituent represented by $-SO_3H$, $-O(CH_2)_pSO_3H$ or $-O(CF_2)_pSO_3H$ (p is an integer of 1 to 12, preferably an integer of 1 to 6, more preferably an integer of 1 to 4),
m is an integer of 0 to 10, preferably 0 or 1, more preferably 0,
n is an integer of 0 to 10, preferably an integer of 0 to 2, more preferably 0 or 1, and
k' is an integer of 1 to 4, preferably 1 or 2.

Examples of the aromatic group in Ar described above are aromatic groups having at least one structure selected from the group consisting of a benzene ring, a condensed aromatic ring and a nitrogen-containing heterocyclic ring. Examples of the condensed aromatic ring and the nitrogen-containing heterocyclic ring may be, for example, the

same groups mentioned for the condensed aromatic ring and the nitrogen-containing heterocyclic ring, respectively, in $Ar^{11}$, $Ar^{12}$ and $Ar^{13}$ described above.

Examples of the structural unit (1b) are structural units described below. In the exemplary structural units described below, the bonding position of a phenylene group bonded to the main chain is situated at the para-position. Preferable structural units also include bending structural units, where the bonding position of a phenylene group bonded to the main chain is situated at the meta-position.

[Chem. 10]

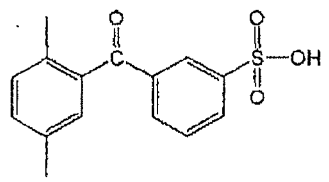
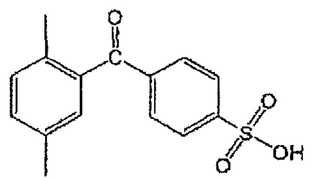
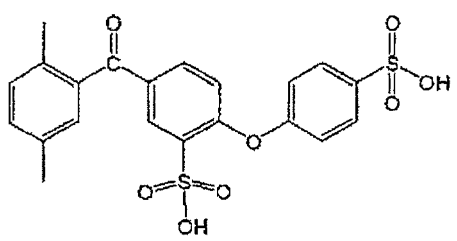
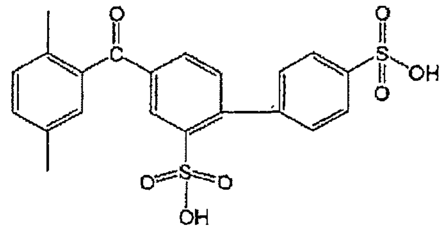
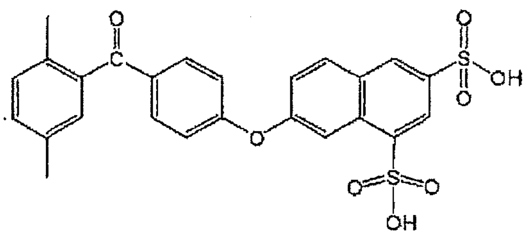
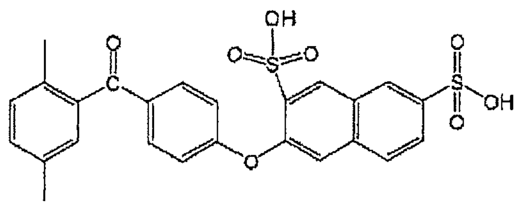
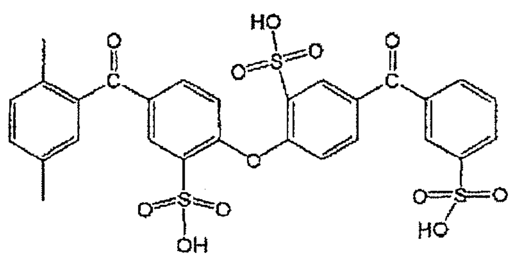
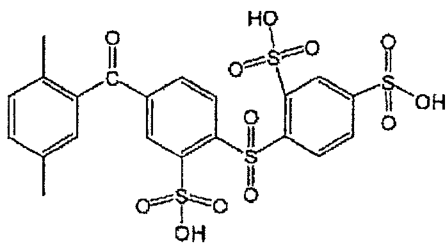

Examples of the structural unit (1) include, not only the structural unit having a sulfonic acid group (1'), but also a structural unit in which the proton conductive group is other than a sulfonic acid group. An examples of such a structural unit is a structural unit (1") having a phosphonic acid group.

Examples of the structural unit (1") are structural units illustrated below, which are described, for example, in JP-A-2011-108642.

[Chem. 11]

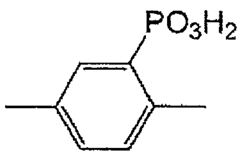
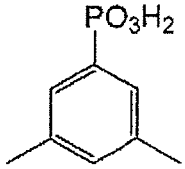
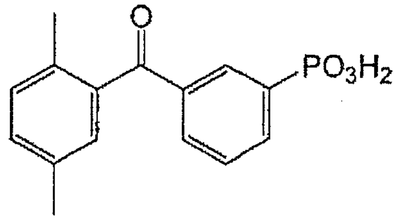

The segment (A) preferably comprises the structural unit (1'), and may further comprise a structural unit different from the structural unit (1'). The structural unit different from the structural unit (1') is not particularly limited, and examples thereof include the structural unit (1") having a phosphonic acid group, the structural unit (2) having no proton conductive groups and the structural unit (3) having no proton conductive groups. The structural unit (2) and the structural unit (3) may be aromatic structural units having a nitrogen-containing heterocyclic ring described, for example, in JP-A-2011-089036 and WO2007/010731.

<Segment (B)>

The segment (B), constituting the aromatic copolymer of the present invention, comprises at least one structural unit selected from the group consisting of the structural unit (2) and the structural unit (3), and the segment (B) in its entirety comprises both the structural unit (2) and the structural unit (3). In other words, the segment (B) may be one kind of segment comprising the structural units (2) and (3); and the segment (B) may be a mixture of two kinds of segments: a segment substantially consisting of the structural unit (2) alone and a segment substantially consisting of the structural unit (3) alone, and the structural units (2) and (3) are contained in the aromatic copolymer of the present invention. The segment (B) may further comprise a structural unit other than the structural units (2) and (3).

When the segment (B) contains the structural units (2) and (3), the structural units (2) and (3) totaling three or more are continuous to form the segment (B). When the segment (B) substantially consists of the structural unit (2) alone, the structural units (2) totaling three or more are continuous to form the segment (B). From the viewpoints such as the provision of a copolymer having high hot water resistance and excellent in mechanical strength, it is preferable that the segment (B) is formed such that five or more structural units (2) and/or (3) are continuous, and it is more preferable that the segment (B) is formed such that ten or more structural units (2) and/or (3) are continuous.

The segment (B) preferably has a molecular weight of 1,000 to 40, 000, more preferably 1, 000 to 30, 000, still more preferably 2,000 to 20,000, still more preferably 3,000 to 15,000. The molecular weight within the above range is preferable, since a copolymer having high hot water resistance and excellent in mechanical strength is provided. How to measure the molecular weight is as described in Examples.

The structural unit (2) is a divalent structural unit having an aromatic ring and no proton conductive groups and having two bonding sites at the para-position of one ring included in the aromatic ring. The structural unit (2) is not particularly limited, but is preferably a structural unit represented by the following formula (2) (hereinafter also referred to as the "structural unit (2')").

[Chem. 12]

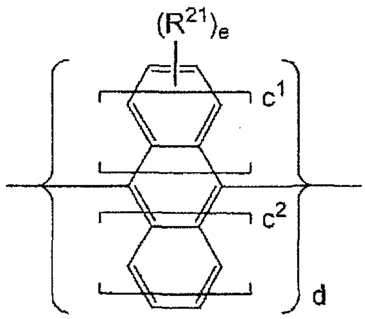

. . . (2)

In the formula (2):

a replaceable carbon atoms constituting an aromatic ring may be replaced with a nitrogen atom,
$R^{21}$ is independently a halogen atom, a hydroxyl group, a nitro group, a nitrile group or $R^{22}$-E- (E is a direct bond, -O-, -S-, -CO-, $-SO_2-$, -CONH-, -COO-, $-CF_2-$, $-CH_2-$, $-C(CF_3)_2-$ or $-C(CH_3)_2-$, and $R^{22}$ is an alkyl group, a halogenated alkyl group, an alkenyl group, an aryl group, a halogenated aryl group or a nitrogen-containing heterocyclic ring, wherein a hydrogen atom of these groups may be further replaced with at least one group selected from the group consisting of a hydroxyl group, a nitro group, a nitrile group and $R^{22}$-E-), and multiple $R^{21}$s may be bonded to one another to form a ring structure.

When any of $R^{21}$s described above is $R^{22}$-E- wherein $R^{22}$ is further replaced with $R^{22}$-E-, multiple Es may be the same or different from each other, and multiple $R^{22}$s (excluding structurally different parts produced by substitution) may be the same or different from each other. This applies also to symbols appearing in the other formulae.

Examples of the alkyl group, the halogenated alkyl group, the alkenyl group, the aryl group and the halogenated aryl group in $R^{22}$ described above may be, for example, the same groups mentioned for the C1-20 alkyl group, the C1-20 halogenated alkyl group, the C2-20 alkenyl group, the C6-20 aromatic hydrocarbon group and the C6-20 halogenated aromatic hydrocarbon group, respectively, in the substituents of $Ar^{11}$, $Ar^{12}$ and $Ar^{13}$ described above.

Examples of the nitrogen-containing heterocyclic ring in $R^{22}$ described above may be, for example, the same rings mentioned for the nitrogen-containing heterocyclic ring in $Ar^{11}$, $Ar^{12}$ and $Ar^{13}$ described above.

The ring structure formed by bonding multiple $R^{21}$s is not particularly limited, and examples thereof may be the aromatic group and the C3-20 cycloalkyl groups such as a cyclopentyl group and a cyclohexyl group, which may have a substituent, in $Ar^{11}$, $Ar^{12}$ and $Ar^{13}$ described above, and the oxygen-containing heterocyclic group in $R^{18}$ and $R^{19}$ described above.

$R^{22}$ described above is preferably an aryl group.

E is preferably a carbonyl group, from the viewpoints such as achieving high polymerization activity.

$c^1$ and $c^2$ are each independently an integer of 0, or 1 or greater, preferably 0 or 1, more preferably 0.
d is an integer of 1 or greater, preferably an integer of 1 to 300.
e is independently an integer of 0 to $(2c^1+2c^2+4)$.

In terms of improving the solubility of the aromatic copolymer as well as lowering softening temperature of the copolymer in order to enhance the joining properties with components such as electrodes, e is preferably an integer of 1 or greater.

Examples of the structural unit (2') or the combination of the structural units (2') are those described below.

[Chem. 13]

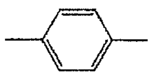
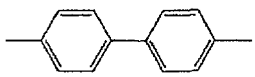
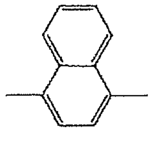
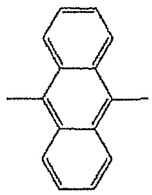
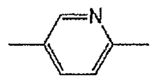

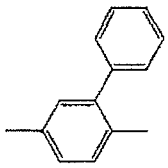
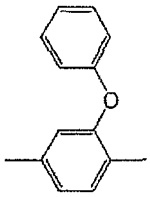
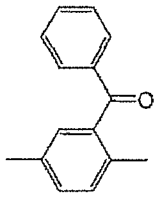
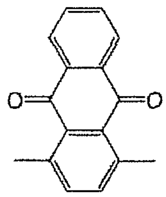
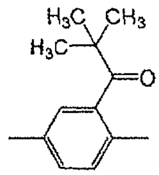

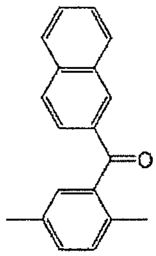
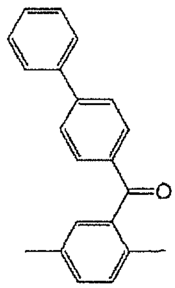
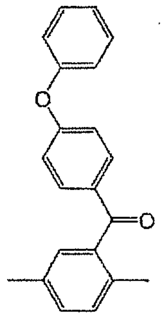
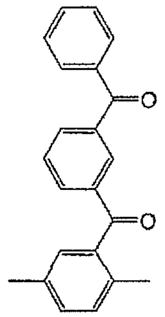
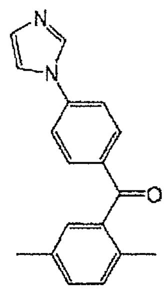

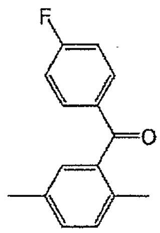
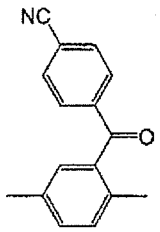
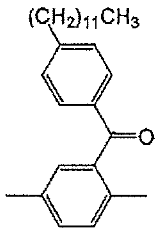
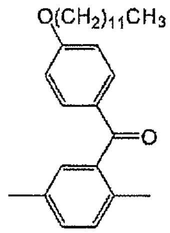
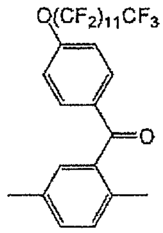

Of these, a structural unit having a structure described below is preferable from the viewpoints such as giving high copolymerization activity in copolymerization, high solubility of the resultant copolymer in a solvent, and lowered softening temperature of the resultant electrolyte membrane.

[Chem. 14]

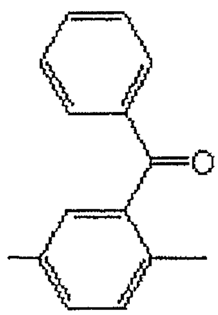

The segment (B) may contain one kind of structural unit (2), or may contain two or more kinds of structural units (2).

The structural unit (3) is a divalent structural unit having a benzene ring, and is a structural unit different from the structural unit (2).

The structural unit (3) is not particularly limited, and is preferably at least one structural unit (hereinafter also referred to as the "structural unit (3')") selected from the group consisting of structural units represented by the formula

(3a) and structural units represented by the formula (3b).

The structural unit (3) is more preferably the structural unit (3a), in which case the main chain skeleton of the segment (B) is a complete polyarylene structure, in which aromatic rings are bonded to one another via a single bond. This structure provides a polymer electrolyte membrane having improved radical resistance against peroxides and excellent electrical power generation durability.

[Chem. 15]

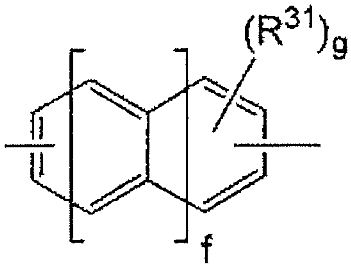

・・・(3 a)

In the formula (3a):

a replaceable carbon atom constituting an aromatic ring may be replaced with a nitrogen atom,
$R^{31}$ is independently a halogen atom, a hydroxyl group, a nitro group, a nitrile group, a proton conductive group, or $R^{22}$-E- (E and $R^{22}$ are each independently synonymous with E and $R^{22}$ in the formula (2), respectively), and multiple $R^{31}$s may be bonded to each other to form a ring structure,
f is an integer of 0, or 1 or greater, preferably 0 or 1, more preferably 0, and
g is an integer of 0 to (2f+4).

The ring structure formed by bonding multiple $R^{31}$s is not particularly limited, and examples thereof may be, for example, the same structures mentioned for the ring structure formed by bonding the multiple $R^{21}$s.

$R^{31}$ is preferably a nitrile group, which gives high polymerization activity in copolymerization and gives an electrolyte membrane having high toughness and mechanical strength.

Examples of the structural unit (3a) are those described below.

[Chem. 16]

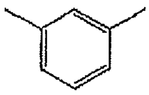 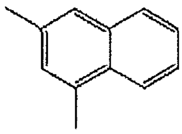 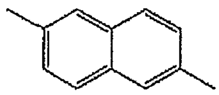 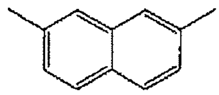 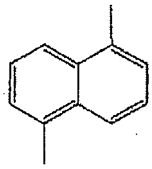

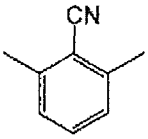 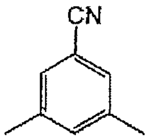 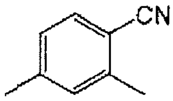 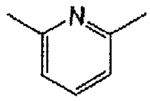 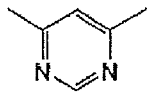

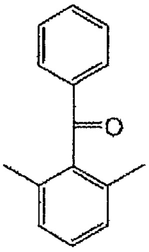 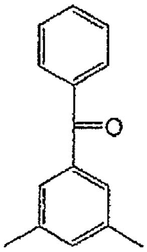 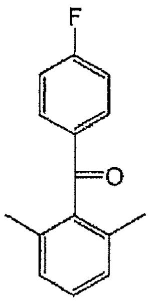 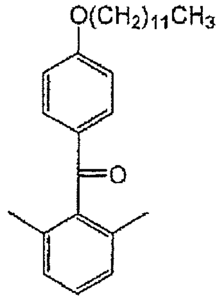 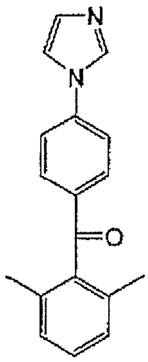

The segment (B) may contain one kind of structural unit (3a), or may contain two or more kinds of structural unit (3a).

The structural unit (3b) is represented by the following formula.

[Chem. 17]

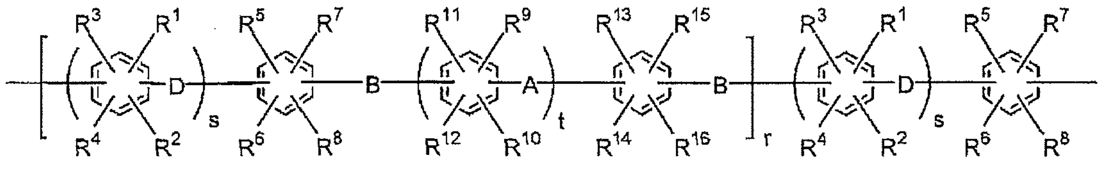

・・・(3 b)

In the formula (3b), A and D are each independently a direct bond, -O-, -S-, -CO-, $-SO_2-$, -SO-, -CONH-, -COO-, $-(CF_2)_i-$ (i is an integer of 1 to 10), - $(CH_2)_j-$ (j is an integer of 1 to 10), $-CR'_2-$(R' is an aliphatic hydrocarbon group, an aromatic hydrocarbon group or a halogenated hydrocarbon group), a cyclohexylidene group, or a fluorenylidene group. Of these, a direct bond, -O-, -CO-, $-SO_2-$, $-CR'_2-$, a cyclohexylidene group and a fluorenylidene group are preferable.

Examples of R' described above include a methyl group, an ethyl group, a propyl group, an isopropyl group, a butyl group, an isobutyl group, a t-butyl group, a hexyl group, an octyl group, a decyl group, an octadecyl group, an ethylhexyl group, a phenyl group, a trifluoromethyl group, and substituents in which part of or all of the hydrogen atoms of these substituents are halogenated.

B is independently an oxygen atom or a sulfur atom, and is preferably an oxygen atom.

$R^1$ to $R^{16}$ are each independently a hydrogen atom, a halogen atom, a hydroxyl group, a nitro group, a nitrile group, a proton conductive group, or $R^{22}$-E- (E and $R^{22}$ are each independently synonymous with E and $R^{22}$ in the structural unit (2), respectively), and multiple groups of $R^1$ to $R^{16}$ may be bonded to each other to form a ring structure.

The ring structure formed by bonding the multiple groups of $R^1$ to $R^{16}$ is not particularly limited, and examples thereof are the aromatic group and the C3-20 cycloalkyl groups such as a cyclopentyl group and a cyclohexyl group, which may have a substituent, in $Ar^{11}$, $Ar^{12}$ and $Ar^{13}$ described above, and oxygen-containing heterocyclic groups in

$R^{18}$ and $R^{19}$ described above. When a ring structure is formed, benzene rings in the formula (3b) may be bonded to one another via a direct bond, although this is not described in the foregoing.

s and t are each independently an integer of 0 to 4, preferably an integer of 0 to 2.

r is an integer of 0, or 1 or greater , preferably 0 to 100, more preferably 0 to 80.

Examples of the structural unit (3b) are those described below.

[Chem. 18]

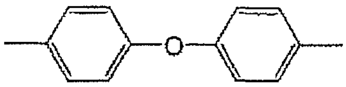
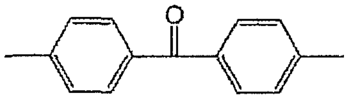
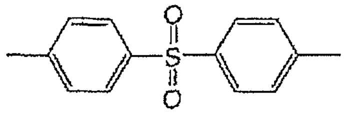
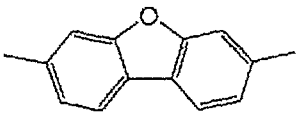
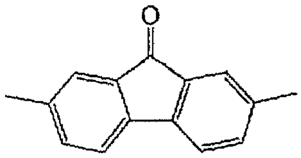
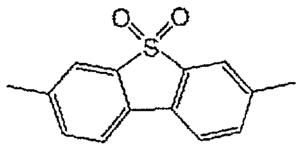
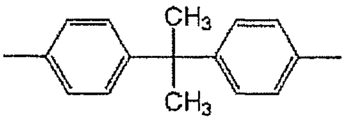
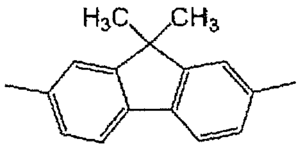
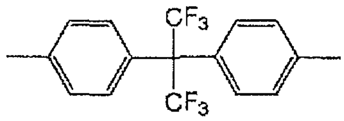

[Chem. 19]

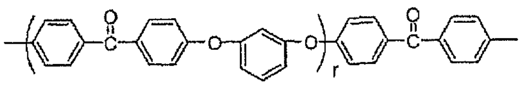

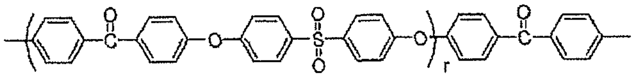

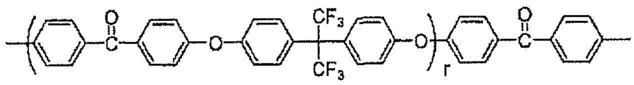

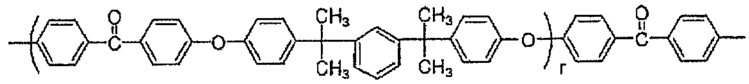

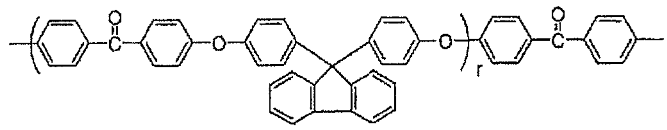

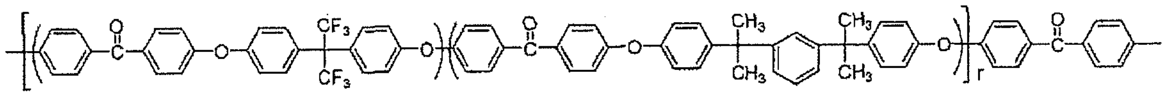

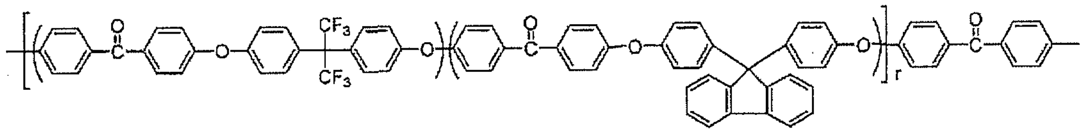

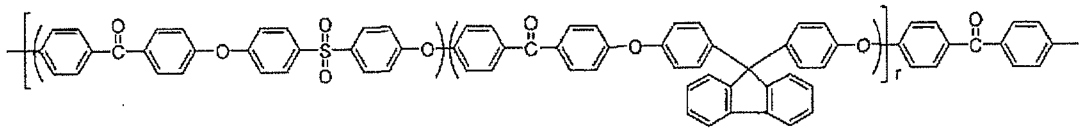

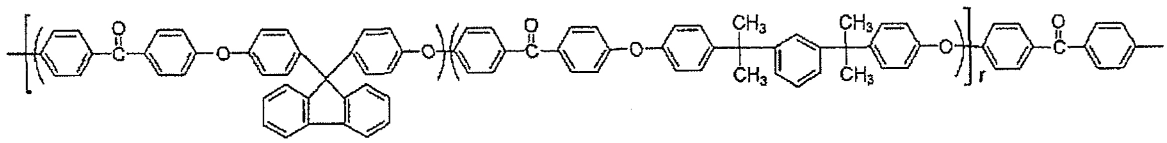

[Chem. 20]

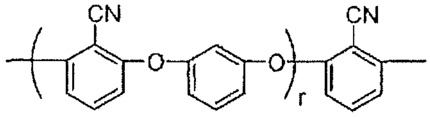

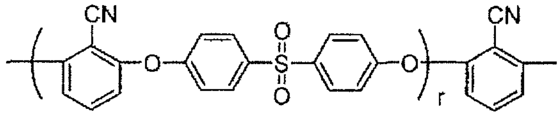

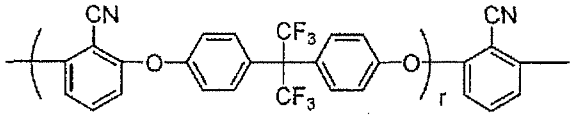

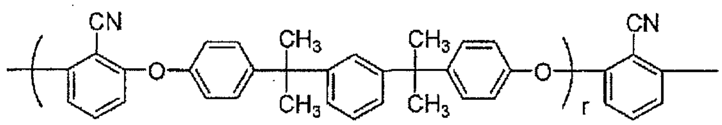

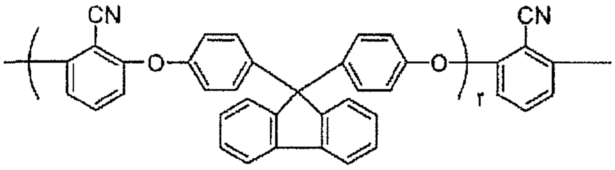

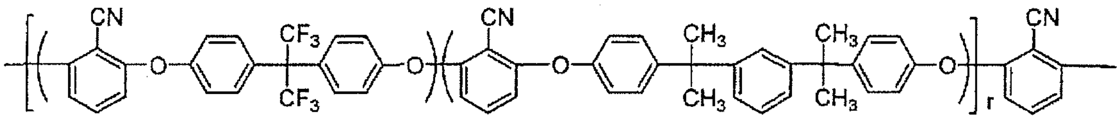

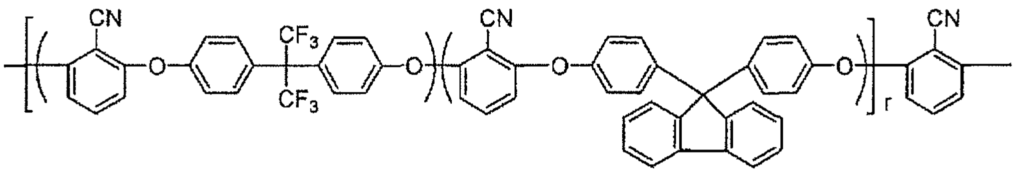

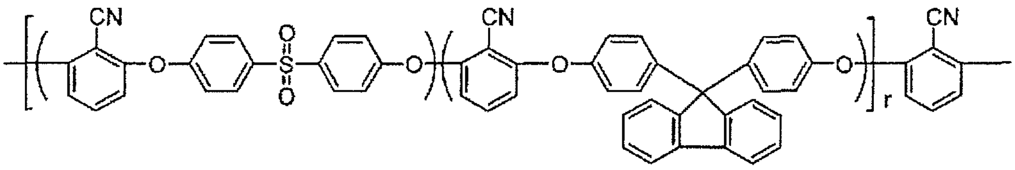

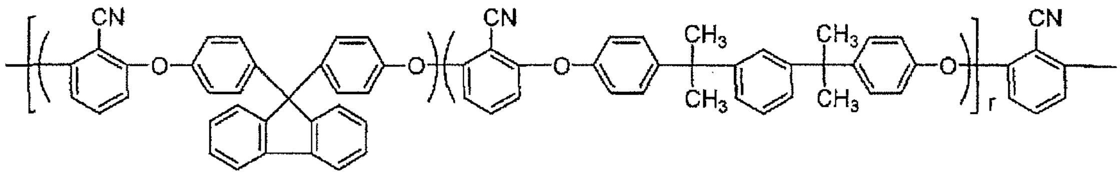

[Chem. 21]

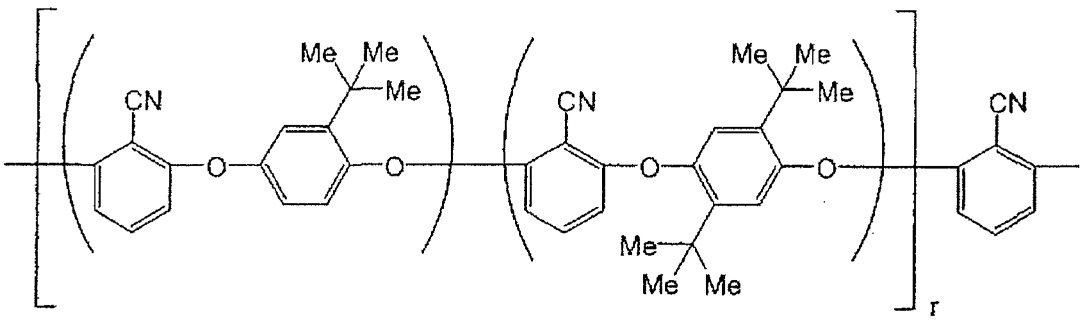

The segment (B) may contain one kind of structural unit (3b), or may contain two or more kinds of structural unit (3b).

In the aromatic copolymer of the present invention, the inclusion in the segment (B) of the structural unit (2') gives increased rigidity of the segment (B), and increased aromatic ring density. As a result thereof, a polymer electrolyte membrane comprising the resultant copolymer can have improved hot water resistance, radical resistance against peroxides, gas barrier properties, mechanical strength and dimension stability. The inclusion in the segment (B) of the structural unit (3') can provide the segment (B) with appropriate bending properties (flexibility), and can improve the toughness of a polymer electrolyte membrane comprising the resultant copolymer.

When the segment (B) is one kind of segment containing the structural unit (2) and the structural unit (3), the segment (B) may be a structure in which the structural unit (2) is block copolymerized with the structural unit (3). However, the segment (B) is preferably a structure in which the structural unit (2) is randomly copolymerized with the structural unit (3) as schematically shown in the following formula (b), since this structure adequately provides beneficial effects achieved by the structural units (2) and (3).

[Chem. 22]

$$-\left[ -\left[ \text{Unit(2)} \right]_y - \textit{random} - \left[ \text{Unit(3)} \right]_z - \right]- \quad \cdots (b)$$

In the formula (b), Unit (2) refers to the structural unit (2); Unit (3) refers to the structural unit (3); y and z are each an integer of 3 or greater; and by the term "random", it is meant that the structural unit (2) is randomly copolymerized with the structural unit (3). The structural units (2) and (3) each may contain two or more kinds of structural units.

Provided that the contents of the structural unit (2) and of structural unit (3) in the segment (B) total 100 mol%, the content of the structural unit (2) is preferably 50 to 99.9 mol%, more preferably 80 to 99.9 mol%, particularly preferably 90 to 99. 9 mol%, and the content of the structural unit (3) is preferably 0.1 to 50 mol%, more preferably 0.1 to 20 mol%, particularly preferably 0.1 to 10 mol%.

Provided that the contents of the structural unit (2) and of the structural unit (3) in the segment (B) total 100 wt%, the content of the structural unit (2) is preferably 33 to 99 wt%, more preferably 80 to 99 wt%, particularly preferably 90 to 99 wt%, and the content of the structural unit (3) is preferably 1 to 67 wt%, more preferably 1 to 20 wt%, particularly preferably 1 to 10 wt%.

The content of the structural unit (2) is preferably within the above range based on 100 wt% of the segment (B).

When the proportions of the structural units (2) and (3) are within the above ranges, the above-mentioned effects are more conspicuous.

The inclusion of the segment (B) in the copolymer of the present invention significantly improves the hydrophobicity of the copolymer, and therefore a polymer electrolyte membrane can be obtained which is excellent in hot water resistance and yet has the same degree of proton conductivity as prior art. When the segment (B) contains a nitrile group, a polymer electrolyte membrane excellent in toughness and mechanical strength can be produced.

<Constitution and Properties of Aromatic Copolymer>

The aromatic copolymer of the present invention is preferably a block copolymer comprising the segment (A) and the segment (B) that is schematically represented by the following formula (c) or (d). The aromatic copolymer of the

present invention is such a block copolymer like this, and thus is excellent in hot water resistance and electric power generation performance.

The structural units (1), (2) and (3) are preferably continuous via a direct bond without any bonding groups. In particular, although a bonding group may be present between the segment (A) and the segment (B), it is preferable that no bonding groups are present therebetween. If the bonding group is an ether bond (-O-), the resultant polymer electrolyte membrane tends to have poor radical resistance and tends to be readily deteriorated.

[Chem. 23]

$$-\left[\left[\text{Unit(1)}\right]_{x}\right]-\mathit{block}-\left[\left[\text{Unit(2)}\right]_{y}-\mathit{random}-\left[\text{Unit(3)}\right]_{z}\right]- \quad \cdots (c)$$

$$-\left[\left[\text{Unit(1)}\right]_{x}\right]-\mathit{block}-\left[\left[\text{Unit(2)}\right]_{y}-\mathit{block}-\left[\text{Unit(3)}\right]_{z}\right]- \quad \cdots (d)$$

In the formula (c) and in the formula (d), Unit (1) refers to the structural unit (1); Unit (2) refers to the structural unit (2) ; and Unit (3) refers to the structural unit (3). In the formula (c), x is an integer of 3 or greater; and y+z is an integer of 3 or greater. In the formula (d), x, y and z are each an integer of 3 or greater. By the term "random", it is meant that the structural unit (2) is randomly copolymerized with the structural unit (3). By the term "block", for example, it is meant that the structural unit (2) is block copolymerized with the structural unit (3). Each of the structural units (1), (2) and (3) may contain two or more kinds of structural units.

The amount of each segment in the aromatic copolymer of the present invention is determined according to the demand in terms of properties such as ion exchange capacity and molecular weight. Provided that the amounts of the segment (A) and of the segment (B) in the aromatic copolymer of the present invention total 100 wt%, the amount of the segment (A) is preferably 15 to 95 wt%, more preferably 25 to 85 wt%, particularly preferably 35 to 75 wt%, and the amount of the segment (B) is preferably 5 to 85 wt%, more preferably 15 to 75 wt%, particularly preferably 25 to 65 wt%.

The aromatic copolymer of the present invention has a molecular weight of 10,000 to 1,000,000, preferably 20,000 to 800, 000, still more preferably 50, 000 to 300, 000. How to measure the molecular weight is as described in Examples.

The aromatic copolymer according to the present invention usually has an ion exchange capacity of 0.5 to 5.0 meq/g, preferably 1.0 to 4. 0 meq/g, still more preferably 1.5 to 3. 5 meq/g. When the ion exchange capacity is within the above range, the resultant polymer electrolyte membrane can have a high proton conductivity, a high electric power generation performance, as well as sufficiently high water resistance. How to measure the ion exchange capacity is as described in Examples.

The ion exchange capacity can be controlled by changing the type, the use ratio and the combination of each segment, namely can be controlled by changing the feeding ratio and the type of a precursor (monomer/oligomer) serving as each segment in polymerization. In general, the increase in the amount of the segment (A) having a proton conductive group tends to give increased ion exchange capacity and increased proton conductivity, together with decreased water resistance. On the other hand, the decrease in the segment (A) tends to give reduced ion exchange capacity and increased water resistance, together with decreased proton conductivity.

[Process for Producing Aromatic Copolymer]

The aromatic copolymer of the present invention can be synthesized by copolymerizing a compound (I) that gives the structural unit (1), a compound (II) that gives the structural unit (2), a compound (III) that gives the structural unit (3), and as needed a compound that gives another structural unit, optionally with e.g., converting a sulfonic acid ester group into a sulfonic acid group, to introduce a proton conductive group.

The copolymer of the present invention can be synthesized also by copolymerizing a compound (I') that gives the structural unit (1) but that has no sulfonic acid group or no sulfonic acid ester group introduced thereto, a compound (II) that gives the structural unit (2), a compound (III) that gives the structural unit (3), and as needed a compound that gives another structural unit, and then by sulfonating the resultant polymer with a sulfonating agent by the method described in, e.g., JP-A-2001-342241.

<Compound (I)>

The segment (A) can be introduced by using the compound (I) represented, for example, by the following formula (I-a) or (I-b), as a polymerization raw material of the aromatic copolymer.

[Chem. 24]

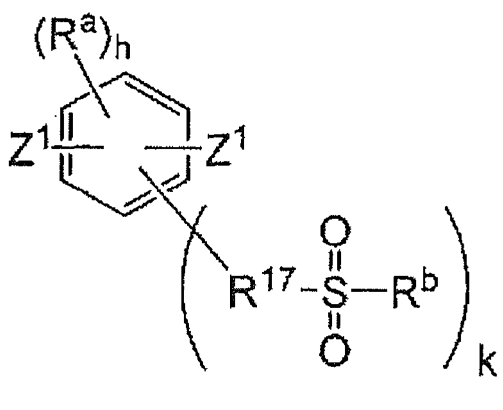

. . . (I - a)

In the formula (I-a):

$R^a$, $R^{17}$, h and k are each independently synonymous with $R^a$, $R^{17}$, h and k in the formula (1a), respectively,
$Z^1$ is independently a chlorine atom, a bromine atom, an iodine atom, a methanesulfonyloxy group, a trifluoromethanesulfonyloxy group, a benzene sulfonyloxy group, or a toluene sulfonyloxy group, and
$R^b$ is independently a group represented by $-OR^c$ ($R^c$ is a C1-20 monovalent organic group, a C1-20 monovalent halogenated hydrocarbon group, an alkali metal atom or a nitrogen-containing cation), or an amino group substituted with at least one kind of group selected from C1-20hydrocarbon groups and C1-20halogenated hydrocarbon groups.

Examples of the C1-20 monovalent halogenated hydrocarbon group in $R^c$ described above may be, for example, the same groups mentioned for the C1-20 halogenated alkyl group and for the C6-20 halogenated aromatic hydrocarbon group in the substituents in $Ar^{11}$, $Ar^{12}$ and $Ar^{13}$ described above.

$R^c$s may be the same or different from each other, and is preferably a C4-20 organic group, an alkali metal atom and a nitrogen-containing cation. Examples of the C4-20 organic group include linear hydrocarbon groups, branched hydrocarbon groups, alicyclic hydrocarbon groups, and groups having a five-membered heterocyclic ring, such as a tert-butyl group, an iso-butyl group, a n-butyl group, a sec-butyl group, a neopentyl group, a cyclopentyl group, a hexyl group, a cyclohexyl group, a cyclopentylmethyl group, a cyclohexylmethyl group, an adamantyl group, an adamantylmethyl group, a 2-ethylhexyl group, a bicyclo[2.2.1]heptyl group, a bicyclo[2.2.1]heptylmethyl group, a tetrahydrofurfuryl group, a 2-methylbutyl group, and a 3,3-dimethyl-2,4-dioxolanemethyl group. Of these, a n-butyl group, a neopentyl group, a tetrahydrofurfuryl group, a cyclopentylmethyl group, a cyclopentyl group, a cyclohexyl group, a cyclohexylmethyl group, an adamantylmethyl group and a bicyclo[2.2.1]heptylmethyl group are preferable, and a neopentyl group is most preferable. Examples of the nitrogen-containing cation may be the same examples mentioned for the nitrogen-containing cation in $R^{19}$ in the formula (1).

[Chem. 25]

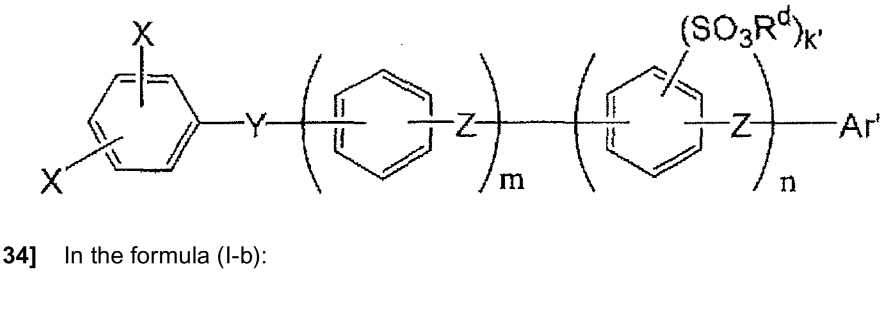

. . . (I - b)

In the formula (I-b):

Y, Z, m, n and k' are each independently synonymous with Y, Z, m, n and k' in the formula (1b), respectively,
X is independently synonymous with $Z^1$ in the formula (I-a),
Ar' is an aromatic group having a substituent represented by $-SO_3R^d$, $-O(CH_2)_pSO_3R^d$ or $-O(CF_2)_pSO_3R^d$ (p is an integer of 1 to 12), and
$R^d$ is synonymous with $R^c$ in the formula (I-a).

As specific examples of the compound represented by the formula (I-b), sulfonic acid esters described in JP-A-2004-137444, JP-A-2004-345997 and JP-A-2004-346163 can be mentioned.
The compounds (I) may be used singly, or two or more kinds thereof may be used in combination.
The amount of the compound (I) to be used is appropriately controlled in such a manner that the contents of the segment (A) and of the structural unit (1) in the copolymer of the present invention can be within the above range.

<Compounds (II) and (III)>

The segment (B) can be introduced, for example, by using the compound (II) represented by the following formula (II) and at least one compound (III) selected from the group consisting of compounds represented by the following formula (III-a) and compounds represented by (III-b) (from which the compound (II) is excluded), as polymerization raw materials of the aromatic copolymer.

[Chem. 26]

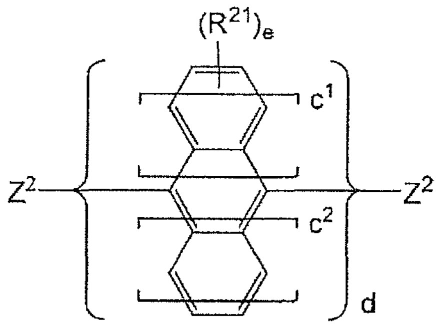

. . . (II)

In the formula (II):

$R^{21}$, $c^1$, $c^2$, d and e are each independently synonymous with $R^{21}$, $c^1$, $c^2$, d and e in the formula (2), respectively, and
$Z^2$ is independently a chlorine atom, a bromine atom, an iodine atom, a methanesulfonyloxy group, a trifluoromethanesulfonyloxy group, a benzene sulfonyloxy group, or a toluene sulfonyloxy group.

Examples of the compound (II) are compounds in which $Z^2$ of the formula (II) is bonded to the bonding positions illustrated in the exemplary structures of the structural unit (2).
The compounds (II) may be used singly, or two or more kinds thereof may be used in combination.
The amount of the compound (II) to be used is appropriately controlled in such a manner that the contents of the segment (B) and of the structural unit (2) in the copolymer of the present invention can be within the above range.

[Chem. 27]

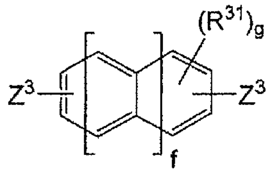

· · · (III− a)

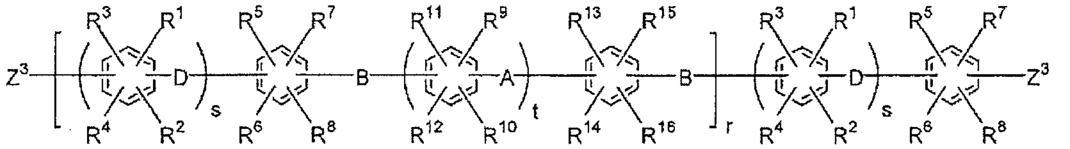

· · · (III− b)

In the formulae (III-a) and (III-b):

A, B, D, $R^1$ to $R^{16}$, $R^{31}$, f, g, r, s and t are each independently synonymous with A, B, D, $R^1$ to $R^{16}$, $R^{31}$, f, g, r, s and t in the formula (3a) and (3b), respectively, and
$Z^3$ is independently chlorine, bromine, iodine, a methanesulfonyloxy group, a trifluoromethanesulfonyloxy group, a benzene sulfonyloxy group, or a toluene sulfonyloxy group.

Examples of the compounds (III-a) and (III-b) are compounds in which $Z^3$ of the formulae (III-a) and (III-b) is bonded to the bonding positions illustrated in the exemplary structures of the structural units (3a) and (3b).

The oligomer represented by the formula (III-b) can be produced, for example, by copolymerizing monomers described below.

Examples of compounds represented by the formula (III-b) wherein r=0 are 4,4'-dichlorobenzophenone, 4,4'-dichlorobenzanilide, 2,2-bis(4-chlorophenyl)difluoromethane, 2,2-bis(4-chlorophenyl)-1,1,1,3,3,3-hexafluoropropane, 4-chlorobenzoic acid-4-chlorophenyl ester, bis(4-chlorophenyl)sulfoxide, bis(4-chlorophenyl)sulfone, and 2,6-dichlorobenzonitrile.

Compounds where a chlorine atom in the above compounds is replaced with a bromine atom or an iodine atom can be also mentioned.

Examples of compounds represented by the formula (III-b) wherein r=1 are compounds described in JP-A-2003-113136.

Examples of compounds represented by the formula (III-b) wherein r≥2 are compounds described in JP-A-2004-137444, JP-A-2004-244517, Japanese Application No. 2003-143914 (JP-A-2004-346164), Japanese Application No. 2003-348523 (JP-A-2005-112985), Japanese Application No. 2003-348524, Japanese Application No. 2004-211739 (JP-A-2006-28414), Japanese Application No. 2004-211740 (JP-A-2006-28415).

<Polymerization Method >

Exemplary polymerization methods for the aromatic copolymer of the present invention are Method 1 and Method 2 described below. As required, a sulfonic acid ester group contained in the resultant copolymer may be converted to a sulfonic acid group by a method described later.

(Method 1)

Reaction system: the compound (II) is contained, and the compounds (III-a) and (III-b) may be contained
Addition system: the compound (I) is contained, and the compound (III-b) may be contained
Alternatively,
Reaction system: the compound (I) is contained, and the compound (III-b) may be contained
Addition system: the compound (II) is contained, and the compounds (III-a) and (III-b) may be contained

Under Method 1, the raw material(s) in the reaction system are polymerized to obtain an oligomer. Thereto,

the raw material (s) in the addition system are added, and these are further polymerized, to obtain a block copolymer. Under Method 1, without the isolation of the resultant oligomer, the raw material(s) in the addition system may be added for subsequent one-pot polymerization. Alternatively, after the isolation of the oligomer, the raw material (s) in the addition system may be added for subsequent polymerization.

(Method 2)

Reaction system 1: the compound (I) is contained, and the compound (III-b) may be contained
Reaction system 2: the compound (II) is contained, and the compounds (III-a) and (III-b) may be contained

Under Method 2, the raw material(s) in the reaction system 1 and the raw material (s) in the reaction system 2 are each separately allowed to be polymerized to obtain respective oligomers. Then, the resultant oligomers are mixed with each other and further polymerized, to obtain a block copolymer. Under Method 2, each of the resultant oligomers without isolation may be mixed with each other before their polymerization. Alternatively, at least one of the resultant oligomers may be isolated and the isolated oligomer may be mixed with the other oligomer before their polymerization.

The above copolymerization is carried out preferably in the presence of a catalyst.

The catalyst used at this time is preferably a catalyst component containing a transition metal compound. The exemplary catalyst component is a component essentially containing (1) at least one kind of component selected from the group consisting of components containing a transition metal salt and a compound serving as a ligand (hereinafter also referred to as the "ligand compound"), and transition metal complexes (including copper salts) in which a ligand is coordinated to a metal ion, and (2) a reducing agent, and further containing a salt, other than a transition metal salt, which is used to increase polymerization rate.

Examples of the transition metal salt include nickel compounds such as nickel chloride, nickel bromide, nickel iodide and nickel acetylacetonato; palladium compounds such as palladium chloride, palladium bromide, palladium iodide; iron compounds such as iron chloride, iron bromide and iron iodide; and cobalt compounds such as cobalt chloride, cobalt bromide and cobalt iodide. Of these, particularly, nickel chloride and nickel bromide are preferable. The transition metal salts may be used singly, or two or more kinds thereof may be used in combination.

Examples of the ligand compound include triphenylphosphine, tri(2-methyl)phenylphosphine, tri(3-methyl)phenylphosphine, tri(4-methyl)phenylphosphine, 2,2'-bipyridine, 1,5-cyclooctadiene, 1,3-bis(diphenylphosphino)propane, benzonitrile, and acetonitrile. Triphenylphosphine, tri(2-methyl)phenylphosphine, and 2,2'-bipyridine are preferable. The ligand compounds may be used singly, or two or more kinds thereof may be used in combination.

Examples of the transition metal complexes include nickel chloride bis(triphenylphosphine), nickel chloride bis(tri(2-methyl)phenylphosphine), nickel bromide bis(triphenylphosphine), nickel iodide bis(triphenylphosphine), nickel nitrate bis(triphenylphosphine), nickel chloride (2,2'-bipyridine), nickel bromide (2,2'-bipyridine), nickel iodide (2,2'-bipyridine), nickel nitrate (2,2'-bipyridine), bis(1,5-cyclooctadiene)nickel, tetrakis(triphenylphosphine)nickel, tetrakis(triphenylphosphite)nickel and tetrakis(triphenylphosphine)palladium. Nickel chloride bis(triphenylphosphine), nickel chloride bis(tri(2-methyl)phenylphosphine), and nickel chloride (2,2'-bipyridine) are preferable. The transition metal complexes may be used singly, or two or more kinds thereof may be used in combination.

Examples of the reducing agent employable in the catalyst system of the present invention include iron, zinc, manganese, aluminum, magnesium, sodium, and calcium. Zinc, magnesium, and manganese are preferable. These reducing agents can be more activated by allowing these reducing agents to contact with acids such as organic acids.

Examples of the salt other than transition metal salts that is employable in the catalyst system of the present invention include sodium compounds such as sodium fluoride, sodium chloride, sodium bromide, sodium iodide and sodium sulfate; potassium compounds such as potassium fluoride, potassium chloride, potassium bromide, potassium iodide and potassium sulfate; and ammonium compounds such as tetraethylammonium fluoride, tetraethylammonium chloride, tetraethylammonium bromide, tetraethylammonium iodide and tetraethylammonium sulfate. Of these, sodium bromide, sodium iodide, potassium bromide, tetraethylammonium bromide, and tetraethylammonium iodide are preferred. These may be used singly, or two or more kinds thereof may be used in combination.

The amount of the transition metal salts and of the transition metal complexes to be used in the catalyst component is preferably 0.0001 to 10 mol, more preferably 0.01 to 0.5 mol, based on 1 mol of a total of the monomers such as the compounds (I), (II) and (III). This range ensures sufficient progress of polymerization reaction, high catalyst activity, and increased molecular weight of the resultant copolymer.

When the ligand compound is used in the catalyst component, the amount of this ligand compound is preferably 0.1 to 100 mol, more preferably 1 to 10 mol, based on 1 mol of the transition metal salt. If the amount is less than 0.1 mol, the catalyst activity may be insufficient. On the other hand, if the amount exceeds 100 mol, the molecular weight of the resultant copolymer may be reduced.

The amount of the reducing agent to be used in the catalyst component is preferably 0.1 to 100 mol, more preferably 1 to 10 mol, based on 1 mol of a total of the monomers such as compounds (I), (II) and (III). This range ensures sufficient progress of polymerization, and the provision of the copolymer at a high yield.

Further, when the salt other than transition metal salts is used for the catalyst component, the usage amount thereof is preferably 0.001 to 100 mol, more preferably 0.01 to 1 mol, based on 1 mol of a total of the monomers such as the compounds (I), (II) and (III). If the amount is less than 0.001 mol, the effect of increasing the polymerization rate may be insufficient. On the other hand, if the amount exceeds 100 mol, the purification of the resultant polymer tends to be difficult.

The above copolymerization is carried out preferably in the presence of a polymerization solvent.

Examples of the polymerization solvent employable in the present invention include tetrahydrofuran, cyclohexanone, dimethyl sulfoxide, N,N-dimethylformamide, N,N-dimethylacetamide, 1-methyl-2-pyrrolidone, γ-butyrolactone and γ-butyrolactam. Tetrahydrofuran, N,N-dimethylformamide, N,N-dimethylacetamide, and N-methyl-2-pyrrolidone are preferred. These polymerization solvents are preferably used after sufficiently dried. These polymerization solvents may be used singly, or two or more kinds thereof may be used in combination.

The polymerization solvent is used in such an amount that the total concentration of the monomers such as the compounds (I), (II) and (III) in a polymerization solvent is preferably 1 to 90 wt%, more preferably 5 to 40 wt%.

In the polymerization for the aromatic copolymer of the present invention, the polymerization temperature is preferably 0 to 200°C, more preferably 50 to 80°C; and the polymerization time is preferably 0.5 to 100 hours, preferably 1 to 40 hours.

In the copolymerization, by changing the type and the amount of the catalyst components and polymerization solvents and by controlling the polymerization temperature and the polymerization time, the molecular weight of the copolymer and of the segment (A) and the segment (B) of the present invention can fall within preferable ranges. The polymerization behavior of the oligomer obtained by polymerizing the raw material(s) in the reaction system that constitutes the segment (A) or the segment (B) may be checked by intermittently measuring the molecular weight after sampling from a polymerization solution, or may be checked by intermittently or continuously measuring the viscosity of a polymerization solution. How to measure the molecular weight is as described in Examples.

It is preferable that the copolymerization is followed by converting a sulfonic acid ester group contained in the resultant copolymer to a sulfonic acid group.

Specific methods thereof are, for example:

(1) a method in which the aromatic copolymer is introduced to an excess amount of water or an alcohol containing a small amount of an inorganic acid, and the mixture is stirred for 5 minutes or longer,

(2) a method in which the aromatic copolymer is allowed to react in an organic acid at a temperature of about 80 to 120°C for about 3 to 24 hours; and

(3) a method in which the aromatic copolymer is allowed to react at a temperature of about 60 to 180°C for about 3 to 24 hours in a solution containing a deprotecting agent at a molar amount 1 to 9 times as large as 1 mol of a sulfonic acid ester group ($-SO_3R$) present in the aromatic copolymer. When the resultant copolymer contains a sulfonic acid salt, hydrogen substitution can be carried out by a method such as ion exchange.

Examples of the deprotecting agent include inorganic salts including a halogenated ion, such as lithium bromide and sodium bromide; nitrogen-containing organic salts containing a halogenated ion, such as tetrabutyl ammonium bromide, pyridine hydrobromide and diethylamine hydrobromide; inorganic acids such as hydrochloric acid, and compounds nucleophilic with respect to a sulfonic acid ester group of organic acids such as trifluoroacetic acid.

The deprotecting agents may be used singly, or two or more kinds thereof may be used in combination.

The solution containing a deprotecting agent may contain a solvent. Examples of this solvent are the ones that dissolve the aromatic copolymer, such as N,N-dimethylacetamide, N-methyl-2-pyrrolidone, and dimethyl sulfoxide. Two or more kinds of the solvents may used in combination. A solvent that swells the aromatic copolymer, such as water and alcohol, may be added.

[Polymer Electrolyte]

In the applications of the aromatic copolymer of the present invention for proton conductive membranes, electrolytes for primary batteries, electrolytes for secondary batteries, polymer solid electrolytes for fuel cells, display elements, various kinds of sensors, signal transmission media, solid capacitors, ion exchange membranes and the like, the aromatic copolymer can be used in the form of a membrane, a solution or a powder that contains said copolymer. Among these forms, the membrane form and the solution form are preferable (hereinafter, the membrane form is referred to as the "polymer electrolyte membrane").

<Solid Polymer Electrolyte Membrane>

The solid polymer electrolyte membrane of the present invention (hereinafter, referred to simply as the "electrolyte membrane") comprises the above aromatic copolymer. The electrolyte membrane of the present invention preferably has a dry membrane thickness of 10 to 100 μm, more preferably 20 to 80 μm.

The electrolyte membrane of the present invention may comprise a metal compound or a metal ion. Examples of the metal compound or the metal ion include metal compounds containing a metal atom such as aluminum (Al), manganese (Mn), niobium (Nb), tantalum (Ta), chromium (Cr), molybdenum (Mo), tungsten (W), iron (Fe), ruthenium (Ru), nickel (Ni), tin (Sn), palladium (Pd), platinum (Pt), silver (Ag), cerium (Ce), vanadium (V), neodymium (Nd), praseodymium (Pr), samarium (Sm), cobalt (Co), gadolinium (Gd), terbium (Tb), dysprosium (Dy), holmium (Ho), and erbium (Er), and metal ions thereof.

These may be used singly, or two or more kinds thereof may be used in combination.

The electrolyte membrane of the present invention may comprise a fluorine-containing polymer. The fluorine-containing polymer is preferably a solvent-soluble compound, which can be uniformly dispersed in an electrolyte membrane or in pores of a porous base material. The fluorine-containing polymer is not particularly limited, and examples thereof include vinylidene fluoride-based homopolymers/copolymers, fluoroolefin/hydrocarbon-basedolefin copolymers, fluoroacrylate copolymers and fluoroepoxy compounds. These may be used singly, or two or more kinds thereof may be used in combination.

The electrolyte membrane of the present invention preferably has a swell of 100 to 130%, more preferably 100 to 120%, particularly preferably 100 to 110%, as evaluated in a hot water resistance test described in Examples set forth later. An electrolyte membrane having a swell percentage within the above range is excellent in hot water resistance.

The electrolyte membrane of the present invention preferably has a shrinkage of 90 to 110%, more preferably 95 to 105%, particularly preferably 98 to 102%, as evaluated in a hot water resistance test described in Examples set forth later. An electrolyte membrane having a shrinkage percentage within the above range is excellent in hot water resistance.

The electrolyte membrane of the present invention preferably has a specific resistance of 1 to 200 Ω·cm, more preferably 1 to 100 Ω·cm, particularly preferably 1 to 50 Ω·cm, as measured by a method described in Examples set forth later (under the environment of a temperature of 70°C and a relative humidity of 30%). An electrolyte membrane having a specific resistance within the above range is excellent in low-humidity proton conductivity.

The electrolyte membrane of the present invention preferably has a specific resistance of 1 to 20 Ω·cm, more preferably 1 to 15 Ω·cm, particularly preferably 1 to 10 Ω·cm, as measured by a method described in Examples set forth later (under the environment of a temperature of 70°C and a relative humidity of 65%). An electrolyte membrane having a specific resistance within the above range is excellent in high-humidity proton conductivity.

The electrolyte membrane of the present invention preferably has a breaking strength of 20 to 400 MPa, more preferably 40 to 400 MPa, particularly preferably 80 to 400 MPa, as measured in a tensile test described in Examples set forth later. An electrolyte membrane having a breaking strength within the above range is excellent in breaking strength.

The electrolyte membrane of the present invention preferably has an elongation at break of 5 to 400%, more preferably 10 to 400%, particularly preferably 20 to 400%, as measured in a tensile test described in Examples set forth later. An electrolyte membrane having an elongation at break within the above range is excellent in membrane toughness.

The electrolyte membrane of the present invention preferably has a molecular weight retentivity of 40 to 100%, more preferably 60 to 100%, particularly preferably 80 to 100%, as evaluated in a hydrogen peroxide exposure test described in Examples set forth later. An electrolyte membrane having a molecular weight retentivity within the above range is excellent in radical resistance.

The electrolyte membrane of the present invention preferably has a softening temperature of 120 to 200°C, more preferably 120 to 180°C, particularly preferably 120 to 160°C, as measured in a test described in Examples set forth later. An electrolyte membrane having a softening temperature within the above range is excellent in joining properties with electrodes by a hot press or the like.

The electrolyte membrane of the present invention preferably has a helium (He) gas permeability of $1\times10^{-11}$ to $2\times10^{-9}$ $cm^3 \cdot cm/cm^2/s/cmHg$, more preferably $1\times10^{-11}$ to $1\times10^{-9}$ $cm^3 \cdot cm/cm^2/s/cmHg$, particularly preferably $1\times10^{-11}$ to $5\times10^{-10}$ $cm^3 \cdot cm/cm^2/s/cmHg$, as measured by a method and under conditions described in Examples set forth later. An electrolyte membrane having a He gas permeability within the above range is excellent in gas barrier properties.

The electrolyte membrane of the present invention preferably has a microphase separation structure containing a phase primarily composed of a hydrophilic segment and a phase primarily composed of a hydrophobic segment. In the microphase separation structure, more preferably, the phase primarily composed of a hydrophilic segment is a phase continuous in the membrane thickness direction; and particularly preferably, both the phase primarily composed of a hydrophilic segment and the phase primarily composed of a hydrophobic segment are continuous phases.

Here, the microphase separation structure refers to a structure in which a phase performing the proton conduction (hydrophilic microdomain) and a phase engaged with the hot water resistance and the mechanical properties

(hydrophobic microdomain) are mixed, wherein the domain width, i.e., the identity period, of each microdomain structure ranges from several nanometers to several hundred nanometers. The microphase separation structure of the electrolyte membrane can be verified by observation using a transmission electron microscope (TEM).

By the electrolyte membrane having the above structure, where the proton conduction is performed by a phase different from the phase engaged with the hot water resistance and the mechanical properties, each performance is more efficiently exhibited, so that these properties are excellent.

<Process for Producing Polymer Electrolyte Membrane>

The polymer electrolyte membrane of the present invention can be produced by a process including the step of applying the composition prepared by mixing the copolymer of the present invention with e. g. , an organic solvent, on a substrate by a known method such as die coating, spray coating, knife coating, roll coating, spin coating and gravure coating. Specifically, the composition is applied on a substrate, and the applied composition is dried to obtain a membrane, the resultant membrane being optionally peeled from the substrate. Thereby, the polymer electrolyte membrane of the present invention can be obtained.

The substrate is not particularly limited as long as being a substrate on which a common composition is applied, and for example, a substrate such as a plastic substrate and a metal substrate is used. Preferred is a substrate composed of a thermoplastic resin such as a polyethylene terephthalate (PET) film.

The organic solvent is preferably the one which dissolves or swells the copolymer of the present invention, with examples including aprotic polar solvents such as N-methyl-2-pyrrolidone, N,N-dimethylformamide, γ-butyrolactone, N,N-dimethylacetamide, dimethylsulfoxide, dimethylurea, dimethylimidazolidinone, and acetonitrile; chlorine-based solvents such as dichloromethane, chloroform, 1,2-dichloroethane, chlorobenzene, and dichlorobenzene; alcohols such as methanol, ethanol, propyl alcohol, iso-propyl alcohol, sec-butyl alcohol and tert-butyl alcohol; alkylene glycol monoalkyl ethers such as ethylene glycol monomethyl ether, ethylene glycol monoethyl ether, and propylene glycol monoethyl ether; ketones such as acetone, methylethylketone, cyclohexanone, γ-butyrolactone; ethers such as tetrahydrofuran, and 1,3-dioxane.

These solvents may be used singly, or in combination of two or more kinds. In particular, in terms of the solubility of the copolymer of the present invention and the viscosity of the resultant composition, N-methyl-2-pyrrolidone (hereinafter, also called "NMP") is preferable.

When the above solvent is a mixture of the aprotic polar solvent and other solvents, the mixture preferably contains the aprotic polar solvent in an amount of 95 to 25 wt%, more preferably 90 to 25 wet%, and the other solvents in an amount of 5 to 75 wt%, more preferably 10 to 75 wt%, provided that the total is 100 wet%. The proportion of the other solvents falling within this range achieves an excellent effect of reducing the viscosity of the resultant composition. Preferable combination of the aprotic polar solvent and other solvents is NMP as the aprotic polar solvent, and methanol as the other solvents, methanol achieving an effect of reducing the composition viscosity over a wide range of compositional ranges.

The above composition may contain components including an inorganic acid such as sulfuric acid and phosphoric acid; phosphoric acid glass; tungstic acid; a phosphate hydrate; aβ -alumina proton substitute; inorganic proton conductive particles such as a proton-introducing oxide, an organic acid containing a carboxylic acid; an organic acid containing a sulfonic acid; an organic acid containing a phosphonic acid; and an appropriate amount of water.

The concentration of the copolymer of the present invention in the above composition is preferably 5 to 40 wt%, more preferably 7 to 25 wt%, although depending on the molecular weight of the copolymer. If the content of the copolymer is smaller than the above range, the formation of a thickened membrane is difficult, and pin holes tend to readily occur. On the other hand, if the content of the copolymer exceeds the above range, in which case the solution viscosity of the composition is too high, the film formation is difficult, and the resultant electrolyte membrane may fail to have a smooth surface.

The viscosity of the composition is preferably 1,000 to 100,000 mPa·s, more preferably 3,000 to 50,000 mPa·s, although depending on the molecular weight and concentration of the copolymer of the present invention and the concentration of additives. If the composition viscosity is lower than the above range, the retentivity of the composition on a substrate during the membrane formation is poor, and the composition may flow from a substrate. On the other hand, if the composition viscosity exceeds the above range, in which case the viscosity is too high, the extrusion from a die cannot be carried out, and the film formation by casting may be difficult.

It is preferable that the drying is carried out at a temperature of 50 to 150°C for 0.1 to 10 hours.

The drying may be one-stage drying, or two or more-stage drying which is pre-drying followed by primary drying.

The drying may be carried out under an inert gas atmosphere such as a nitrogen atmosphere or under reduced pressure, as needed.

The pre-drying can be carried out preferably at 30 to 100 °C, more preferably at 50 to 100°C, and can be continued preferably for 10 to 180 minutes, more preferably for 15 to 60 minutes.

The primary drying can be carried out preferably at a temperature that is higher than the pre-drying temperature, more preferably at a temperature of 50 to 150°C, and can be continued preferably for 0.1 to 10 hours.

After the pre-drying or the primary drying, the film obtained after the pre-drying or the primary drying is soaked in water, and thereby an organic solvent present in the film obtained after the pre-drying or the primary drying can be replaced with water, so that the amount of a residual organic solvent in the resultant electrolyte membrane can be reduced.

The amount of the residual organic solvent in the electrolyte membrane thus obtained is usually not more than 5 wt%. Depending on soaking conditions, the amount of the residual organic solvent in the resultant membrane can be not more than 1 wt%. Exemplary conditions to achieve this are that the amount of water to be used based on 1 part by weight of the film obtained after the pre-drying or the primary drying is not less than 50 parts by weight, and that the water temperature in soaking is 10 to 60°C, and the soaking time is 10 minutes to 10 hours.

After the pre-dried film or primary-dried film is soaked in water as described above, it is desirable that the soaked film is further dried at 30 to 100°C, preferably 50 to 80°C, for 10 to 180 minutes, preferably for 15 to 60 minutes, and the film thus dried is subsequently vacuum dried at 50 to 150 ° C, preferably under a reduced pressure of 500 mmHg to 0.1 mmHg, for 0.5 to 24 hours, to obtain an electrolyte membrane.

The film formed by the above method from the above aromatic copolymer having a sulfonic acid ester group or an alkali metal salt of a sulfonic acid may be subjected to an appropriate post-treatment such as hydrolysis and acid treatment, to produce the polymer electrolyte membrane of the present invention. Specifically, the above aromatic copolymer having a sulfonic acid ester group or an alkali metal salt of a sulfonic acid is formed into a film by such a method as described above, and the membrane thus formed is subjected to hydrolysis or acid treatment, whereby the polymer electrolyte membrane comprising the aromatic copolymer can be produced.

The electrolyte membrane of the present invention may be a single-layer membrane, or may be a multi-layer laminated membrane.

In the case of the laminated membrane, the thickness of each layer is arbitrarily determined: for example, the thickness may be such that one layer is thickened whereas another layer is thin. Each layer may be identical or different from one another.

Where the laminated membrane is formed, the surface of the electrolyte membrane obtained by such methods as described above may be coated further with a composition containing the copolymer of the present invention by a known method such as die coating, spray coating, knife coating, roll coating, spin coating and gravure coating, the coating procedure optionally followed by drying. The film formed from a composition containing the copolymer of the present invention may be superposed on the film obtained by such methods as described above and be hot pressed.

Where the electrolyte membrane is manufactured, the use of a porous base material or a sheet-like fibrous material can produce a reinforced polymer electrolyte membrane.

Examples of the process for producing the reinforced solid polymer electrolyte membrane include a method in which a porous base material or a sheet-like fibrous material is impregnated with a composition comprising the copolymer of the present invention; a method in which the composition is applied on a porous base material or a sheet-like fibrous material; and a method in which a membrane is formed from the composition beforehand, and the membrane is superposed on a porous base material or a sheet-like fibrous material, and these are hot pressed.

The porous base material is preferably a material having a large number of pores or gaps penetrating in the thickness direction. Examples thereof include organic porous base materials composed of various kinds of resins, and inorganic porous base materials composed of glass, metal oxides such as alumina or metals themselves.

The porous base material may be a substrate having a large number of through holes penetrating in the direction substantially parallel to the thickness direction.

As such porous base materials, those disclosed in JP-A-2008-119662, JP-A-2007-154153, JP-A-8-20660, JP-A- 8-20660, JP-A-2006-120368, JP-A-2004-171994, and JP-A-2009-64777 may be used.

The porous base material is preferably an organic porous base material. Specifically, preferred is a base material composed of at least one selected from the group consisting of polyolefins such as polytetrafluoroethylene, high molecular weight polyethylene, crosslinked polyethylene, polyethylene and polypropylene, polyimide, polyacrylonitrile, polyamideimide, polyetherimide, polyethersulfone, and glass. As the polyolefins, high molecular weight polyethylene, crosslinked polyethylene, polyethylene and the like are desirable.

[Membrane-Electrode Assembly]

The membrane-electrode assembly of the present invention is a membrane-electrode assembly comprising a gas diffusion layer, a catalyst layer, the electrolyte membrane of the present invention, a catalyst layer and a gas diffusion layer that are laminated in this order. Specifically, the solid polymer electrolyte membrane is sandwiched by a catalyst layer for a cathode on one side and by a catalyst layer for an anode on the other side. Further, the catalyst layer for a cathode is sandwiched by the solid polymer electrolyte membrane and by a gas diffusion layer on the cathode side, and the catalyst layer for an anode is sandwiched by the solid polymer electrolyte membrane and by a gas diffusion layer

on the anode side.

As the gas diffusion layers and the catalyst layers, known ones may be used without particular restriction.

Specifically, the gas diffusion layer is formed from a porous base material or from a laminate having a porous base material and a microporous layer. When the gas diffusion layer is formed from the laminate having a porous base material and a microporous layer, it is preferable that the microporous layer is provided adjacently to the catalyst layer. The gas diffusion layer preferably contains a fluorine-containing polymer in order to have water repellency.

The catalyst layer is composed of a catalyst, an ion exchange resin electrolyte and the like. A preferred catalyst is a noble metal catalyst such as platinum, palladium, gold, ruthenium and iridium. The noble metal catalyst may be a substance containing two or more kinds of elements, such as an alloy and a mixture. As such noble metal catalysts, generally, those supported on high specific surface area carbon microparticles can be used.

The ion exchange resin electrolyte is preferably a substance that functions as a binder component binding carbon microparticles supporting the above catalyst and that efficiently feeds ions generated by the reaction on the catalyst to the solid polymer electrolyte membrane (at the anode) and efficiently feeds the ions fed from the solid polymer electrolyte membrane to the catalyst (at the cathode).

The ion exchange resin of the catalyst layer used in the present invention is preferably a polymer having a proton exchange group, in order to increase the proton conductivity in the catalyst layer.

The proton exchange group contained in such a polymer is a sulfonic acid group, a carboxylic acid group, a phosphoric acid group and the like, but is not particularly limited. The polymer having such a proton exchange group is selected without particular restriction, but preferably used are, for example, polymers having a proton exchange group composed of a fluoroalkyl ether side chain and a fluoroalkyl main chain, or aromatic hydrocarbon polymers having a sulfonic acid group.

The copolymer having a proton conductive group of the present invention may be used as the ion exchange resin. Further, examples of the ion exchange resin may be a polymer having a proton exchange group and containing a fluorine atom, a polymer having a proton exchange group and obtained from ethylene, styrene or the like, copolymers obtained from these polymers, and blends obtained therefrom.

As such ion exchange resin electrolytes, known ones are employable without particular restriction. Examples that are employable without particular restriction are Nafion (DuPont, registered trademark), and aromatic hydrocarbon polymers having a sulfonic acid group.

The catalyst layer may further contain additives such as carbon fibers and resins having no ion exchange groups, as required. As these resins, resins having high water repellency are preferable, with examples thereof including fluorine-containing copolymers, silane coupling agents, silicone resins, waxes and polyphosphazene. Fluorine-containing copolymers are preferable.

[Polymer Electrolyte Fuel Cell]

The polymer electrolyte fuel cell of the present invention comprises the above membrane-electrode assembly. Thus, the polymer electrolyte fuel cell according to the present invention is excellent in properties such as electric power generation performance and durability.

The polymer electrolyte fuel cell according to the present invention is specifically a polymer electrolyte fuel cell that comprises at least one electricity generation part having at least one membrane-electrode assembly and separators each positioned outside of the gas diffusion layer of the membrane-electrode assembly; a fuel-feeding part for feeding a fuel to the electricity generation part; an oxidizing agent-feeding part for feeding an oxidizing agent to the electricity generation part, wherein the membrane-electrode assembly is preferably the one described in the foregoing.

As the separators used for the cell of the present invention, those used in common fuel cells may be used, with specific examples thereof including carbon-type separators and metal-type separators.

As the components constituting the polymer electrolyte fuel cell, knows ones may be used without particular restriction. The cell of the present invention may be a single cell, or may be a stack cell prepared by connecting multiple single cells in series. How to stack may be a know one. Specifically, the method may be a planar stacking, in which the single cells are arranged in a planar form, or may be a bipolar stacking, in which the single cells are stacked via a separator with its front and back surfaces having a flow passage for a fuel or an oxidizing agent.

EXAMPLES

Hereinafter, the present invention will be described in detail based on Examples, but the present invention is not limited by the following Examples.

[Test and Evaluation Method]

<Preparation of Electrolyte Membrane for Evaluation>

An aromatic copolymer obtained in any of the following Examples and Comparative Examples was dissolved in a mixed solvent of N-methylpyrrolidone/methanol, and the solution was cast with an applicator on a PET substrate, and dried in an oven at 80°C for 40 minutes, and then at 120°C for 40 minutes, to obtain a membrane. The membrane dried was washed by soaking in deionized water one time, in an aqueous 1N sulfuric acid solution one time, and then in deionized water two times, and the membrane washed was dried at 70°C for 5 minutes, to obtain a uniform and transparent electrolyte membrane for evaluation having a thickness of 30 μm.

<Measurement of Molecular Weight>

In the measurement of the molecular weight of an aromatic copolymer obtained in any of the following Examples and Comparative Examples, a polymer powder obtained through purification conducted as described in Examples set forth later was used as a measurement sample.

In the measurement of the molecular weight of the segment (A) and the segment (B), a small amount of a polymerization solution of an oligomer obtained by polymerizing raw material (s) in the reaction system corresponding to the above segment was collected, and was added to a mixed solvent prepared by adding 10 wt% of an acid such as a sulfuric acid to a poor solvent such as methanol, in order to solidify the oligomer. The solidified product was washed with a poor solvent, and the washed product was dried, to provide an oligomer powder, which was used as a measurement sample.

The measurement sample was dissolved in N-methylpyrrolidone buffer solution (hereinafter also referred to as the "NMP buffer solution") at a concentration of 0.2 wt%. By gel permeation chromatography (GPC) using this NMP buffer solution as an eluent, the number-average molecular weight (Mn) and the weight-average molecular weight (Mw) in terms of polystyrene were determined. The NMP buffer solution was prepared with its proportion: NMP (3 L)/phosphoric acid (3.3 mL)/lithium bromide (7.83 g). GPC analysis conditions are described below.

(Conditions)

GPC measurement apparatus: HLC-8220 GPC system, manufactured by Tosoh Corporation
Column: TSKgel alpha-M, manufactured by Tosoh Corporation (7.8 mm (column diameter) × 300 mm (column length), 13 μm (filler diameter), 7000 (number of theoretical stages)), two columns connected in series;
Guard Column: TSKgel guard column alpha, manufactured by Tosoh Corporation (6.0 mm (column diameter) × 40 mm (column length)); Column Temperature: 40°C;
Eluent: NMP buffer solution;
Eluent Flow Rate: 0.5 mL/min;
Detector: RI

<Calculation of Molecular Weight of Segment>

The molecular weight of a segment corresponding to an oligomer obtained by polymerizing the raw material(s) in the reaction system can be directly measured by GPC. On the other hand, the molecular weight of a segment corresponding to an oligomer obtained by polymerizing the raw material(s) in the addition system cannot be directly determined by GPC, since the oligomer in the addition system is copolymerized with the oligomer in the reaction system, and these oligomers cannot be physically separated from each other. Thus, in the segment (A) or the segment (B), the number-average molecular weight (Mn) of a segment whose molecular weight was unknown that corresponds to the oligomer in the addition system was calculated, using other known parameters, by the following method.

Unknown Segment Mn was calculated from the following five simultaneous equations (1) to (5) using Aromatic Copolymer Mn as directly measured by GPC, and the Known Segment Mn and Ion Exchange Capacity (IEC).

(1) a × Unknown Segment Mn + b × Known Segment Mn = Aromatic Copolymer Mn
(2) a × Unknown Segment Mn / Aromatic Copolymer Mn = Unknown Segment Weight Compositional Ratio
(3) Segment (A) Weight Compositional Ratio = IEC (mmol/g) × Average Molecular Weight of Structural unit (1) per one proton conductive group / {1000 - IEC (mmol/g) × (Na atom amount - H atom amount)}
(4) When Unknown Segment is Segment (A), Unknown Segment Weight Compositional Ratio = Segment (A) Weight

Compositional Ratio, and when Unknown Segment is Segment (B), Unknown Segment Weight Compositional Ratio = 1 - Segment (A) Weight Compositional Ratio.

(5) a = b + 1

a: The Average Number of Unknown Segments contained in one molecule of Aromatic Copolymer

b: The Average Number of Known Segments contained in one molecule of Aromatic Copolymer

The calculation is based on the assumption that the aromatic copolymer is a structure containing no branches and both terminals of the copolymer are unknown segments, and that the segment (B) has an ion exchange capacity of 0.

<Measurement of Equivalent of Sulfonic Acid Group>

The electrolyte membrane for evaluation was soaked in deionized water to completely remove acids that could remain in the membrane, and the resultant membrane was soaked in saline solution for ion exchange, and thereby an aqueous hydrochloric acid solution was prepared. This aqueous hydrochloric acid solution was subjected to neutralization titration using a standard aqueous sodium hydroxide solution, phenolphthalein being used as an indicator. The electrolyte membrane for evaluation after the ion exchange was washed in deionized water, and the membrane washed was vacuum dried. Then, the dry weight of the membrane was measured. As indicated below, from the titration amount of sodium hydroxide and the dry weight of the membrane, the equivalent of a sulfonic acid group (hereinafter also referred to as the "ion exchange capacity" or "IEC") was determined.

Ion Exchange Capacity (meq/g) = Titration Amount of Sodium Hydroxide (mmol) / Dry Weight of Membrane (g)

[Measurement of Proton Conductivity]

The electrolyte membrane for evaluation was cut into a 5 mm-wide rectangular sample membrane. On the surface of the rectangular sample membrane, platinum wires (diameter = 0.5 mm) were pressed. Thereby, a sample was obtained. The sample was kept in a constant temperature/humidity apparatus, and an alternating current impedance between the platinum wires were measured. From this measurement, an alternating current resistance was determined.

Specifically, the impedance under the environment of 70°C and a relative humidity of 65% or 30% was measured at an alternate current of 10 kHz. A chemical impedance measurement system manufactured by NF Corporation was used as a resistance measurement instrument. JW241 manufactured by Yamato Scientific Co., Ltd. was used as a constant temperature/humidity apparatus. Five platinum wires were pressed at an interval of 5 mm, and the distance between the wires was varied between 5 and 20 mm in the measurement of an alternating current resistance. From a gradient of the resistance vs. the distance between wires, a specific resistance of the electrolyte membrane for evaluation was calculated. The reciprocal number of the specific resistance corresponds to the proton conductivity.

Specific Resistance R (Ω·cm) = 0.5 (cm) × Membrane Thickness (cm) × Gradient of Resistance vs. Wire Distance (Ω/cm)

<Evaluation of Hot Water Resistance>

The electrolyte membrane for evaluation was cut into the size of width × length = 2.0 cm × 3.0 cm, which was weighed and given as a test piece (normal condition). The test piece obtained was placed under the conditions of 24°C and a relative humidity (RH) of 50% for its condition adjustment, and then this test piece was put in a 150 ml vial, and thereto, about 100 ml of deionized water was added. The vial was heated with a thermostat drier (SONW-450, manufactured by AS ONE Corporation) at 95°C for 24 hours. After the test, the test piece was collected from hot water, and water at the surface was lightly wiped off with a kimwipe (manufactured by NIPPON PAPER CRECIA Co., Ltd.), and the dimension was measured (in swelling). From the following equation, the percentage of swell from the normal condition was calculated. Further, under the conditions of 24°C and RH 50%, water was distilled off from this test piece and its condition was adjusted, and the dimension was measured (in drying), and shrinkage percentage was determined.

Swell Percentage = (Width in the presence of water (Dimension of 2 cm side) /2 cm + Length in the presence of water (Dimension of 3 cm side)/3 cm) × 100/2

Shrinkage Percentage = (Width in drying (Dimension of 2 cm side)/2 cm + Length in drying (Dimension of 3 cm side)/3 cm) × 100/2

<Evaluation of Radical Resistance>

The radical resistance was evaluated based on hydrogen peroxide exposure resistance under the environment of a temperature of 85°C. The electrolyte membrane for evaluation was hung in a vial containing 5 wt% hydrogen peroxide water, which was kept in a thermostat device at 85°C for 24 hours, and was allowed to be exposed to hydrogen peroxide vapor. The number-average molecular weights before and after the test were measured. From the following equation, the molecular weight retentivity was calculated.

Molecular Weight Retentivity (%) = (Number-Average Molecular Weight of Membrane After Test/Number- Average Molecular Weight of Membrane Before Test) × 100

<Evaluation of Softening Temperature>

The electrolyte membrane for evaluation was cut into a 5 mm-wide rectangular sample membrane. This sample membrane was subjected to dynamic viscoelasticity measurement (frequency: 10Hz, temperature increase rate: 2°C/min). From an inflection point of the storage modulus (E'), a glass transition temperature was determined, which was used as a softening temperature.

<Evaluation of Toughness>

The toughness of the electrolyte membrane for evaluation was evaluated based on the breaking strength and the elongation at break in a tensile test. The breaking strength and the elongation at break were measured in accordance with JIS K7113 (tensile rate: 50 mm/min). In accordance with JIS K7113, at a temperature of 23±2°C and at a relative humidity of 50±5%, the electrolyte membrane for evaluation was placed still for 48 hours for the adjustment of the conditions of the membrane.
For the cutting of the sample, a No.7 dumbbell described in JIS K6251 was used.
As a tensile test measurement instrument, 5543 manufactured by INSTRON was used.

<Evaluation of Gas Barrier Properties>

The gas barrier properties were evaluated based on He gas permeability. The He gas permeability was measured using a gas permeability tester (GASTERM-100, manufactured by JASCO Corporation).
A dry He gas at 1 atmospheric pressure was allowed to permeate through the electrolyte membrane for evaluation at a temperature of 24°C for 60 minutes. An average gas permeability for the final 30 minutes during which the gas permeability was constant was calculated.

<TEM observation>

Whether the electrolyte membrane for evaluation had a microphase separation structure was determined by cutting out an ultrathin piece from the electrolyte membrane for evaluation, dyeing this piece with lead nitrate and

observing the piece with a transmission electron microscope (TEM) HF-100FA, manufactured by Hitachi Ltd.

[Synthesis of Polymer Raw Material]

<Synthesis Example 1-1>

3,5-dichlorobenzene sulfonylchloride (114.65 g, 467 mmol) was added to a pyridine (300 mL) solution of neopentyl alcohol (45.30 g, 514 mmol) little by little with stirring over 15 minutes. During this procedure, the reaction temperature was kept at 18 to 20°C. The reaction mixture, while being cooled, was stirred further for 30 minutes, and thereto, an aqueous 10 wet% HCl solution (1600 mL) cooled with ice was added. A water-insoluble component was extracted with ethyl acetate (700 mL), and washed with an aqueous 1N HCl solution two times (each time: 700 mL), and then washed with an aqueous 5 wt% $NaHCO_3$ solution two times (each time: 700 mL), and the washed component was dried with $MgSO_4$. With a rotating drier, the solvent was removed, and the residue was recrystallized in 500 mL of methanol. As a result thereof, neopentyl 3,5-dichlorobenzene sulfonate, represented by the following formula (1-1), was obtained as a glossy colorless crystal (a purity of more than 99% in $^1$H-NMR). The yield amount was 105.98 g, and the yield was 76%.

$^1$H NMR (500 MHz, $CDCl_3$): δ (ppm) 7.78 (s, 2H), 7.63 (s, 1H), 3.76 (s, 2H), 0.94 (s, 9H).

[Chem. 28]

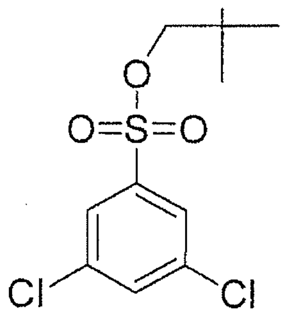

(1 − 1)

<Synthesis Example 1-2>

A 3 L three-neck flask equipped with a stirrer and a cooling tube was charged with chlorosulfonic acid (233.0 g, 2 mol), and then 2,5-dichlorobenzophenone (100.4 g, 400 mmol). These were reacted for 8 hours in oil bath at 100°C. After a predetermined period of time, the reaction liquid was slowly poured into broken ice (1000 g), and extraction using ethyl acetate was carried out. An organic layer was washed with saline solution, and was dried with magnesium sulfate. Then, ethyl acetate was distilled off, thereby obtaining a pale yellow crude crystal (3-(2,5-dichlorobenzoyl)benzene sulfonic acid chloride). The crude crystal without purification was employed at the subsequent step.

2,2-dimethyl-1-propanol(neopentyl alcohol) (38.8 g, 440 mmol) was added into 300 mL of pyridine, and the mixture was cooled to about 10°C. Thereto, the crude crystal obtained above was slowly added over about 30 minutes. The addition of the whole amount was followed by stirring for 30 minutes, and the reaction was allowed to proceed. After the reaction, the reaction liquid was poured into 1000 mL of hydrochloric acid water, and a solid precipitated was collected. The solid obtained was dissolved in ethyl acetate, and the solution was washed with an aqueous sodium bicarbonate solution and with saline water. The solution washed was dried with magnesium sulfate, and then ethyl acetate was distilled off, thereby obtaining a crude crystal. The crude crystal was allowed to recrystallize in methanol. Thereby, a white crystal of neopentyl 3-(2,5-dichlorobenzoyl)benzene sulfonate, represented by the following formula (1-2), was obtained.

$^1$H NMR (500 MHz, $CDCl_3$): δ (ppm) 8.26 (s, 1H), 8.15 (d, 1H), 8.09 (d, 1H), 7.72 (t, 1H), 7.48 (d, 1H), 7.43 (d, 1H), 7.41 (s, 1H), 3.73 (s, 2H), 0.91 (s, 9H).

[Chem. 29]

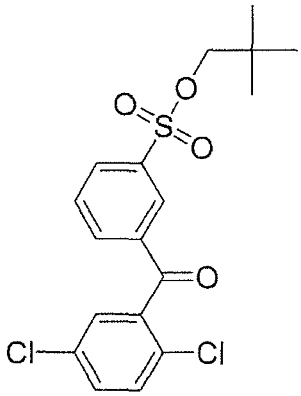

(1-2)

<Synthesis Example 1-3>

A 2 L three-neck flask equipped with a stirring blade, a thermometer and a nitrogen-introducing tube was charged with 1,4-dichlorobenzene (134.0 g, 0.91 mol), 3-bromobenzoyl chloride (100.0 g, 0.46 mol) and aluminum chloride (121.5 g, 0.91 mol). These were stirred at 135°C for 4 hours. After the reaction, the reaction product was dropwise added to iced water, and extraction using toluene was carried out. This was followed by neutralization using an aqueous 1 wt% sodium bicarbonate solution, and then washing using saturated saline solution and concentration. As a result of recrystallization using hexane, 2,5-dichloro-3'-bromobenzophenone was obtained. The yield amount was 96.1 g.

A 1 L three-neck flask equipped with a stirring blade, a thermometer and a nitrogen-introducing tube was charged with 2,5-dichloro-3'-bromobenzophenone (33.0 g, 0.1 mol), 2-hydroxy-1,3,2-dioxaphosphorinane (13.43 g, 0.11 mol), tetrakis(triphenylphosphino)palladium (5.78 g, 5 mmol) and triethyl amine (11.13 g, 0.11 mol). These were stirred at 80°C for 3 hours. After the reaction, a salt precipitated was removed by filtration and the solvent was concentrated. As a result of purification by recrystallization using toluene, 3-(2',5'-dichlorobenzoyl)phenyl-1,3,2-dioxaphosphorinane, represented by the following formula (1-3), was obtained. The yield amount was 20.4 g.

$^1H$ NMR (500 MHz, $CDCl_3$): δ (ppm) 8.25 (d, 1H), 8.08 (m, 1H), 7.96 (d, 1H), 7.63 (t, 1H), 7.45 (d, 1H), 7.41 (d, 1H), 7.38 (s, 1H), 4.66 (m, 2H), 4.33 (m, 2H), 2.16 (m, 2H).

[Chem. 30]

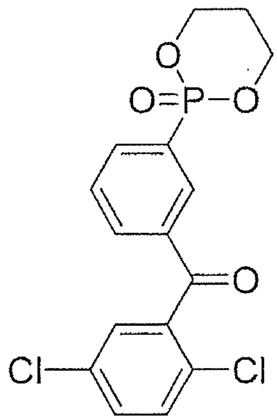

(1-3)

<Synthesis Example 2-1>

A 2 L three-neck flask equipped with a stirring blade, a thermometer and a nitrogen-introducing tube was charged with fluorobenzene (240.2 g, 2.50 mol) and cooled in ice bath to 10°C. Thereto, 2,5-dichlorobenzoic acid chloride (134.6 g, 0.50 mol) and aluminum chloride (86.7g, 0. 65 mol) were gradually added such that the reaction temperature

would not exceed 40 °C. The addition was followed by stirring at 40°C for 8 hours. By thin layer chromatography, the disappearance of the raw materials was confirmed. Thereafter, the reaction product was dropwise added into iced water, and extraction using ethyl acetate was carried out. This was followed by neutralization using a 5 wt% sodium bicarbonate solution, and then washing using saturated saline solution, and drying using magnesium sulfate. Then, the solvent was distilled off with an evaporator. As a result of recrystallization using methanol, a white crystal of 2,5-dichloro-4'-fluorobenzophenone, represented by the following formula (2-1), was obtained. The yield amount was 130 g, and the yield was 97%.

$^1H$ NMR (500 MHz, $CDCl_3$): δ (ppm) 7.84 (m, 2H), 7.42 (d, 1H), 7.40 (d, 1H), 7.36 (s, 1H), 7.16 (m, 2H).

[Chem. 31]

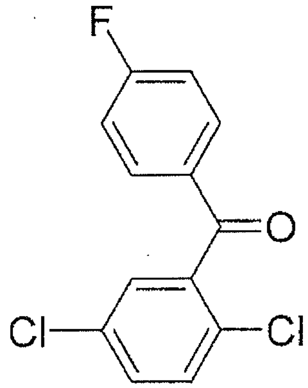

(2-1)

<Synthesis Example 2-2>

In accordance with Polymer, 51, 623-631 (2010), 2,5-dichloro-4'-n-dodecylbenzophenone, represented by the following formula (2-2), was synthesized.

[Chem. 32]

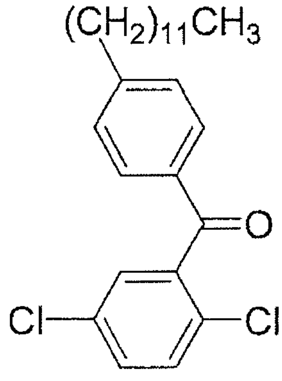

(2-2)

<Synthesis Example 2-3>

A 2 L three-neck flask equipped with a stirring blade, a thermometer, a cooling tube and a nitrogen-introducing tube was charged with 2,5-dichloro-4'-fluorobenzophenone (150.7 g, 0.560 mol), imidazole (114.4 g, 1.68 mol), potassium carbonate (100.6 g, 0.728 mol) and N,N'-dimethylacetamide (840 mL). The reaction solution was heated under nitrogen atmosphere in oil bath at 110 °C for 2 hours. After the disappearance of the raw materials was confirmed by thin layer chromatography, the reaction liquid was allowed to cool to room temperature. Thereafter, the reaction liquid was gradually added to 3 L of water to solidify a product, which was followed by filtration. A product obtained by filtration was dissolved in 1.2 L of tetrahydrofuran (THF), and to the solution, 4 L of toluene was added. The resultant liquid was washed with

saline solution until the aqueous layer became neutral. The organic layer was dried with magnesium sulfate, and the solvent was distilled off with an evaporator. The crude yield amount was 180 g. By using a mixed solvent of 1 L of toluene and 20 mL of methanol heated to 80°C, recrystallization isolation procedure was carried out. As a result thereof, a white solid of 2,5-dichloro-4'-(1-imidazolyl)benzophenone, represented by the following formula (2-3), was obtained in an amount of 155 g at an yield of 87%.

$^1H$ NMR (500 MHz, $CDCl_3$): δ (ppm) 8.06 (s, 1H), 7.95 (d, 2H), 7.54 (d, 2H), 7.44 (s, 1H), 7.40 (s, 1H), 7.38 (s, 1H), 7.27 (s, 1H).

[Chem. 33]

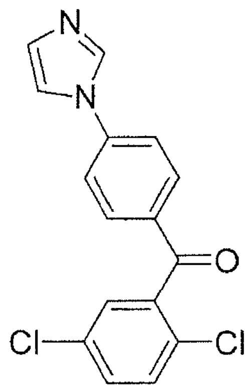

(2−3)

<Synthesis Example 3-1>

A 1L three-neck flask equipped with a stirring blade, a thermometer and a nitrogen-introducing tube was charged with 2, 6-dichlorobenzoic acid chloride (125.7 g, 0. 60 mol) and benzene (234.3 g, 3.00 mol). These were cooled in ice bath to 5°C, and thereto aluminum chloride (96.0 g, 0.72 mol) was gradually added such that the reaction temperature would not exceed 20°C. The addition was followed by stirring at 20°C for 8 hours. After the disappearance of the raw materials was confirmed by thin layer chromatography, the reaction liquid was dropwise added to an aqueous 10 wt% hydrochloric acid solution cooled with iced water, and extraction using ethyl acetate was carried out. An organic layer was washed with an aqueous 10wt% sodium hydroxide solution, and further washed with water and with saturated saline solution. The organic layer washed was dried with magnesium sulfate, and then the solvent was distilled off with an evaporator. By recrystallization with toluene/hexane, a white crystal of 2,6-dichlorobenzophenone, represented by the following formula (3-1), was obtained. The yield amount was 143.0 g, and the yield was 95%.

$^1H$ NMR (500 MHz, $CDCl_3$): δ(ppm) 7.83 (d, 2H), 7.62 (t, 1H), 7.48 (t, 2H), 7.39-7.32 (m, 3H), 7.37 (s, 1H), 7.34 (d, 1H).

[Chem. 34]

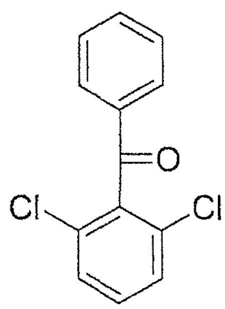

(3−1)

<Synthesis Example 3-2>

In accordance with Macromolecules, 38, 4147-4156 (2005), 2,2-bis(4-trifluoromethanesulfonyloxyphenyl)hexafluoropropane, represented by the following formula (3-2), was synthesized.

[Chem. 35]

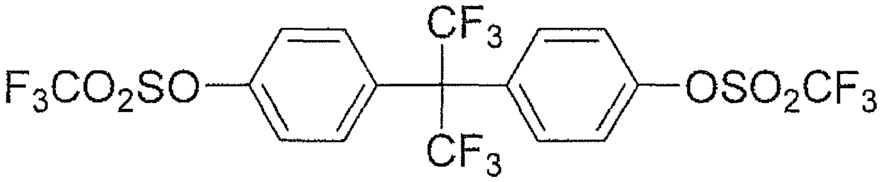

(3-2)

<Synthesis Example 3-3>

A 1 L three-neck flask equipped with a stirrer, a thermometer, a Dean-Stark tube, a nitrogen-introducing tube and a cooling tube was charged with 2,6-dichlorobenzonitrile (88.6 g, 0.515 mol), 2,5-di-tert-butylhydroquinone (27.1 g, 0.121 mol), 2-tert-butylhydroquinone (60.4 g, 0.364 mol) and potassium carbonate (87.1 g, 0.630 mol). After the flask was purged with nitrogen, sulfolane (600 mL) and toluene (300 mL) were added and the mixture was stirred. In oil bath, the reaction liquid was heated and refluxed at 150°C. Water generated by the reaction was trapped in the Dean-Stark tube. Three hours thereafter, almost no water was recognized to be generated, at which time, toluene was removed through the Dean-Stark tube to the outside of the system. The reaction temperature was slowly increased to a temperature ranging from 180 to 190°C, and the stirring was carried out for 3 hours, and then 2, 6-dichlorobenzonitrile (15.6 g, 0.091 mol) was added. The reaction was further allowed to proceed for 5 hours.

The reaction liquid was allowed to cool, and then was added to 2400 mL of a methanol/aqueous 4 wt% sulfuric acid solution (5/1(volume ratio)), to obtain a liquid containing a solidified product. The solidified product precipitated was filtered. The residue was put in 2400 mL of water, which was stirred at 55°C for 1 hour. The liquid after stirring was filtered, and the residue was again put in 2400 mL of water, which was stirred at 55°C for 1 hour and filtered. The residue obtained was put in 2400 mL of methanol, which was stirred at 55°C for 1 hour and filtered. Then, the residue was again put in 2400 mL of methanol, which was stirred at 55°C for 1 hour and filtered. The residue was dried by air, and the dried residue was vacuum dried at 80°C, to obtain an oligomer represented by the following formula (3-3) in an amount of 133 g (yield: 96%). Mn as measured by GPC was 10,500. $^1$H-NMR spectrum (DMSO-d$^6$) of the resultant compound represented by the following formula (3-3) is shown in Fig. 6. The molar ratio s:t was 75:25.

[Chem. 36]

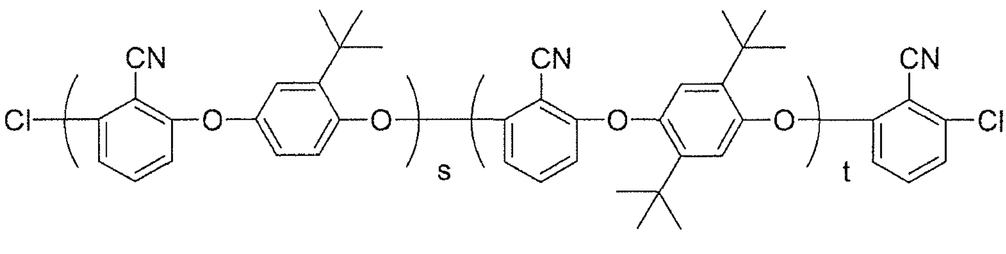

(3-3)

[Synthesis of Aromatic Copolymer]

<Example 1>

Addition system: to a mixture of the compound represented by the formula (1-1) (29.15 g, 98.09 mmol) and triphenylphosphine (1.65 g, 6.28 mmol), dehydrated dimethyl acetamide (DMAc) (71 mL) was added in the atmosphere of nitrogen, to prepare an addition system solution.

Reaction system: to a mixture of 2,5-dichlorobenzophenone (23.03 g, 91.71 mmol), 2,6-dichlorobenzonitrile (1.75 g, 10.19 mmol), triphenylphosphine (1.92 g, 7.34 mmol) and zinc (15.99 g, 244.57 mmol), dehydrated DMAc (66 mL) was added in the atmosphere of nitrogen. This reaction system was heated to 60°C with stirring, and then bis(triphenylphosphine)nickel dichloride (1. 60 g, 2.45 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen.

The resultant system was heated to 60°C with stirring, and then zinc (15.39 g, 235.43 mmol) and bis(triphenylphosphine)nickel dichloride (2.05 g, 3.14 mmol) were added to further promote polymerization, followed by stirring at 80°C for 3 hours. The reaction involved heat generation and viscosity increase.

The resultant solution was diluted with DMAc (273 mL), and the diluted solution was filtered with Celite as a filter aid. To the filtrate, lithium bromide (29.82 g, 343. 33 mmol) was added, and these were allowed to react at 100°C for 7 hours. After the reaction, the reaction liquid was cooled to room temperature, and the reaction liquid cooled was poured to 3.2 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-1) (q:r = 90:10). The molecular weight and the ion exchange capacity of the resultant polymer are shown in Table 1. $^1$H-NMR spectrum (DMSO-$d^6$) of the resultant polymer is shown in Fig. 1. $^1$H-NMR spectrum (DMSO-$d^6$) of the intermediate of the resultant polymer (neopentyl sulfonate) is shown in Fig. 2. $^1$H-NMR spectrum (DMSO-$d^6$) of the resultant oligomer consisting only of the structural unit (2) and the structural unit (3) is shown in Fig. 3.

It was suggested by TEM observation that the resultant electrolyte membrane had a microphase separation structure containing a sea-shaped (matrix-shaped) continuous phase primarily composed of a hydrophilic segment and a gyroid continuous phase primarily composed of a hydrophobic segment.

[Chem. 37]

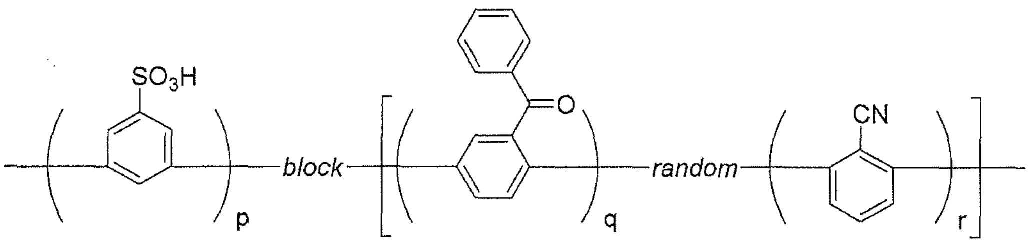

(5−1)

<Example 2>

Addition system: to a mixture of the compound represented by the formula (1-1) (34.46 g, 115.96 mmol) and triphenylphosphine (1.95 g, 7.42 mmol), dehydrated DMAc (84 mL) was added in the atmosphere of nitrogen, to prepare an addition system solution.

Reaction system: to a mixture of 2,5-dichlorobenzophenone (18.99 g, 75.64 mmol), 2,6-dichlorobenzonitrile (1.45 g, 8.40 mmol), triphenylphosphine (1.59 g, 6.05 mmol) and zinc (13.19 g, 201.70 mmol), dehydrated DMAc (54 mL) was added in the atmosphere of nitrogen. This reaction system was hated to 60°C with stirring, and then bis(triphenylphosphine)nickel dichloride (1.32 g, 2.02 mmol) was added to initiate polymerization, followed by stirring at 80°C for 30 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (18.19 g, 278.30 mmol) and bis(triphenylphosphine)nickel dichloride (2.43 g, 3.71 mmol) were added to further promote polymerization, followed by stirring at 80°C for 3 hours. The reaction involved heat generation and viscosity increase.

The resultant solution was diluted with DMAc (281 mL), and the diluted solution was filtered with Celite as a filter aid. To the filtrate, lithium bromide (35.25 g, 405.85 mmol) was added, and the reaction was allowed to proceed at 100°C for 7 hours. After the reaction, the reaction liquid was cooled to room temperature, and the reaction liquid cooled was poured to 3.3 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the formula (5-1) (q:r = 90:10). The molecular weight and the ion exchange capacity of the resultant polymer are shown in Table 1.

<Example 3>

Addition system: to a mixture of the compound represented by the formula (1-1) (29.49 g, 99.23 mmol) and triphenylphosphine (1.67 g, 6.35 mmol), dehydrated DMAc (72 mL) was added in the atmosphere of nitrogen, to prepare an addition system solution.

Reaction system: to a mixture of 2,5-dichlorobenzophenone (24.04 g, 95.73 mmol), 2,6-dichlorobenzonitrile (0.87 g, 5.04 mmol), triphenylphosphine (1.90 g, 7.26 mmol) and zinc (15.81 g, 241.85 mmol), dehydrated DMAc (66 mL) was added in the atmosphere of nitrogen. This reaction system was heated to 60°C with stirring, and then bis(triphenylphosphine)nickel dichloride (1. 58 g, 2. 42 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (15.57 g, 238.15 mmol) and bis(triphenylphosphine)nickel dichloride (2.08 g, 3.18 mmol) were added to further promote polymerization, followed by stirring at 80°C for 3 hours. The reaction involved heat generation and viscosity increase.

The resultant solution was diluted with DMAc (277 mL), and the diluted solution was filtered with Celite as a filter aid. To the filtrate, lithium bromide (30.16 g, 347. 30 mmol) was added, and the reaction was allowed to proceed at 100 ° C for 7 hours. After the reaction, the reaction liquid was cooled to room temperature, and the reaction liquid cooled was poured into 3.3 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the formula (5-1) (q: r = 95:5). The molecular weight and the ion exchange capacity of the resultant polymer are shown in Table 1.

<Example 4>

Addition system: to a mixture of the compound represented by the formula (1-1) (38.10 g, 128.19 mmol) and triphenylphosphine (2.15 g, 8.20 mmol), dehydrated DMAc (93 mL) was added in the atmosphere of nitrogen, to prepare an addition system solution.

Reaction system: to a mixture of 2,5-dichlorobenzophenone (17.49 g, 69.66 mmol), 2,6-dichlorobenzonitrile (0.37 g, 2.15 mmol), triphenylphosphine (1.36 g, 5.17 mmol) and zinc (11.27 g, 172.35 mmol), dehydrated DMAc (48 mL) was added in the atmosphere of nitrogen. This reaction system was heated to 60°C with stirring, and then bis(triphenylphosphine)nickel dichloride (1.13 g, 1.72 mmol) was added to initiate polymerization, followed by stirring at 80°C for 24 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (20.11 g, 307.65 mmol) and bis(triphenylphosphine)nickel dichloride (2.68 g, 4.10 mmol) were added to further promote polymerization, followed by stirring at 80°C for 3 hours. The reaction involved heat generation and viscosity increase.

The resultant solution was diluted with DMAc 290 mL, and the diluted solution was filtered with Celite as a filter aid. To the filtrate, lithium bromide (38.97 g, 448. 65 mmol) was added, and the reaction was allowed to proceed at 100°C for 7 hours. After the reaction, the reaction liquid was cooled to room temperature, and the reaction liquid cooled was poured to 3.4 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the formula (5-1) (q: r = 97:3). The molecular weight and the ion exchange capacity of the resultant polymer are shown in Table 1.

<Example 5>

Addition system: to a mixture of the compound represented by the formula (1-1) (41.28 g, 138.88 mmol) and triphenylphosphine (2.33 g, 8.89 mmol), dehydrated DMAc (101 mL) was added in the atmosphere of nitrogen, to prepare an addition system solution.

Reaction system: to a mixture of 2,5-dichlorobenzophenone (14.89 g, 59.28 mmol), 2,6-dichlorobenzonitrile (0.32 g, 1.83 mmol), triphenylphosphine (1.15 g, 4.40 mmol) and zinc (9.59 g, 146.68 mmol), dehydrated DMAc (40 mL) was added in the atmosphere of nitrogen. This reaction system was heated to 60°C with stirring, and then bis(triphenylphosphine)nickel dichloride (0. 96 g, 1.47 mmol) was added to initiate polymerization, followed by stirring at 80°C for 18 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (21.79 g, 333.32 mmol) and bis(triphenylphosphine)nickel dichloride (2.91 g, 4.44 mmol) were added to further promote polymerization, followed by stirring at 80°C for 3 hours. The reaction involved heat generation and viscosity increase.

The resultant solution was diluted with DMAc (295 mL), and the diluted solution was filtered with Celite as a filter aid. To the filtrate, lithium bromide (42.22 g, 486.09 mmol) was added, and the reaction was allowed to proceed at 100°C for 7 hours. After the reaction, the reaction liquid was cooled to room temperature, and the reaction liquid cooled was poured to 3.4 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the formula (5-1) (q: r = 97:3). The molecular weight and the ion exchange capacity of the resultant polymer are shown in Table 1.

<Example 6>

Addition system: to a mixture of the compound represented by the formula (1-1) (42.61 g, 143.36 mmol), triphenylphosphine (2.44 g, 9.30 mmol) and the compound represented by the formula (3-3) (19.87 g, 1.89 mmol), dehydrated DMAc (153 mL) was added in the atmosphere of nitrogen, to prepare an addition system solution.

Reaction system: to a mixture of 2,5-dichlorobenzophenone (13.75 g, 54.74 mmol), triphenylphosphine (1.03 g, 3. 94 mmol) and zinc (8.59 g, 131.39 mmol), dehydrated DMAc (37 mL) was added in the atmosphere of nitrogen. This reaction system was heated to 60°C with stirring, and then bis(triphenylphosphine)nickel dichloride (0.86 g, 1.31 mmol) was added to initiate polymerization, followed by stirring at 80°C for 15 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (22.79 g, 348.61 mmol) and bis(triphenylphosphine)nickel dichloride (3.04 g, 4.65 mmol) were added to further promote polymerization, followed by stirring at 80°C for 3 hours. The reaction involved heat generation and viscosity increase.

The resultant solution was diluted with DMAc (314 mL), and the diluted solution was filtered with Celite as a filter aid. To the filtrate, lithium bromide (43.58 g, 501. 77 mmol) was added, and the reaction was allowed to proceed at 100°C for 7 hours. After the reaction, the reaction liquid was cooled to room temperature, and the reaction liquid cooled was poured to 5.0 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-2) (q: r = 96. 66:3.34, s: t = 75:25). The molecular weight and the ion exchange capacity of the resultant polymer are shown in Table 1. $^{1}$H-NMR spectrum (DMSO-$d^{6}$) of the resultant polymer is shown in Fig. 4. $^{1}$H-NMR spectrum (DMSO-$d^{6}$) of the resultant oligomer consisting only of the structural unit (2) is shown in Fig. 5.

[Chem. 38]

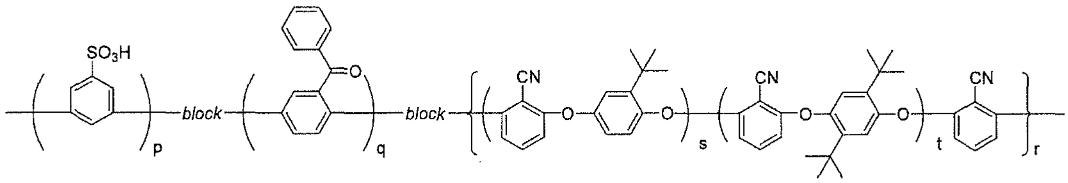

(5−2)

<Example 7>

Addition system: to a mixture of the compound represented by the formula (1-1) (33.06 g, 111.23 mmol), triphenylphosphine (1.87 g, 7.14 mmol) and the compound represented by the formula (3-3) (4.01 g, 0.38 mmol), dehydrated DMAc (91 mL) was added in the atmosphere of nitrogen, to prepare an addition system solution.

Reaction system: to 2,5-dichlorobenzophenone (22.20 g, 88.39 mmol), triphenylphosphine (1.67 g, 6.36 mmol) and zinc (13.87 g, 212.13 mmol), dehydrated DMAc (59 mL) was added in the atmosphere of nitrogen. This reaction system was heated to 60°C with stirring, and then bis (triphenylphosphine) nickel dichloride (1.39 g, 2.12 mmol) was added to initiate polymerization, followed by stirring at 80°C for 15 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (17.51 g, 267.87 mmol) and bis(triphenylphosphine)nickel dichloride (2.34 g, 3.57 mmol) were added to further promote polymerization, followed by stirring at 80°C for 3 hours. The reaction involved heat generation and viscosity increase.

The resultant solution was diluted with DMAc (315 mL), and the diluted solution was filtered with Celite as a filter aid. To the filtrate, lithium bromide (33. 81 g, 389.30 mmol) was added, and the reaction was allowed to proceed at 100 °C for 7 hours. After the reaction, the reaction liquid was cooled to room temperature, and the reaction liquid cooled was poured to 3.6 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the formula (5-2) (q:r = 99.57:0.43, s:t = 75:25). The molecular weight and the ion exchange capacity of the resultant polymer are shown in Table 1.

<Example 8>

Addition system: to a mixture of the compound represented by the formula (1-1) (31.36 g, 105.51 mmol), triphenylphosphine (1.77 g, 6.76 mmol) and the compound represented by the formula (3-3) (1.90 g, 0.18 mmol), dehydrated DMAc (81 mL) was added in the atmosphere of nitrogen, to prepare an addition system solution.

Reaction system: to a mixture of 2,5-dichlorobenzophenone (23.68 g, 94.31 mmol), triphenylphosphine (1.78 g, 6.79 mmol) and zinc (14.80 g, 226.35 mmol), dehydrated DMAc (63 mL) was added in the atmosphere of nitrogen. This reaction system was heated to 60°C with stirring, and then bis(triphenylphosphine)nickel dichloride (1.48 g, 2.26 mmol) was added to initiate polymerization, followed by stirring at 80°C for 15 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (16.58 g, 253.65 mmol) and bis(triphenylphosphine)nickel dichloride (2.21 g, 3.38 mmol) were added to further promote polymerization, followed by stirring at 80°C for 3 hours. The reaction involved heat generation and viscosity increase.

The resultant solution was diluted with DMAc (297 mL), and the diluted solution was filtered with Celite as a filter aid. To the filtrate, lithium bromide (32. 07 g, 369.28 mmol) was added, and the reaction was allowed to proceed at 100°C for 7 hours. After the reaction, the reaction liquid was cooled to room temperature, and the reaction liquid cooled was poured to 3.5 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the formula (5-2) (q:r = 99.81:0.19, s:t = 75:25). The molecular weight and the ion exchange capacity of the resultant polymer are shown in Table 1.

<Comparative Example 1>

Addition system: to a mixture of the compound represented by the formula (1-1) (27.70 g, 93.21 mmol) and triphenylphosphine (1.56 g, 5.97 mmol), dehydrated DMAc (68 mL) was added in the atmosphere of nitrogen, to prepare an addition system solution.

Reaction system: to a mixture of 2,5-dichlorobenzophenone (26.82 g, 106.79 mmol), triphenylphosphine (2.02 g, 7.69 mmol) and zinc (16.75 g, 256.30 mmol), dehydrated DMAc (71 mL) was added in the atmosphere of nitrogen. This reaction system was heated to 60°C with stirring, and then bis(triphenylphosphine)nickel dichloride (1.68 g, 2.56 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (14.62 g, 223.70 mmol) and bis(triphenylphosphine)nickel dichloride (1.95 g, 2.98 mmol) were added to further promote polymerization, followed by stirring at 80°C for 3 hours. The reaction involved heat generation and viscosity increase.

The resultant reaction system solution was diluted with DMAc (277 mL), and the diluted solution was filtered with Celite as a filter aid. To the filtrate, lithium bromide (28.33 g, 326.23 mmol) was added, and the reaction was allowed to proceed at 100 ° C for 7 hours. After the reaction, the reaction liquid was cooled to room temperature, and the reaction liquid cooled was poured to 3.3 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer powder.

The resultant polymer is presumed to have a structure represented by the following formula (6-1). The molecular weight and the ion exchange capacity of the resultant polymer are shown in Table 1. $^1$H-NMR spectrum (DMSO-$d^6$) of the resultant polymer is shown in Fig. 7.

It was suggested by TEM observation that the resultant electrolyte membrane had a microphase separation structure containing a sea-shaped (matrix-shaped) continuous phase primarily composed of a hydrophilic segment and an island-shaped (spherical) uncontinuous phase primarily composed of a hydrophobic segment.

[Chem. 39]

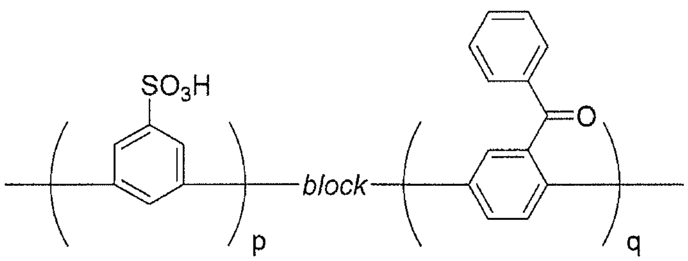

(6−1)

<Comparative Example 2>

Reaction system: to a mixture of the compound represented by the formula (1-1) (58.24 g, 195.98 mmol), the compound represented by the formula (3-3) (42.23 g, 4.02 mmol), triphenylphosphine (4.20 g, 16.00 mmol) and zinc (31.38 g, 480.00 mmol), dehydrated DMAc (321 mL) was added in the atmosphere of nitrogen. This reaction system was heated to 60°C with stirring, and then bis(triphenylphosphine)nickel dichloride (5.23 g, 8.00 mmol) was added to initiate polymerization, followed by stirring at 80°C for 3 hours. The reaction involved heat generation and viscosity increase.

The resultant reaction system solution was diluted with DMAc 571 mL, and the diluted solution was filtered with Celite as a filter aid. To the filtrate, lithium bromide (68.08 g, 783.91 mmol) was added, and the reaction was allowed to proceed at 100°C for 7 hours. After the reaction, the reaction liquid was cooled to room temperature, and the reaction liquid cooled was poured to 7.9 L of water for solidification. A solidified product was washed and filtered with acetone four times with stirring. The washed product was washed and filtered with an aqueous 1N sulfuric acid solution seven

times with stirring. Further, the washed product was washed and filtered with deionized water until the pH of the liquid after washing reached 5 or more. The washed product finally obtained was dried at 75°C for 24 hours, to obtain a brown-colored polymer powder.

The resultant polymer is presumed to have a structure represented by the following formula (6-2) (s:t = 75:25). The molecular weight and the ion exchange capacity of the resultant polymer are shown in Table 1. $^{1}$H-NMR spectrum (DMSO-d$^{6}$) of the resultant polymer is shown in Fig. 8.

[Chem. 40]

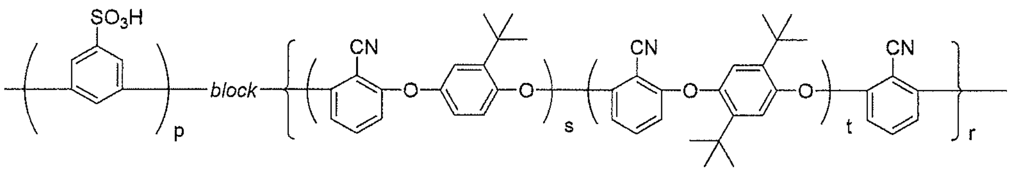

(6-2)

<Comparative Example 3>

Reaction system: to a mixture of the compound represented by the formula (1-1) (25.98 g, 87.43 mmol), 2,5-dichlorobenzophenone (25.44 g, 101.31 mmol), 2,6-dichlorobenzonitrile (1.94 g, 11.26 mmol), triphenylphosphine (3.59 g, 13.70 mmol) and zinc (31.38 g, 480.00 mmol), dehydrated DMAc (137 mL) was added in the atmosphere of nitrogen. This reaction system was heated to 60°C with stirring, and then bis(triphenylphosphine)nickel dichloride (3.60 g, 5.50 mmol) was added to initiate polymerization, followed by stirring at 80°C for 3 hours. The reaction involved heat generation and viscosity increase.

The resultant reaction system solution was diluted with DMAc (268 mL), and the diluted solution was filtered with Celite as a filter aid. To the filtrate, lithium bromide (26.58 g, 306.00 mmol) was added, and the reaction was allowed to proceed at 100°C for 7 hours. After the reaction, the reaction liquid was cooled to room temperature, and the reaction liquid cooled was poured to 3.2 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer powder.

The resultant polymer is presumed to have a structure represented by the following formula (6-3) (q:r = 90:10). The molecular weight and the ion exchange capacity of the resultant polymer are shown in Table 1.

It was suggested by TEM observation that the resultant electrolyte membrane was homogenous as a whole except for locally containing a linear agglomerated phase primarily composed of a hydrophilic segment, and the resultant electrolyte membrane did not contain a definite microphase separation structure.

[Chem. 41]

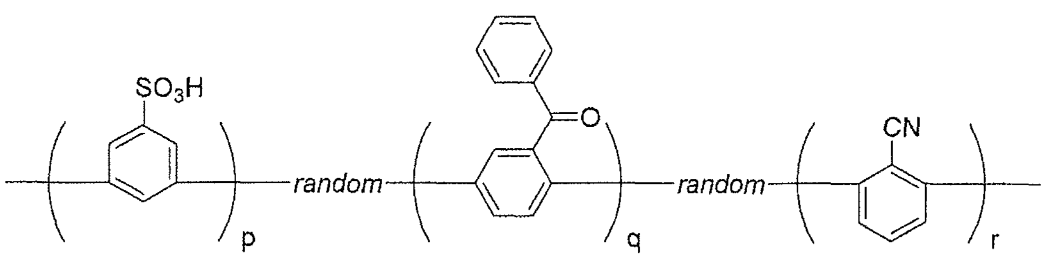

(6-3)

<Comparative Example 4>

Reaction system: to a mixture of the compound represented by the formula (1-1) (42.61 g, 143.36 mmol), the compound represented by the formula (3-3) (19.87 g, 1.89 mmol), 2,5-dichlorobenzophenone (13.75 g, 54.74 mmol),

triphenylphosphine (3.47 g, 13.24 mmol) and zinc (31.38 g, 480.00 mmol), dehydrated DMAc (190 mL) was added in the atmosphere of nitrogen. This reaction system was heated to 60 °C with stirring, and then bis(triphenylphosphine)nickel dichloride (3.90 g, 5.96 mmol) was added to initiate polymerization, followed by stirring at 80°C for 3 hours. The reaction involved heat generation and viscosity increase.

The resultant reaction system solution was diluted with DMAc (449 mL), and the diluted solution was filtered with Celite as a filter aid. To the filtrate, lithium bromide (43.58 g, 501.77 mmol) was added, and the reaction was allowed to proceed at 100°C for 7 hours. After the reaction, the reaction liquid was cooled to room temperature, and the reaction liquid cooled was poured to 5.0 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer powder.

The resultant polymer is presumed to have a structure represented by the following formula (6-4) (q: r = 96.66:3.34, s:t = 75:25). The molecular weight and the ion exchange capacity of the resultant polymer are shown in Table 1.

[Chem. 42]

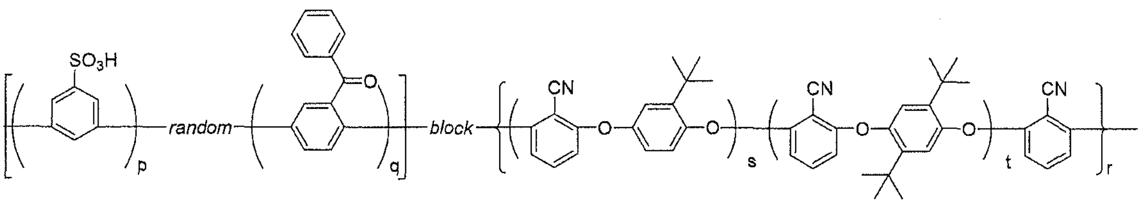

(6−4)

<Example 9>

Addition system: to a mixture of the compound represented by the formula (1-1) (30.49 g, 102.58 mmol) and triphenylphosphine (1.72 g, 6.57 mmol), dehydrated DMAc (75 mL) was added in the atmosphere of nitrogen, to prepare an addition system solution.

Reaction system: to a mixture of the compound represented by the formula (2-1) (23.59 g, 87.67 mmol), 2,6-dichlorobenzonitrile (1.68 g, 9. 74 mmol), triphenylphosphine (1.84 g, 7.01 mmol) and zinc (15.28 g, 233.80 mmol), dehydrated DMAc (67 mL) was added in the atmosphere of nitrogen. This reaction system was heated to 60°C with stirring, and then bis (triphenylphosphine) nickel dichloride (1.53 g, 2.34 mmol) was added to initiate polymerization, followed by stirring at 80°C for 45 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (16.09 g, 246.20 mmol) and bis(triphenylphosphine)nickel dichloride (2.15 g, 3.28 mmol) were added to further promote polymerization, followed by stirring at 80°C for 3 hours. The reaction involved heat generation and viscosity increase.

The resultant solution was diluted with DMAc (287 mL), and the diluted solution was filtered with Celite as a filter aid. To the filtrate, lithium bromide (31. 18 g, 359.05 mmol) was added, and the reaction was allowed to proceed at 100°C for 7 hours. After the reaction, the reaction liquid was cooled to room temperature, and the reaction liquid cooled was poured to 3.4 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-3) (q:r = 90:10). The molecular weight and the ion exchange capacity of the resultant polymer are shown in Table 1.

[Chem. 43]

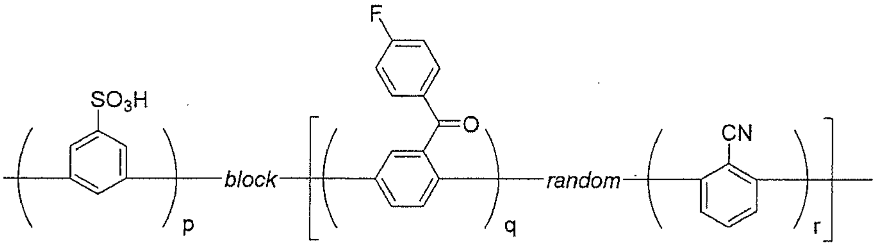

(5-3)

<Example 10>

Addition system: to a mixture of the compound represented by the formula (1-1) (30.54 g, 102.75 mmol) and triphenylphosphine (1.72 g, 6.58 mmol), dehydrated DMAc (75 mL) was added in the atmosphere of nitrogen, to prepare an addition system solution.

Reaction system: to a mixture of 2,5-dichlorobenzophenone (19.54 g, 77.80 mmol), the compound represented by the formula (2-2) (4. 08 g, 9.73 mmol), 2,6-dichlorobenzonitrile (1. 67 g, 9.72 mmol), triphenylphosphine (1.84 g, 7.00 mmol) and zinc (15.26 g, 233.39 mmol), dehydrated DMAc (67 mL) was added in the atmosphere of nitrogen. This reaction system was heated to 60°C with stirring, and then bis (triphenylphosphine) nickel dichloride 1. 53 g (2.33 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (16.12 g, 246.61 mmol) and bis(triphenylphosphine)nickel dichloride (2.15 g, 3.29 mmol) were added to further promote polymerization, followed by stirring at 80°C for 3 hours. The reaction involved heat generation and viscosity increase.

The resultant solution was diluted with DMAc (288 mL), and the diluted solution was filtered with Celite as a filter aid. To the filtrate, lithium bromide (31.23 g, 359. 64 mmol) was added, and the reaction was allowed to proceed at 100°C for 7 hours. After the reaction, the reaction liquid was cooled to room temperature, and the reaction liquid cooled was poured to 3.4 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-4) (q:u:r = 80:10:10). The molecular weight and the ion exchange capacity of the resultant polymer are shown in Table 1.

[Chem. 44]

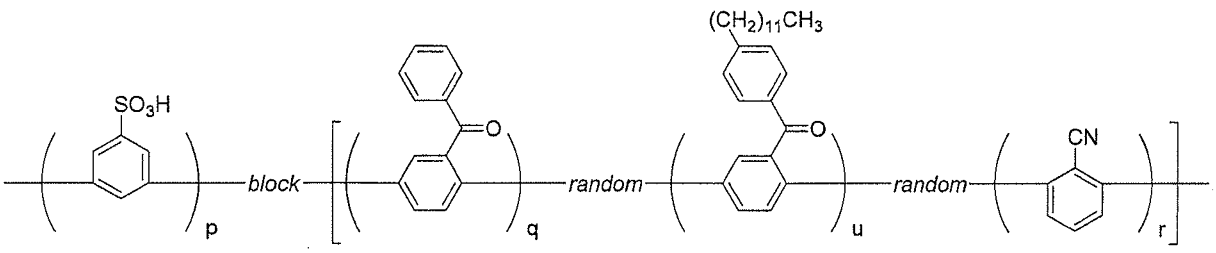

(5-4)

In the formula (5-4), the structural unit derived from 2,5-dichlorobenzophenone, the structural unit derived from 2, 6-dichlorobenzonitrile and the structural unit derived from the compound represented by the formula (2-2) each in parenthesis [ ] are shown to be randomly copolymerized with one another, and the order of bonding these structural units is not limited to the order illustrated in the formula (5-4). That is, a structural unit bonded to the structural unit derived

from the compound represented by the formula (1-1) may be the structural unit derived from 2,5-dichlorobenzophenone, the structural unit derived from 2,6-dichlorobenzonitrile, or the structural unit derived from the compound represented by the formula (2-2).

In the specification of the present application, similar illustrations are understood to mean the above.

<Example 11>

Addition system: to a mixture of the compound represented by the formula (1-1) (29.71 g, 99.97 mmol) and triphenylphosphine (1.68 g, 6.40 mmol), dehydrated DMAc (73 mL) was added in the atmosphere of nitrogen, to prepare an addition system solution.

Reaction system: to a mixture of 2,5-dichlorobenzophenone (20.10 g, 80.02 mmol), the compound represented by the formula (2-3) (3.17 g, 10.00 mmol), 2,6-dichlorobenzonitrile (1.72 g, 10.00 mmol), triphenylphosphine (1.89 g, 7.20 mmol) and zinc (15.69 g, 240.06 mmol), dehydrated DMAc (66 mL) was added in the atmosphere of nitrogen. This reaction system was heated to 60 °C with stirring, and then bis (triphenylphosphine) nickel dichloride (1.57 g, 2.40 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (15.68 g, 239.94 mmol) and bis(triphenylphosphine)nickel dichloride (2.09 g, 3.20 mmol) were added to further promote polymerization, followed by stirring at 80°C for 3 hours. The reaction involved heat generation and viscosity increase.

The resultant solution was diluted with 279 mL of DMAc, and the diluted solution was filtered with Celite as a filter aid. To the filtrate, lithium bromide (30. 39 g, 349. 91 mmol) was added, and the reaction was allowed to proceed at 100 ° C for 7 hours. After the reaction, the reaction liquid was cooled to room temperature, and the reaction liquid cooled was poured to 3.3 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-5) (q:u:r = 80:10:10). The molecular weight and the ion exchange capacity of the resultant polymer are shown in Table 1.

[Chem. 45]

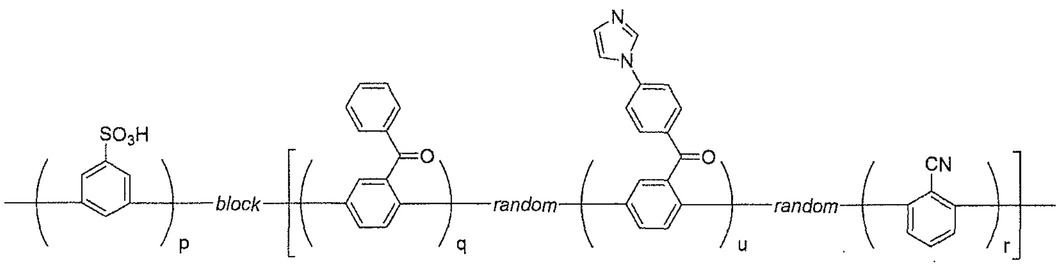

(5-5)

<Example 12>

Addition system: to a mixture of the compound represented by the formula (1-1) (34.69 g, 116.71 mmol) and triphenylphosphine (1.96 g, 7.47 mmol), dehydrated DMAc (85 mL) was added in the atmosphere of nitrogen, to prepare an addition system solution.

Reaction system: to a mixture of 2,5-dichlorobenzophenone (19.87 g, 79.12 mmol), m-dichlorobenzene (0.61 g, 4.16 mmol), triphenylphosphine (1.57 g, 6.00 mmol) and zinc (13.07 g, 199.89 mmol), dehydrated DMAc (54 mL) was added in the atmosphere of nitrogen. This reaction system was heated to 60°C with stirring, and then bis(triphenylphosphine)nickel dichloride (1.31 g, 2.00 mmol) was added to initiate polymerization, followed by stirring at 80°C for 20 minutes. A reaction system solution was thus obtained. The reaction involved heat generation and viscosity increase.

To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (18.31 g, 280.11 mmol) and bis(triphenylphosphine)nickel dichloride (2.44 g, 3.73 mmol) were added to further promote polymerization, followed by stirring at 80°C for 3 hours. The reaction involved heat generation and viscosity increase.

The resultant solution was diluted with DMAc (283 mL), and the diluted solution was filtered with Celite as a filter aid. To the filtrate, lithium bromide (35. 48 g, 408.50 mmol) was added, and the reaction was allowed to proceed at 100 ° C for 7 hours. After the reaction, the reaction liquid was cooled to room temperature, and the reaction liquid cooled was poured to 3.3 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-6) (q:r = 95:5). The molecular weight and the ion exchange capacity of the resultant polymer are shown in Table 1.

[Chem. 46]

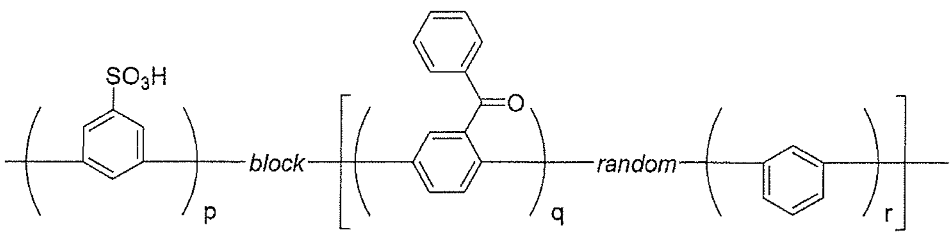

(5−6)

<Example 13>

Addition system: to a mixture of the compound represented by the formula (1-1) (29.82 g, 100.34 mmol) and triphenylphosphine (1.68 g, 6.42 mmol), dehydrated DMAc (73 mL) was added in the atmosphere of nitrogen, to prepare an addition system solution.

Reaction system: to a mixture of 2,5-dichlorobenzophenone (22.52 g, 89.70 mmol), the compound represented by (3-1) (2.50 g, 9.97 mmol), triphenylphosphine (1.88 g, 7.18 mmol) and zinc (15.64 g, 239.19 mmol), dehydrated DMAc (67 mL) was added in the atmosphere of nitrogen. This reaction system was heated to 60°C with stirring, and then bis (triphenylphosphine) nickel dichloride (1.56 g, 2.39 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (15.74 g, 240.81 mmol) and bis(triphenylphosphine)nickel dichloride (2.10 g, 3.21 mmol) were added to further promote polymerization, followed by stirring at 80°C for 3 hours. The reaction involved heat generation and viscosity increase.

The resultant solution was diluted with DMAc 280 mL, and the diluted solution was filtered with Celite as a filter aid. To the filtrate, lithium bromide (33.63 g, 351.19 mmol) was added, and the reaction was allowed to proceed at 100 ° C for 7 hours. After the reaction, the reaction liquid was cooled to room temperature, and the reaction liquid cooled was poured to 3.3 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-7) (q:r = 90:10). The molecular weight and the ion exchange capacity of the resultant polymer are shown in Table 1.

[Chem. 47]

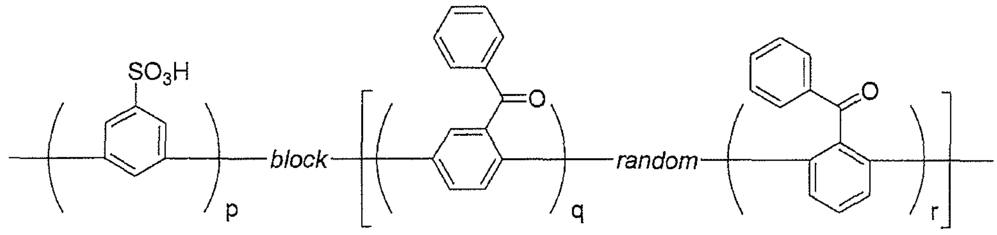

(5-7)

<Example 14>

Addition system 1: to 2,5-dichlorobenzophenone (18.75 g, 74.66 mmol), dehydrated DMAc (40 mL) was added in the atmosphere of nitrogen, to prepare an addition system solution 1.

Addition system 2: to a mixture of the compound represented by the formula (1-1) (31. 70 g, 106. 68 mmol) and triphenylphosphine (1.79 g, 6.83 mmol), dehydrated DMAc (78 mL) was added in the atmosphere of nitrogen, to prepare an addition system solution 2.

Reaction system: to a mixture of the compound represented by the formula (3-2) (6.96 g, 18.66 mmol), triphenylphosphine (1.76 g, 6.72 mmol) and zinc (14.64 g, 223.97 mmol), dehydrated DMAc (28 mL) was added in the atmosphere of nitrogen. This reaction system was heated to 60°C with stirring, and then bis (triphenylphosphine) nickel dichloride (1.47 g, 2.24 mmol) was added to initiate polymerization, followed by stirring at 80°C for 60 minutes.

To the resultant reaction system solution, the addition system solution 1 was added in the atmosphere of nitrogen, and the mixture was stirred at 80°C for 20 minutes. The reaction involved heat generation and viscosity increase. To measure the molecular weight of the resultant oligomer, a small amount of the resultant solution was sampled.

To the resultant solution, the addition system solution 2 was added in the atmosphere of nitrogen. The resultant system was heated to 60°C with stirring, and then zinc (16.74 g, 256.03 mmol) and bis(triphenylphosphine)nickel dichloride (2.23 g, 3.41 mmol) were added to further promote polymerization, followed by stirring at 80°C for 3 hours. The reaction involved heat generation and viscosity increase.

The resultant solution was diluted with DMAc (300 mL), and the diluted solution was filtered with Celite as a filter aid. To the filtrate, lithium bromide (35. 75 g, 373. 37 mmol) was added, and the reaction was allowed to proceed at 100°C for 7 hours. After the reaction, the reaction liquid was cooled to room temperature, and the reaction liquid cooled was poured to 3.5 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-8) (q:r = 80:20). The molecular weight and the ion exchange capacity of the resultant polymer are shown in Table 1.

[Chem. 48]

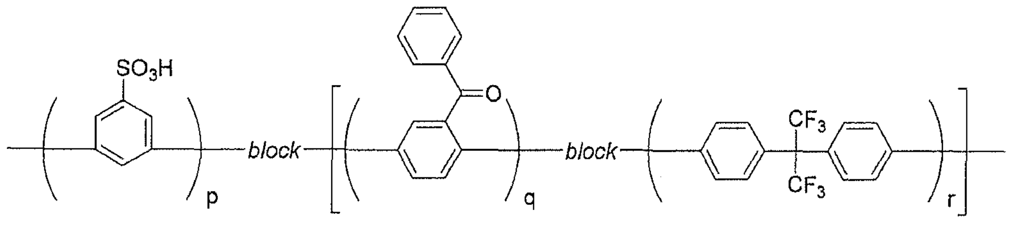

(5-8)

<Example 15>

Addition system: to a mixture of the compound represented by the formula (1-2) (42. 57 g, 106.09 mmol) and triphenylphosphine (1.78 g, 6.79 mmol), dehydrated DMAc (104 mL) was added in the atmosphere of nitrogen, to prepare

an addition system solution.

Reaction system: to a mixture of 2,5-dichlorobenzophenone (21.22 g, 84.52 mmol), 2,6-dichlorobenzonitrile (1.62 g, 9.39 mmol), triphenylphosphine (1.77 g, 6.76 mmol) and zinc (14.73 g, 225.40 mmol), dehydrated DMAc (61 mL) was added in the atmosphere of nitrogen. This reaction system was heated to 60°C with stirring, and then bis(triphenylphosphine)nickel dichloride (1.47 g, 2.25 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (16.64 g, 254.60 mmol) and bis(triphenylphosphine)nickel dichloride (2.22 g, 3.39 mmol) were added to further promote polymerization, followed by stirring at 80°C for 3 hours. The reaction involved heat generation and viscosity increase.

The resultant solution was diluted with DMAc (363 mL), and the diluted solution was filtered with Celite as a filter aid. To the filtrate, lithium bromide (32.25 g, 371.30 mmol) was added, and the reaction was allowed to proceed at 100°C for 7 hours. After the reaction, the reaction liquid was cooled to room temperature, and the reaction liquid cooled was poured to 4.1 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-9) (q:r = 90:10). The molecular weight and the ion exchange capacity of the resultant polymer are shown in Table 1.

[Chem. 49]

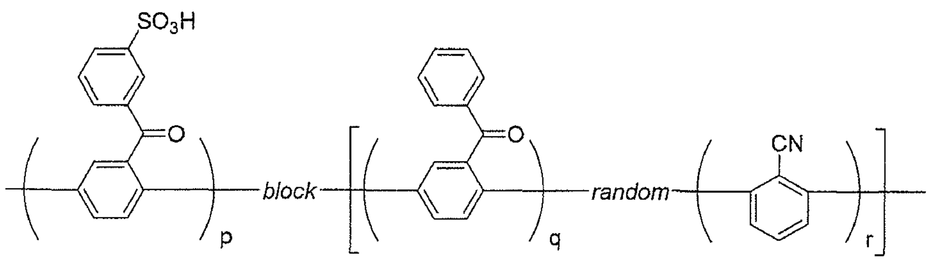

(5−9)

<Example 16>

Addition system: to a mixture of the compound represented by the formula (1-1) (27.96 g, 94.06 mmol), the compound represented by (1-3) (2. 72 g, 7.32 mmol), the compound represented by (2-3) (0.99 g, 3.14 mmol) and triphenylphosphine (1.75 g, 6.69 mmol), dehydrated DMAc (77 mL) was added in the atmosphere of nitrogen, to prepare an addition system solution.

Reaction system: to a mixture of 2,5-dichlorobenzophenone (21.58 g, 85.94 mmol), 2,6-dichlorobenzonitrile (1.64 g, 9.55 mmol), triphenylphosphine (1.80 g, 6.87 mmol) and zinc (14.98 g, 229.17 mmol), dehydrated DMAc (62 mL) was added in the atmosphere of nitrogen. This reaction system was heated to 60°C with stirring, and then bis(triphenylphosphine)nickel dichloride (1.50 g, 2.29 mmol) was added to initiate polymerization, followed by stirring at 80°C for 20 minutes. A reaction system solution was thus obtained. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (16.40 g, 250.83 mmol) and bis(triphenylphosphine)nickel dichloride (2.19 g, 3.34 mmol) were added to further promote polymerization, followed by stirring at 80°C for 3 hours. The reaction involved heat generation and viscosity increase.

The resultant solution was diluted with DMAc (281 mL), and the diluted solution was filtered with Celite as a filter aid. To the filtrate, lithium bromide (30. 82 g, 354. 83 mmol) was added, and the reaction was allowed to proceed at 100 ° C for 7 hours. After the reaction, the reaction liquid was cooled to room temperature, and the reaction liquid cooled was poured to 3.3 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-10) (p:v:u = 90:7:3, q:r = 90:10). The molecular weight and the ion exchange capacity of the resultant polymer are shown in Table 1.

[Chem. 50]

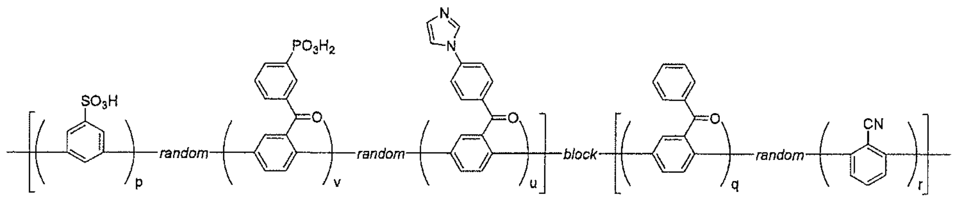

(5−10)

<Example 17>

Addition system: to a mixture of the compound represented by the formula (1-1) (29.23 g, 98.34 mmol), 2,5-dichlorobenzophenone (2.74 g, 10.93 mmol) and triphenylphosphine (1. 83 g, 6. 99 mmol), dehydrated DMAc 78 mL was added in the atmosphere of nitrogen, to prepare an addition system solution.

Reaction system: to a mixture of 2,5-dichlorobenzophenone (20.51 g, 81.66 mmol), 2,6-dichlorobenzonitrile (1.56 g, 9.07 mmol), triphenylphosphine (1.71 g, 6.53 mmol) and zinc (14.23 g, 217.76 mmol), dehydrated DMAc (59 mL) was added in the atmosphere of nitrogen. This reaction system was heated to 60°C with stirring, and then bis(triphenylphosphine)nickel dichloride (1.42g, 2.18 mmol) was added to initiate polymerization, followed by stirring at 80°C for 25 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (17.14 g, 262.24 mmol) and bis(triphenylphosphine)nickel dichloride (2.29 g, 3.50 mmol) were added to further promote polymerization, followed by stirring at 80°C for 3 hours. The reaction involved heat generation and viscosity increase.

The resultant solution was diluted with DMAc (274 mL), and the diluted solution was filtered with Celite as a filter aid. To the filtrate, lithium bromide (33.21 g, 382.44 mmol) was added, and the reaction was allowed to proceed at 100°C for 7 hours. After the reaction, the reaction liquid was cooled to room temperature, and the reaction liquid cooled was poured to 3.2 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-11) (p:v = 90:10, q:r = 90:10). The molecular weight and the ion exchange capacity of the resultant polymer are shown in Table 1.

[Chem. 51]

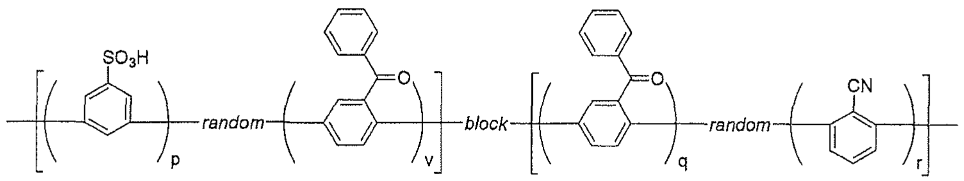

(5−11)

<Example 18>

A 200 mL three-neck flask equipped with a stirrer, a thermometer, a Dean-stark tube, a nitrogen-introducing tube and a cooling tube was charged with dipotassium 4,4'-difluorodiphenyl sulfone-3,3'-disulfonate (11.68 g, 23.8 mmol), potassium hydroquinone sulfonate (5. 98 g, 26.2 mmol) and potassium carbonate (4.71 g, 34.0 mmol). After the flask was purged with nitrogen, sulfolane (30 mL) and toluene (15 mL) were added, and the mixture was stirred. The reaction

liquid was heat refluxed in oil bath at 150°C. Water generated by the reaction was trapped by the Dean-stark tube. Three hours thereafter, almost no water was recognized to be generated, at which time, toluene was removed through the Dean-stark tube outside of the system. The reaction temperature was gradually increased to a temperature ranging from 160 to 170°C, and stirring was carried out for 5 hours, and then 2, 6-dichlorobenzonitrile (2.05 g, 11. 9 mmol) was added and further allowed to react for 5 hours.

The reaction liquid was allowed to cool, and was added to acetone (800 mL), to obtain a liquid containing a solidified product. The solidified product precipitated was filtered, and the residue was put in acetone (800 mL), which was stirred for 1 hour, and filtered. The residue was again put in acetone (800 mL), which was stirred for 1 hour, and filtered. The residue was vacuum dried at 80°C, to obtain a mixture of an oligomer represented by the following formula (1-4) and an inorganic salt. Mn as measured by GPC was 6,000.

[Chem. 52]

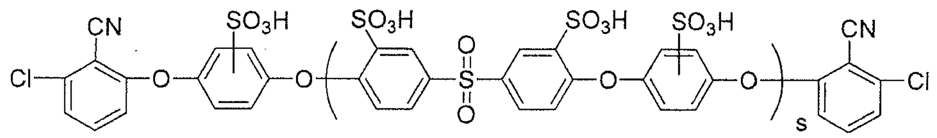

(1－4)

Reaction system: to a mixture composed of the whole amount of the mixture of the oligomer represented by the formula (1-4) and an inorganic salt obtained above, 2,5-dichlorobenzophenone (17.73 g, 70.62 mmol), 2,6-dichlorobenzonitrile (1.35 g, 7.85 mmol), triphenylphosphine (1.36 g, 5.17 mmol) and zinc (12.68 g, 194.04 mmol), dehydrated DMAc (95 mL) was added in the atmosphere of nitrogen. This reaction system was heated to 60°C with stirring, and then bis(triphenylphosphine)nickel dichloride (1. 69 g, 2.59 mmol) was added to initiate polymerization, followed by stirring at 80°C for 3 hours. The reaction involved heat generation and viscosity increase.

The resultant reaction system solution was diluted with DMAc (208 mL), and the diluted solution was filtered with Celite as a filter aid. The filtrate was poured to 2.7 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-12) (q:r = 90:10). The molecular weight and the ion exchange capacity of the resultant polymer are shown in Table 1.

[Chem. 53]

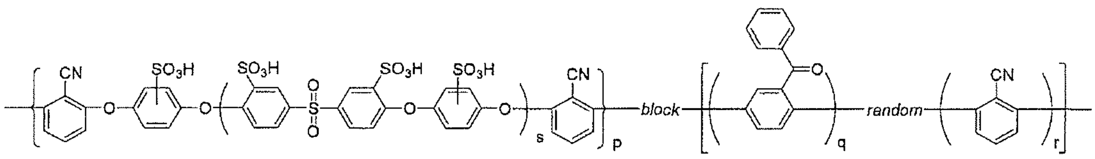

(5－1 2)

<Example 19>

Addition system: to a mixture of the compound represented by the formula (1-1) (35.06 g, 117. 97 mmol) and triphenylphosphine (1.98 g, 7.55 mmol), dehydrated DMAc (86 mL) was added in the atmosphere of nitrogen, to prepare an addition system solution.

Reaction system: to a mixture of 2,5-dichlorobenzophenone (20.36 g, 81.09 mmol), the compound represented by the formula (3-3) (9.81 g, 0.93 mmol), triphenylphosphine (1.55g, 5. 91 mmol) and zinc (12.87 g, 196.86 mmol), dehydrated DMAc (80 mL) was added in the atmosphere of nitrogen. This reaction system was heated to 60°C with stirring, and then bis(triphenylphosphine)nickel dichloride (1.29 g, 1.97 mmol) was added to initiate polymerization, followed by stirring at 80°C for 25 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (18.51 g, 283.14 mmol) and bis(triphenylphosphine)nickel dichloride (2.47 g, 3.78 mmol) were added to further promote polymerization, followed by stirring at 80°C for 3 hours. The reaction involved heat generation and viscosity increase.

The resultant solution was diluted with DMAc (360 mL), and the diluted solution was filtered with Celite as a filter aid. To the filtrate, lithium bromide (35.86 g, 412. 91 mmol) was added, and the reaction was allowed to proceed at 100°C for 7 hours. After the reaction, the reaction liquid was cooled to room temperature, and the reaction liquid cooled was poured to 4.1 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-14) (q:r = 98.86:1.14, s:t = 75:25). The molecular weight and the ion exchange capacity of the resultant polymer are shown in Table 1.

[Chem. 54]

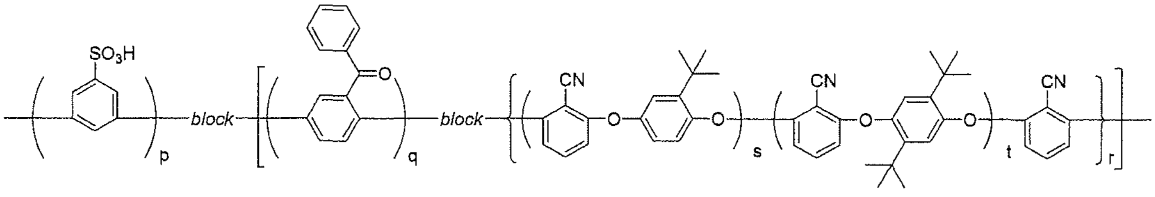

(5-14)

<Example 20>

Addition system: to a mixture of 2,5-dichlorobenzophenone (20.36 g, 81. 09 mmol) and triphenylphosphine (1.53 g, 5.84 mmol), dehydrated DMAc (54 mL) was added in the atmosphere of nitrogen, to prepare an addition system solution.

Reaction system: to a mixture of the compound represented by the formula (1-1) (35.06 g, 117.97 mmol), the compound represented by the formula (3-3) (9.81 g, 0.93 mmol), triphenylphosphine (2.00 g, 7.61 mmol) and zinc (18.66 g, 285.38 mmol), dehydrated DMAc (110 mL) was added in the atmosphere of nitrogen. This reaction system was heated to 60°C with stirring, and then bis(triphenylphosphine)nickel dichloride (2.49 g, 3.81 mmol) was added to initiate polymerization, followed by stirring at 80°C for 30 minutes, to obtain a reaction system solution. The reaction involved heat generation and viscosity increase. To measure the molecular weight of the resultant oligomer, a small amount of the reaction system solution was sampled.

To the resultant reaction system solution, the addition system solution was added in the atmosphere of nitrogen. The resultant system was heated to 60°C with stirring, and then zinc (12.72 g, 194.62 mmol) and bis(triphenylphosphine)nickel dichloride (1.27 g, 1.95 mmol) were added to further promote polymerization, followed by stirring at 80°C for 3 hours. The reaction involved heat generation and viscosity increase.

The resultant solution was diluted with DMAc (362 mL), and the diluted solution was filtered with Celite as a filter aid. To the filtrate, lithium bromide (35. 86 g, 412. 91 mmol) was added, and the reaction was allowed to proceed at 100 ° C for 7 hours. After the reaction, the reaction liquid was cooled to room temperature, and the reaction liquid cooled was poured to 4.1 L of water for solidification. A solidified product was washed and filtered with acetone four times with stirring. The washed product was washed and filtered with an aqueous 1N sulfuric acid solution seven times with stirring. Further, the washed product was washed and filtered with deionized water until the pH of the liquid after washing reached 5 or more. The washed product finally obtained was dried at 75°C for 24 hours, to obtain a brown-colored polymer (aromatic copolymer) powder.

The resultant polymer is presumed to have a structure represented by the following formula (5-15) (q:v = 98.86:1.14, s:t = 75:25). The molecular weight and the ion exchange capacity of the resultant polymer are shown in Table 1.

[Chem. 55]

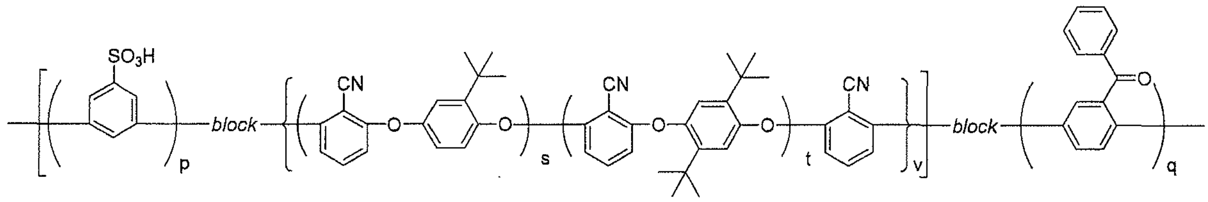

(5-15)

[Evaluation Results of Electrolyte Membrane]

[Table 1]

Table 1

| | Hydrophobic Segment | | | Hydrophilic Segment | Aromatic Copolymer | | |
|---|---|---|---|---|---|---|---|
| | Compositional Ratio (Note 1) | | Molecular Weight (Note 2) | Molecular Weight | Molecular Weight | | IEC |
| | mol% | wt% | Mn | Mn | Mw | Mn | meq/g |
| Example 1 | 90.0 | 94.1 | 6700[a] | 3400 | 120000 | 52700 | 2.30 |
| Example 2 | 90.0 | 94.1 | 15700[a] | 6400 | 116000 | 52400 | 2.28 |
| Example 3 | 95.0 | 97.1 | 6400[a] | 3200 | 142000 | 59800 | 2.25 |
| Example 4 | 97.0 | 98.3 | 9600[a] | 5900 | 136000 | 60500 | 2.67 |
| Example 5 | 97.0 | 98.3 | 5000[a] | 3700 | 108000 | 52000 | 2.81 |
| Example 6 | 96.7 | 33.3 | 4300[b] 10500[c] | 4100 | 113000 | 47100 | 2.35 |
| Example 7 | 99.6 | 80.0 | 4300[b] 10500[c] | 4500 | 135000 | 55700 | 2.94 |
| Example 8 | 99.8 | 90.0 | 3800[b] 10500[c] | 4000 | 137000 | 58300 | 3.02 |
| Comp. Ex. 1 | 100.0 | 100.0 | 10300[b] | 2900 | 108000 | 42400 | 1.67 |
| Comp. Ex. 2 | 0.0 | 0.0 | 10500[c] | 5400 | 169000 | 73100 | 2.35 |
| Comp. Ex. 3 | 90.0 | 94.1 | - | - | 92000 | 46000 | 2.31 |
| Comp. Ex. 4 | 96.7 | 33.3 | - | - | 129000 | 62300 | 2.21 |
| Example 9 | 90.0 | 94.6 | 13600[a] | 5200 | 115000 | 53700 | 2.12 |
| Example 10 | 90.0 | 97.0 | 7300[a] | 3700 | 131000 | 61100 | 2.30 |
| Example 11 | 90.0 | 94.3 | 6200[a] | 3000 | 124000 | 56000 | 2.23 |
| Example 12 | 95.0 | 97.8 | 5300[a] | 2500 | 110000 | 45900 | 2.20 |
| Example 13 | 90.0 | 90.0 | 6100[a] | 3000 | 117000 | 49800 | 2.25 |
| Example 14 | 80.0 | 84.3 | 7000[a] | 2700 | 82000 | 36200 | 2.01 |
| Example 15 | 90.0 | 94.1 | 6500[a] | 9000 | 193000 | 70600 | 2.31 |
| Example 16 | 90.0 | 94.1 | 7000[a] | 3700 | 149000 | 65000 | 2.29 |
| Example 17 | 90.0 | 94.1 | 10000[a] | 4900 | 150000 | 50000 | 2.35 |
| Example 18 | 90.0 | 94.1 | 21700[a] | 6000 | 100000 | 40000 | 2.00 |
| Example 19 | 98.9 | 60.0 | 15000[a] | 6900 | 170000 | 60000 | 2.35 |

(continued)

| | Hydrophobic Segment | | | Hydrophilic Segment | Aromatic Copolymer | | |
|---|---|---|---|---|---|---|---|
| | Compositional Ratio (Note 1) | | Molecular Weight (Note 2) | Molecular Weight | Molecular Weight | | IEC |
| | mol% | wt% | Mn | Mn | Mw | Mn | meq/g |
| Example 20 | 98.9 | 60.0 | -(b)<br>10500(c) | - | 140000 | 50000 | 2.30 |

Note 1: Ratio of structural unit (2) provided that the structural unit (2) and the structural unit (3) total 100%
Note 2:
(a): Molecular weight of polymer composed of the structural units (2) and (3)
(b): Molecular weight of polymer consisting only of the structural units (2)
(c): Molecular weight of polymer consisting only of the structural units (3)

Table 2

| | Hot Water Test (95°C, 24h) | | Specific Resistance (70° C) | | Tensile Test | |
|---|---|---|---|---|---|---|
| | Swell (%) | Shrinkage (%) | 65%RH ('Ωcm) | 30%RH ('Ωcm) | Breaking Strength (MPa) | Elongation at Break (%) |
| Example 1 | 109 | 101 | 13.2 | 59.8 | 116 | 19 |
| Example 2 | 106 | 99 | 17.3 | 68.9 | 116 | 15 |
| Example 3 | 105 | 100 | 15.9 | 70.9 | 131 | 13 |
| Example 4 | 107 | 99 | 10.5 | 44.4 | 110 | 9 |
| Example 5 | 110 | 100 | 7.1 | 32.0 | 102 | 8 |
| Example 6 | 114 | 100 | 12.2 | 60.5 | 81 | 30 |
| Example 7 | 125 | 102 | 8.9 | 41.2 | 84 | 18 |
| Example 8 | 123 | 103 | 7.8 | 36.0 | 101 | 25 |
| Comp. Ex. 1 | 102 | 100 | 16.8 | 73.7 | 100 | 3 |
| Comp. Ex. 2 | 115 | 99 | 12.0 | 62.0 | 80 | 46 |
| Comp. Ex. 3 | 128 | 103 | 24.1 | 165.5 | 83 | 24 |
| Comp. Ex. 4 | 117 | 99 | 12.6 | 114.2 | 60 | 47 |
| Example 9 | 106 | 101 | 14.3 | 63.3 | 112 | 12 |
| Example 10 | 110 | 100 | 14.2 | 64.1 | 126 | 24 |
| Example 11 | 113 | 99 | 15.4 | 71.0 | 111 | 20 |
| Example 12 | 106 | 104 | 12.4 | 51.7 | 115 | 8 |
| Example 13 | 108 | 101 | 12.1 | 54.6 | 108 | 14 |
| Example 14 | 118 | 110 | 14.1 | 58.3 | 94 | 7 |
| Example 15 | 103 | 98 | 12.1 | 166.4 | 130 | 5 |
| Example 16 | 110 | 100 | 17.4 | 95.7 | 114 | 21 |
| Nafion NRE211(Note) | 121 | 98 | 16.7 | 85.1 | 50 | 197 |

Note: Perfluoropolymer-based electrolyte membrane manufactured by DuPont

As shown in Table 2, by using the aromatic copolymer comprising the specific structure, an electrolyte membrane can be obtained which has high proton conductivity at high humidity and at low humidity, and has reduced swelling in hot water and reduced shrinkage in drying, and has high mechanical strength and high dimension stability, as well as sufficient toughness.

As shown in Comparative Example 1, the aromatic copolymer, when not containing the structural unit (3), has an elongation at break of tensile test that is deteriorated compared with the aromatic copolymer containing the structural unit (3) shown in Example 1.

As shown in Comparative Example 3, the aromatic random copolymer in which the structural unit (1) is randomly copolymerized with the structural units (2) and (3) exhibits lower proton conductivity and is inferior in terms of swelling in hot water, as compared with the aromatic block copolymer in which the structural unit (1) is block copolymerized with the structural units (2) and (3) shown in Example 1.

[Table 3]

Table 3

| | Hydrophobic Segment Ether Bond Compositional Ratio (Note) | Hydrogen Peroxide Exposure Test Molecular Weight Retentivity | He gas permeability |
|---|---|---|---|
| | % | % | $10^{-10}cm^3 \cdot cm/cm^2/sec/cmHg$ |
| Example 1 | 0 | 84 | 5.0 |
| Example 2 | 0 | 85 | 4.9 |
| Example 3 | 0 | 89 | 5.3 |
| Example 4 | 0 | 80 | 5.8 |
| Example 5 | 0 | 82 | 6.1 |
| Example 6 | 72 | 56 | 8.9 |
| Example 7 | 24 | 78 | 6.5 |
| Example 8 | 13 | 84 | 5.9 |
| Comp. Ex. 1 | 0 | 91 | 5.2 |
| Comp. Ex. 2 | 100 | 49 | 10.2 |
| Comp. Ex. 3 | 0 | 69 | 7.2 |
| Comp. Ex. 4 | 72 | 39 | 11.8 |
| Note: Ratio of main chain Ph-O-Ph bond to the main chain bonds in the hydrophobic segment (sum of main chain Ph-O-Ph bond and main chain Ph-Ph bond) | | | |

As shown in Table 3, when the aromatic copolymer contains the structural unit (2), an electrolyte membrane can be obtained which has less amount of the main chain ether bond contained in the hydrophobic segment and which is excellent in radical resistance and has suppressed gas permeation.

From the comparison of Example 1 with Comparative Example 3, and the comparison of Example 6 with Comparative Example 4, the molecular weight retentivity in hydrogen peroxide exposure test was reduced when the aromatic copolymer was a random copolymer, and was increased when the aromatic copolymer was a block copolymer;

and the He gas permeability was increased when the aromatic copolymer was a random copolymer, and was reduced when the aromatic copolymer was a block copolymer.

[Table 4]

Table 4

| | Softening Temperature °C |
|---|---|
| Example 1 | 160 |
| Example 2 | 156 |
| Example 3 | 156 |
| Example 4 | 150 |
| Example 5 | 166 |
| Example 6 | 206 |
| Example 7 | 173 |
| Example 8 | 168 |
| Comp. Ex. 1 | 148 |
| Comp. Ex. 2 | 214 |
| Comp. Ex. 3 | 184 |
| Comp. Ex. 4 | 207 |

As shown in Table 4, by using the aromatic copolymer comprising the structural unit (2) having a side chain substituent such as a benzoyl group, an electrolyte membrane with lowered softening temperature can be obtained.

From the comparison of Example 1 and Comparative Example 3, the softening temperature was increased when the aromatic copolymer was a random copolymer, and was reduced when aromatic copolymer was a block copolymer.

## Claims

**1.** An aromatic copolymer comprising a hydrophilic segment (A) and a hydrophobic segment (B), wherein
the hydrophilic segment (A) comprises a structural unit (1) having a proton conductive group, and
the hydrophobic segment (B) comprises at least one structural unit selected from the group consisting of a structural unit (2) and a structural unit (3),
wherein the structural unit (2) is a divalent structural unit having an aromatic ring and no proton conductive groups and having two bonding sites at the para-position of one ring included in the aromatic ring, and
the structural unit (3) is a divalent structural unit having a benzene ring and is a structural unit different from the structural unit (2),
the hydrophobic segment (B) in its entirety contained in the aromatic copolymer comprising both the structural unit (2) and the structural unit (3).

**2.** The aromatic copolymer according to claim 1, wherein the structural unit (2) is a structural unit represented by the following formula (2),

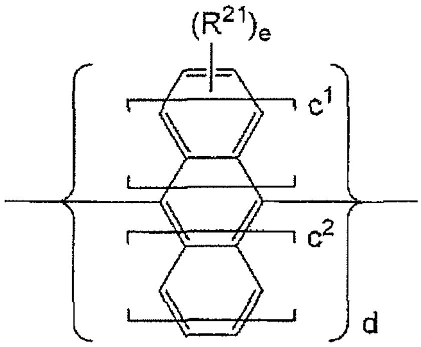

· · · (2)

wherein a replaceable carbon atom constituting an aromatic ring may be replaced with a nitrogen atom, $R^{21}$ is independently a halogen atom, a hydroxyl group, a nitro group, a nitrile group or $R^{22}$-E- (E is a direct bond, -O-, -S-, -CO-, $-SO_2-$, -CONH-, -COO-, $-CF_2-$, $-CH_2-$, $-C(CF_3)_2-$, or $-C(CH_3)_2-$), and $R^{22}$ is an alkyl group, a halogenated alkyl group, an alkenyl group, an aryl group, a halogenated aryl group or a nitrogen-containing heterocyclic ring, wherein a hydrogen atom of these groups may be replaced with at least one group selected from the group consisting of a hydroxyl group, a nitro group, a nitrile group and $R^{22}$-E-), and multiple $R^{21}$s may be bonded to one another to form a ring structure,
$c^1$ and $c^2$ are each independently an integer of 0, or 1 or greater,
d is an integer of 1 or greater, and
e is independently an integer of 0 to $(2c^1+2c^2+4)$.

**3.** The aromatic copolymer according to claim 1 or 2, wherein the structural unit (3) is at least one structural unit selected from the group consisting of structural units represented by the following formula (3a) and structural units represented by the following formula (3b),

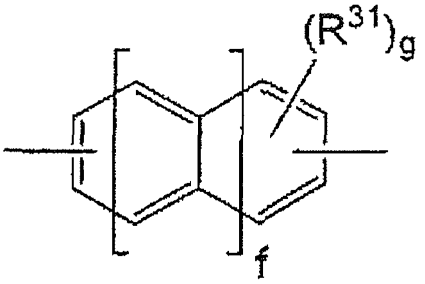

· · · (3 a)

wherein a replaceable carbon atom constituting an aromatic ring may be replaced with a nitrogen atom,
$R^{31}$ is independently a halogen atom, a hydroxyl group, a nitro group, a nitrile group, a proton conductive group, or $R^{22}$-E- (E and $R^{22}$ are each independently synonymous with E and $R^{22}$ in the formula (2), respectively), and multiple $R^{31}$s may be bonded to one another to form a ring structure,
f is an integer of 0, or 1 or greater, and
g is an integer of 0 to (2f+4); and

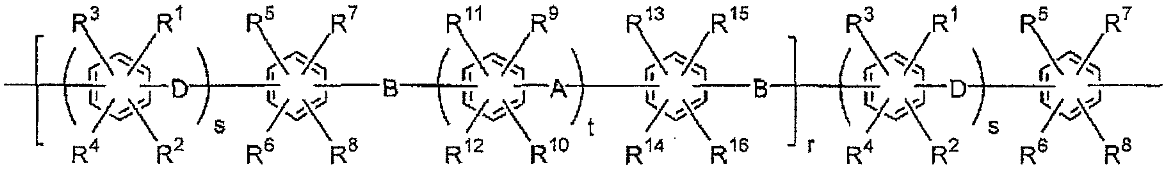

· · · (3 b)

wherein A and D are each independently a direct bond, -O-, -S-, -CO-, $-SO_2-$, -SO-, -CONH-, -COO-, $-(CF_2)_i-$ (i is

an integer of 1 to 10), $-(CH_2)_j-$ (j is an integer of 1 to 10), $-CR'_2-$ (R' is an aliphatic hydrocarbon group, an aromatic hydrocarbon group or a halogenated hydrocarbon group), a cyclohexylidene group, or a fluorenylidene group,
B is independently an oxygen atom or a sulfur atom,
$R^1$ to $R^{16}$ are each independently a hydrogen atom, a halogen atom, a hydroxyl group, a nitro group, a nitrile group, a proton conductive group, or $R^{22}$-E- (E and $R^{22}$ are each independently synonymous with E and $R^{22}$ in the structural unit (2), respectively); and multiple groups of $R^1$ to $R^{16}$ may be bonded to one another to form a ring structure,
s and t are each independently an integer of 0 to 4, and
r is an integer of 0, or 1 or greater.

4. The aromatic copolymer according to any one of claims 1 to 3, wherein the hydrophobic segment (B) comprises the structural unit (2) and the structural unit (3), and the structural unit (3) is a structural unit represented by the formula (3a).

5. The aromatic copolymer according to any one of claims 1 to 4, wherein the structural unit (1) is a divalent structural unit having a proton conductive group and an aromatic ring and having two bonding sites, wherein the two bonding sites are bonded to one aromatic ring, or one of the two bonding sites is bonded to one aromatic ring (a) and the other bonding site is bonded to an aromatic ring (b) that is bonded to the aromatic ring (a) via a single bond or via at least one aromatic ring.

6. The aromatic copolymer according to any one of claims 1 to 5, wherein the structural unit (1) is a structural unit represented by the following formula (1),

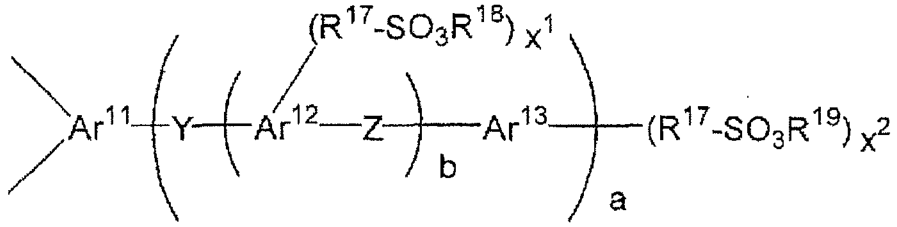

・・・(1)

wherein $Ar^{11}$, $Ar^{12}$ and $Ar^{13}$ are each independently a benzene ring, a condensed aromatic ring, or an aromatic group having a nitrogen-containing heterocyclic ring, which may be replaced with a halogen atom, a C1-20 monovalent hydrocarbon group or a C1-20 monovalent halogenated hydrocarbon group,
Y and Z are each independently a direct bond, -O-, -S-, -CO-, $-SO_2-$, -SO-, $-(CH_2)_u-$, $-(CF_2)_u-$ (u is an integer of 1 to 10), $-C(CH_3)_2-$, or $-C(CF_3)_2-$,
$R^{17}$ is independently a direct bond, $-O(CH_2)_p-$, $-O(CF_2)_p-$, $-(CH_2)_p-$ or $-(CF_2)_p-$ (p is an integer of 1 to 12),
$R^{18}$ and $R^{19}$ are each independently a hydrogen atom or a protective group, wherein at least one of all $R^{18}$s and $R^{19}$s which are contained in the structural unit (1) is a hydrogen atom,
$x^1$ is independently an integer of 0 to 6,
$x^2$ is an integer of 1 to 7,
a is 0 or 1, and
b is an integer of 0 to 20.

7. The aromatic copolymer according to any one of claims 1 to 6, wherein the hydrophobic segment (B) is a segment in which the structural unit (2) is randomly copolymerized with the structural unit (3).

8. The aromatic copolymer according to any one of claims 1 to 7, wherein the structural unit (2) is contained at 33 to 99 wt%, provided that the total content of the structural units (2) and (3) is 100 wt%.

9. A polymer electrolyte membrane comprising the aromatic copolymer according to any one of claims 1 to 8.

10. A membrane-electrode assembly comprising a gas diffusion layer, a catalyst layer, the polymer electrolyte membrane according to claim 9, a catalyst layer and a gas diffusion layer that are laminated in this order.

11. A polymer electrolyte fuel cell comprising the membrane-electrode assembly according to claim 10.

[Fig.1]

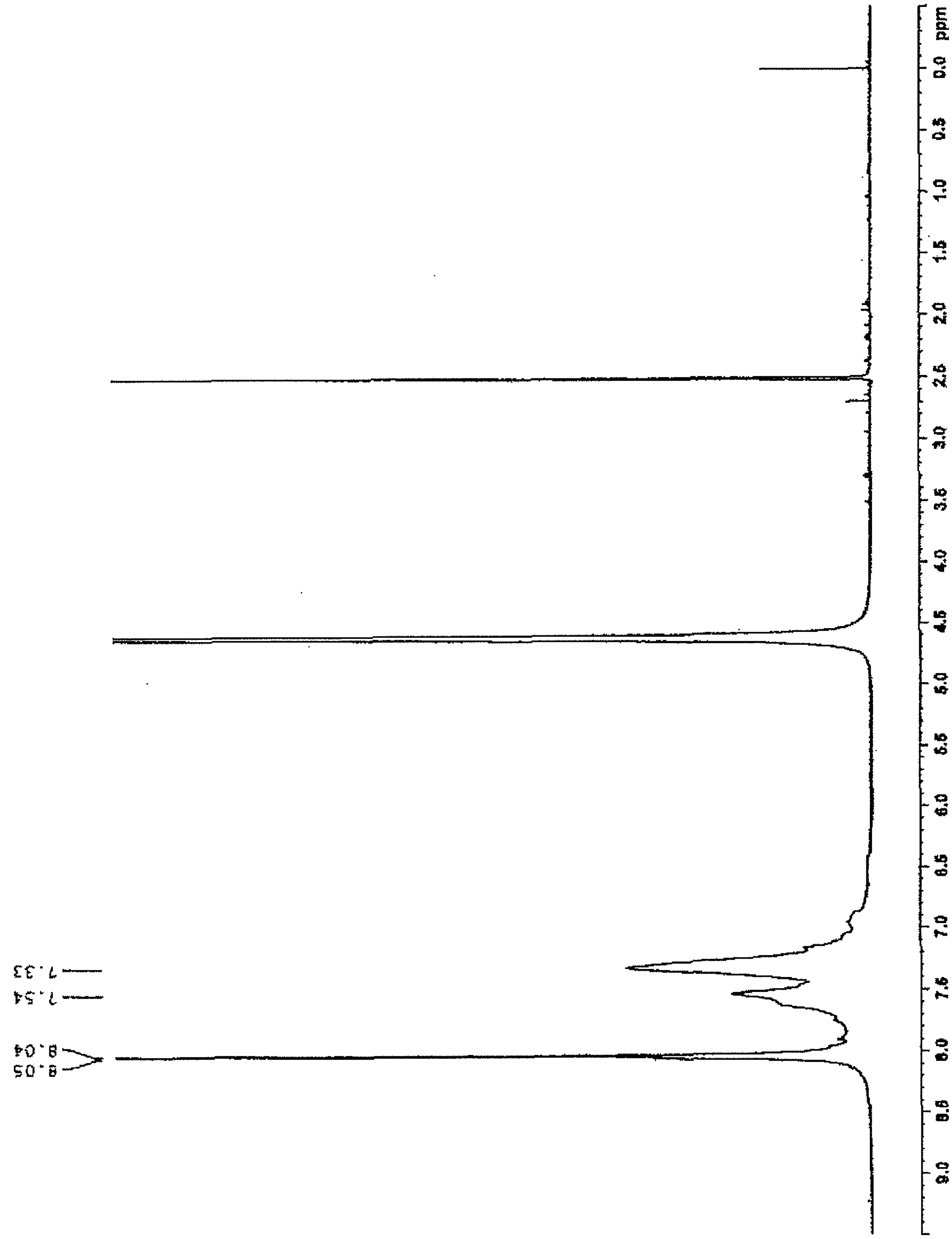
ppm
0.0
0.5
1.0
1.5
2.0
2.5
3.0
3.5
4.0
4.5
5.0
5.5
6.0
6.5
7.0
7.5
8.0
8.5
9.0
7.33
7.54
8.04
8.05

[Fig.2]

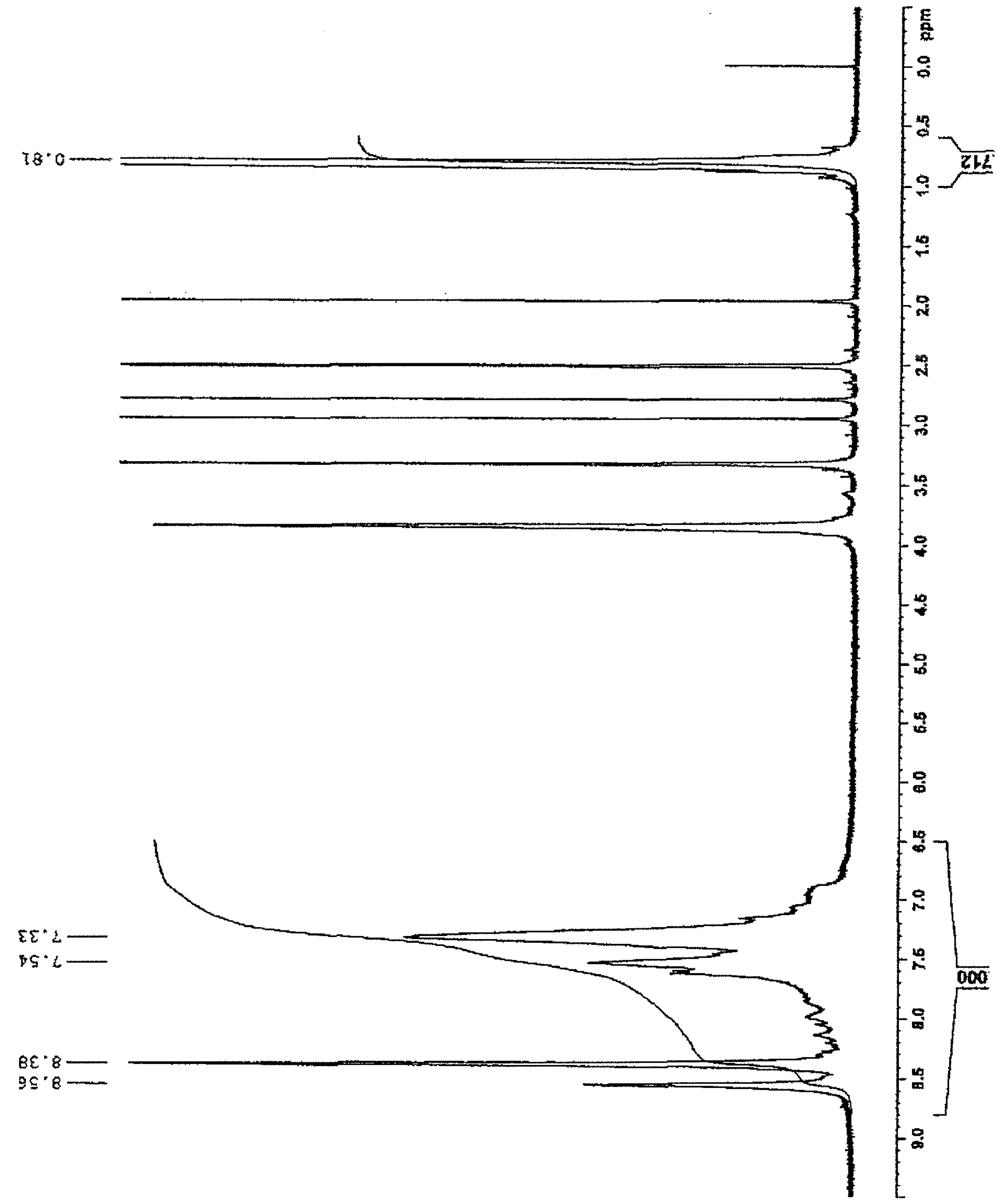
0.81
7.33
7.54
8.38
8.56
ppm
0.0
0.5
1.0
1.5
2.0
2.5
3.0
3.5
4.0
4.5
5.0
5.5
6.0
6.5
7.0
7.5
8.0
8.5
9.0

[Fig.3]

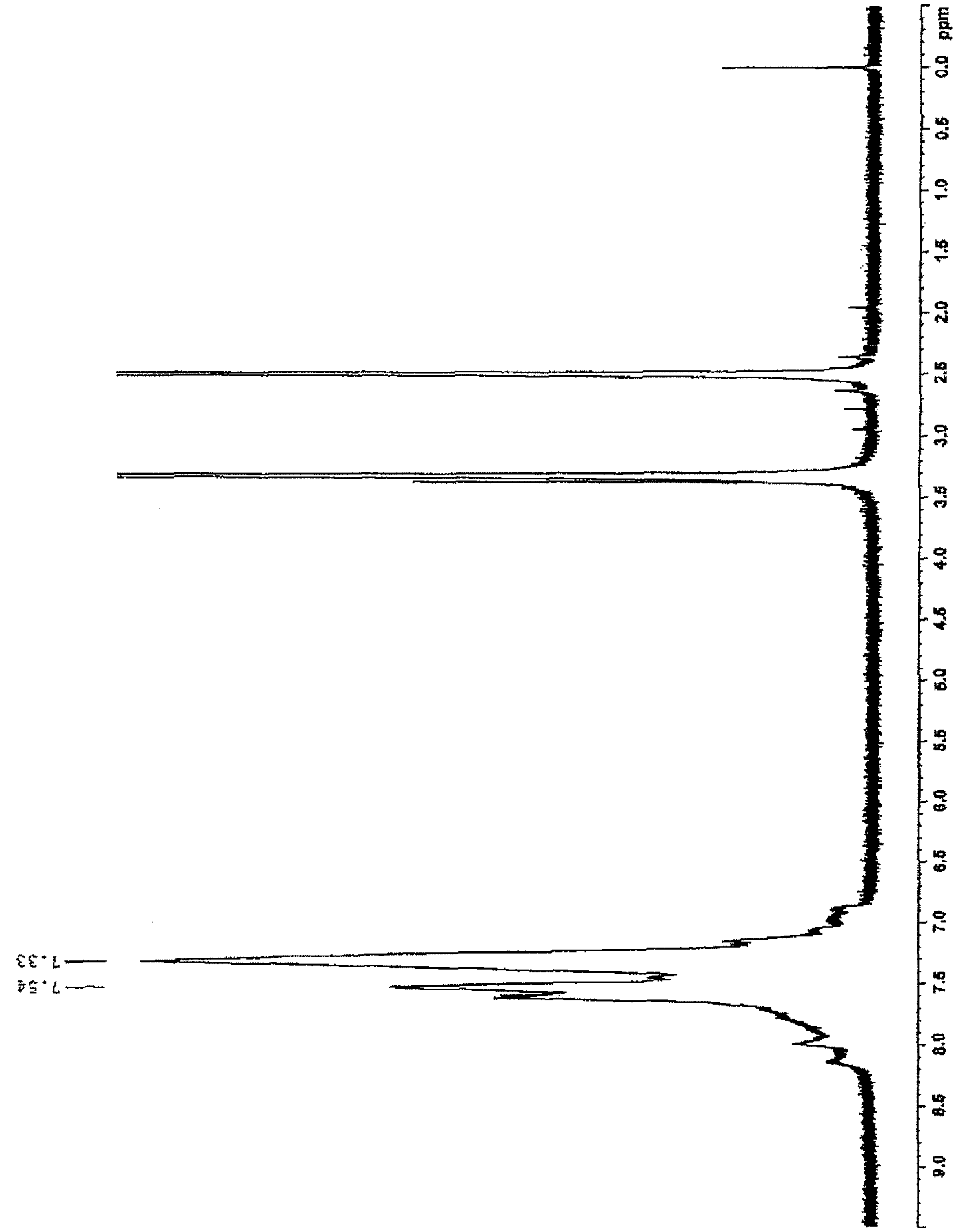

[Fig.4]

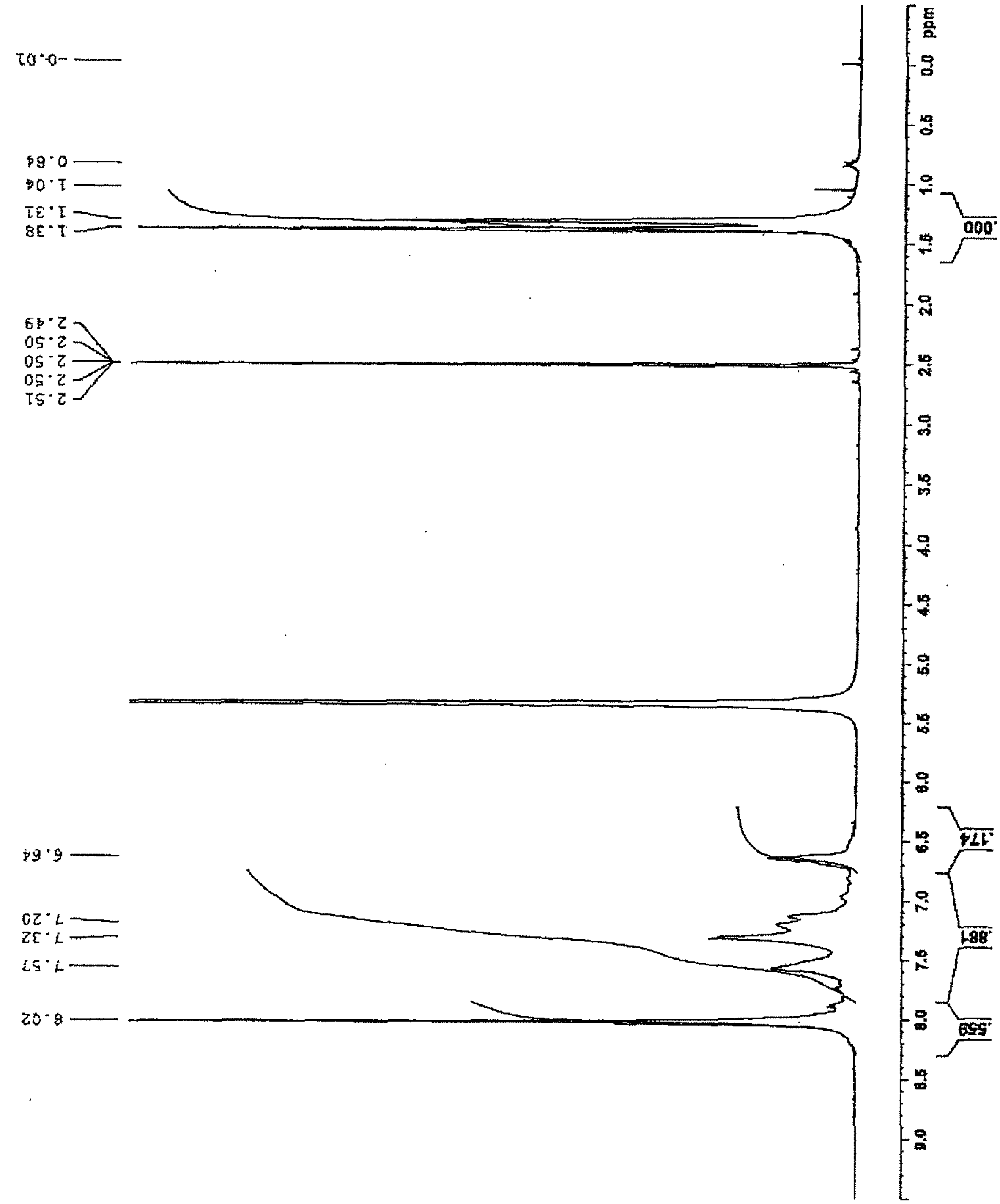
-0.01
0.84
1.04
1.31
1.38
2.49
2.50
2.50
2.50
2.51
6.64
7.20
7.32
7.57
8.02
ppm
0.0
0.5
1.0
1.5
2.0
2.5
3.0
3.5
4.0
4.5
5.0
5.5
6.0
6.5
7.0
7.5
8.0
8.5
9.0
.000
.174
.881
.559

[Fig.5]

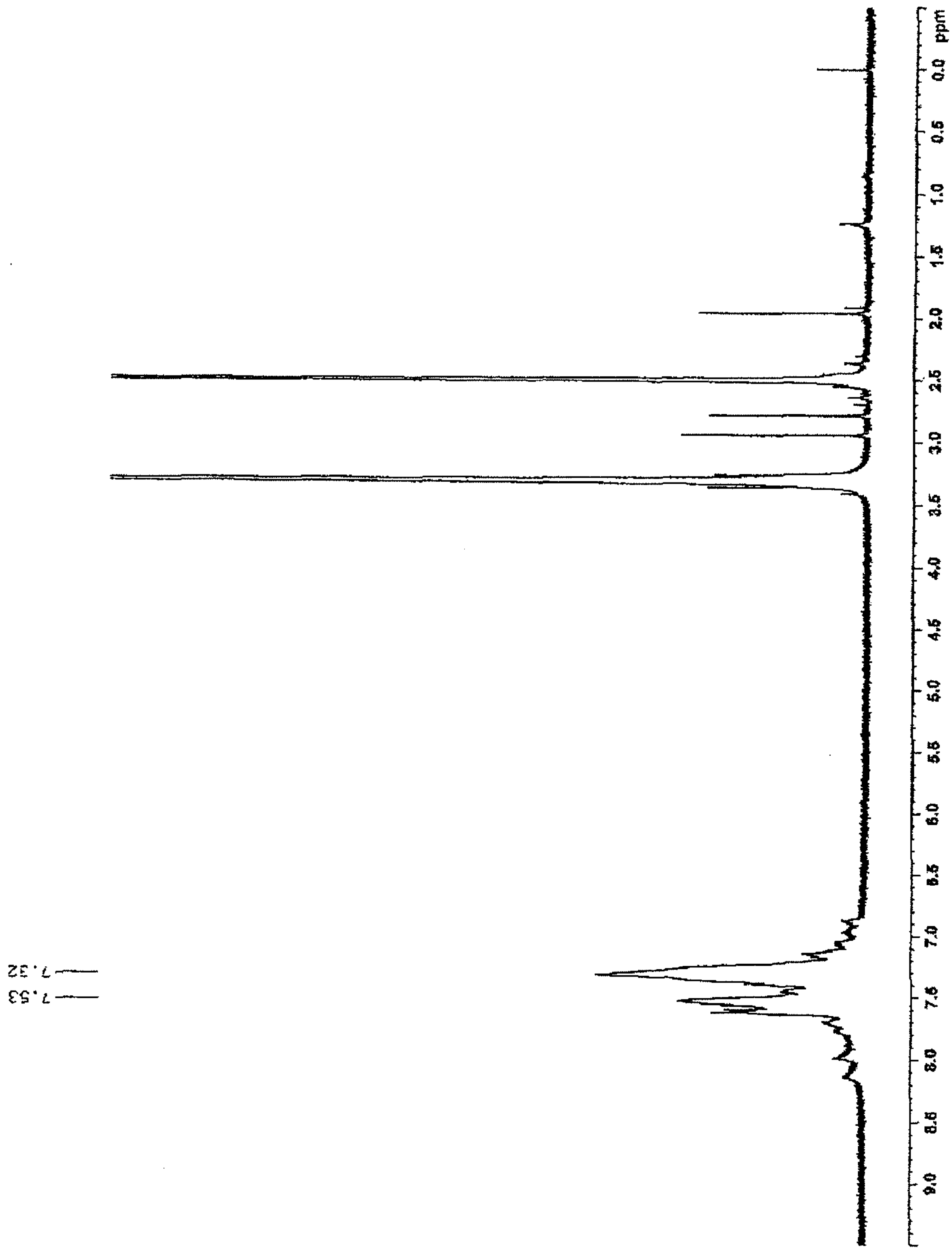

[Fig.6]

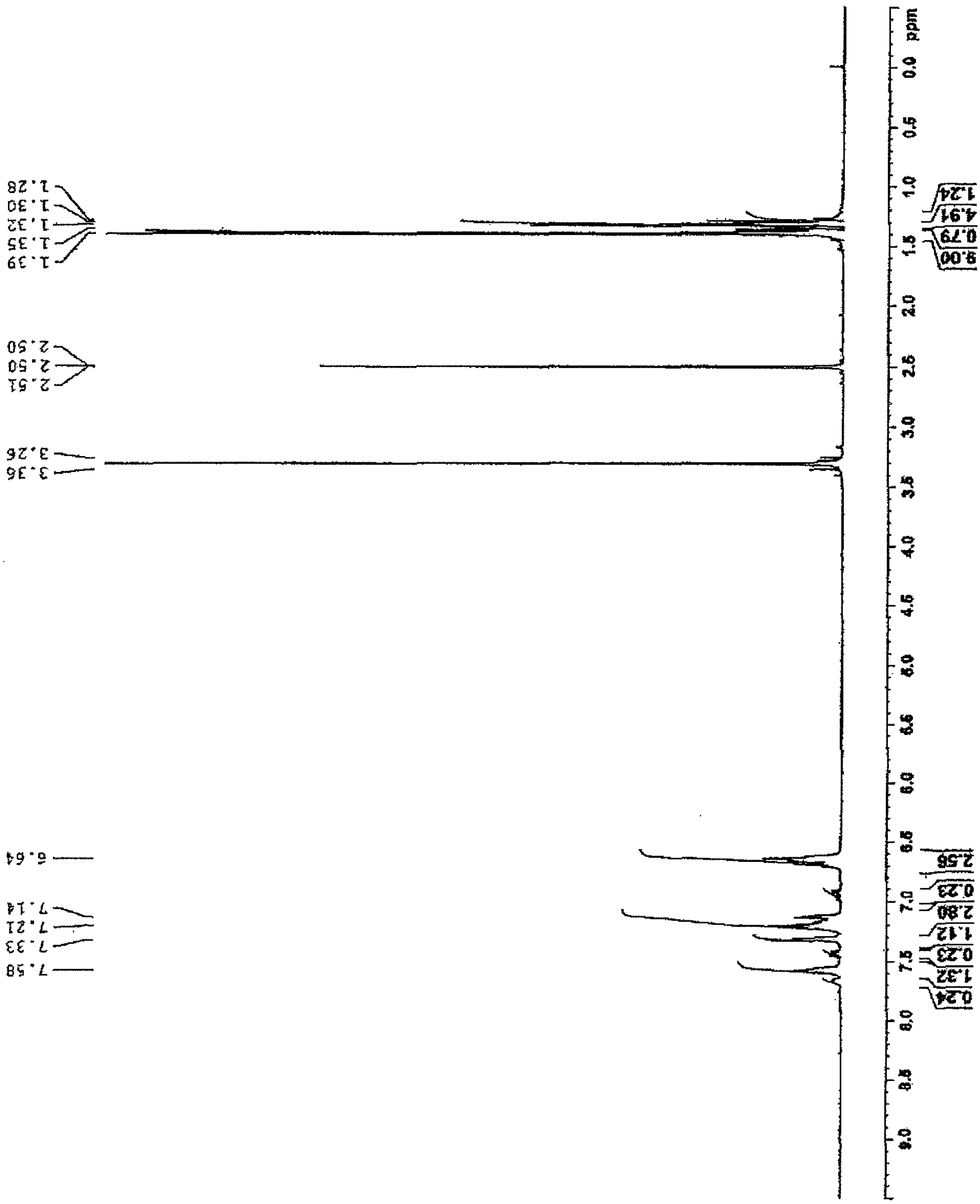
1.28
1.30
1.32
1.35
1.39
2.50
2.50
2.51
3.26
3.36
6.64
7.14
7.21
7.33
7.58
ppm
1.24
4.91
0.79
9.00
2.58
0.23
2.80
1.12
0.23
1.32
0.24

[Fig.7]

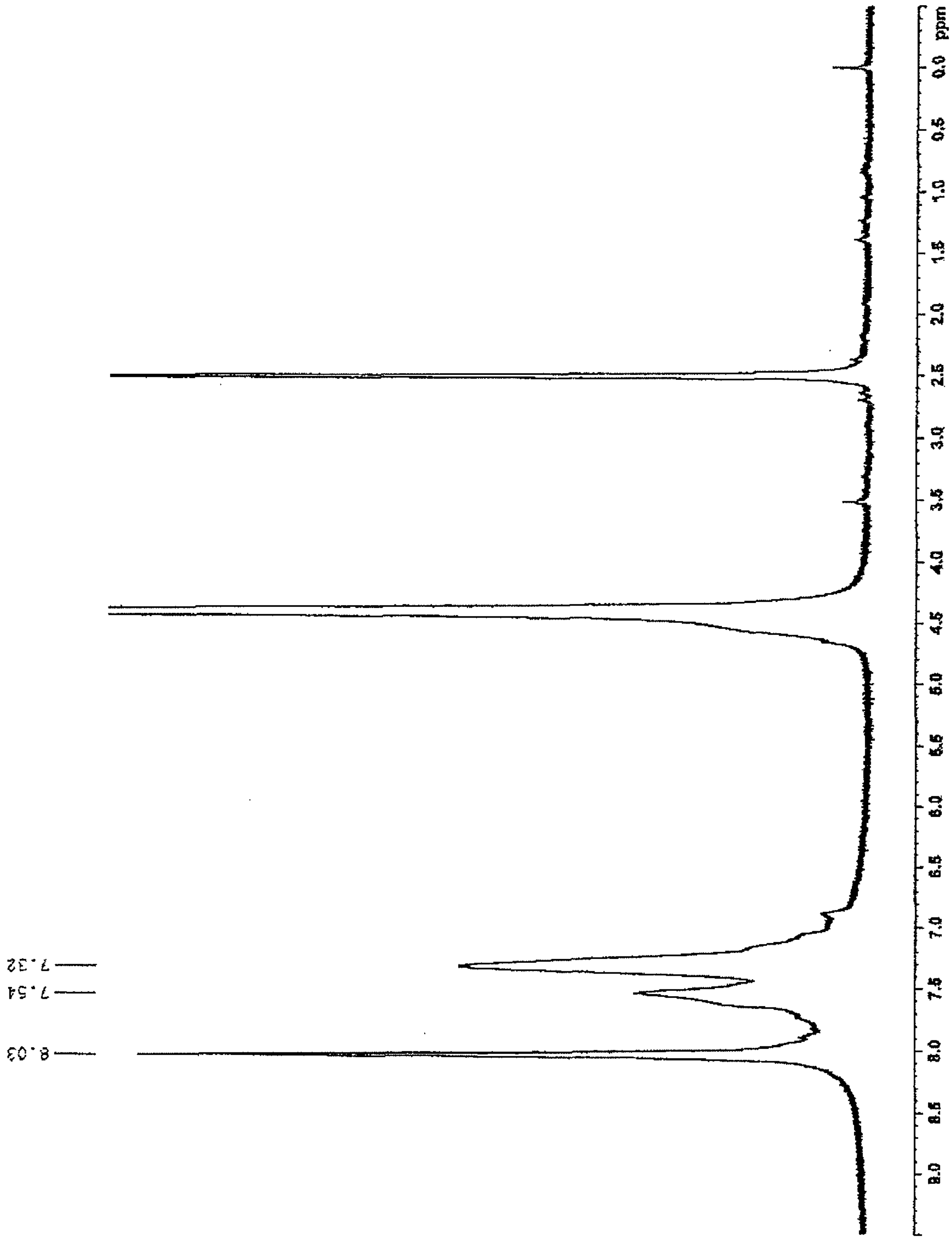

[Fig.8]

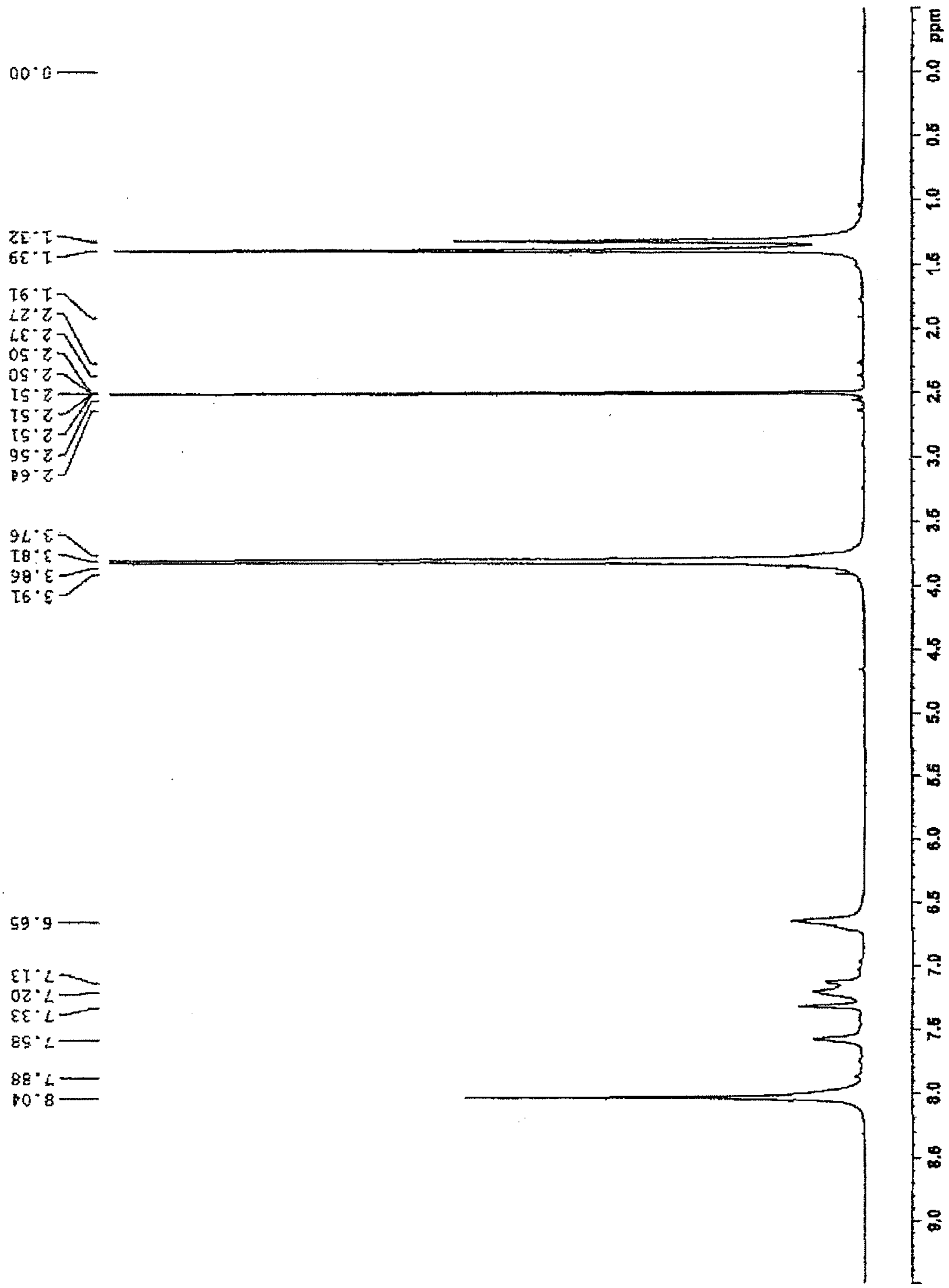
0.00
1.32
1.39
1.91
2.27
2.37
2.50
2.50
2.51
2.51
2.51
2.56
2.64
3.76
3.81
3.86
3.91
6.65
7.13
7.20
7.33
7.58
7.88
8.04
ppm

**INTERNATIONAL SEARCH REPORT**

International application No.
PCT/JP2012/069108

A. CLASSIFICATION OF SUBJECT MATTER
*C08G61/00*(2006.01)i, *H01B1/06*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
C08G61/00-61/12, H01B1/06, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2010-009912 A (JSR Corp.),<br>14 January 2010 (14.01.2010),<br>claims; paragraphs [0123] to [0128]; examples<br>(Family: none) | 1-3,5-11<br>4 |
| Y<br>A | JP 2010-013625 A (JSR Corp.),<br>21 January 2010 (21.01.2010),<br>claims; paragraphs [0088] to [0090]; examples<br>(Family: none) | 1-3,5-11<br>4 |
| Y<br>A | JP 2009-295324 A (JSR Corp.),<br>17 December 2009 (17.12.2009),<br>claims; paragraphs [0081] to [0085]; examples<br>(Family: none) | 1-3,5-11<br>4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 September, 2012 (24.09.12) | 09 October, 2012 (09.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/069108

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-031232 A (Ube Industries, Ltd.), 31 January 2003 (31.01.2003), claims; paragraph [0009] & US 2004/0101730 A1 & EP 1394879 A1 & WO 02/091507 A1 | 1-3,5-11 |
| P,A | WO 2011/145748 A1 (Sumitomo Chemical Co., Ltd.), 24 November 2011 (24.11.2011), claims; examples & JP 2012-001715 A | 1-11 |
| A | JP 2011-090908 A (JSR Corp.), 06 May 2011 (06.05.2011), claims; examples (Family: none) | 1-11 |
| A | WO 2011/049211 A1 (JSR Corp.), 28 April 2011 (28.04.2011), claims; examples (Family: none) | 1-11 |
| A | JP 2010-015980 A (Sumitomo Chemical Co., Ltd.), 21 January 2010 (21.01.2010), claims; examples & US 2011/0081597 A1 & EP 2284844 A1 & WO 2009/148175 A1 & CN 102047345 A | 1-11 |
| A | JP 2007-186608 A (JSR Corp.), 26 July 2007 (26.07.2007), claims; examples (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5403675 A
- JP 2011108642 A
- JP 2011089036 A
- WO 2007010731 A
- JP 2001342241 A
- JP 2004137444 A
- JP 2004345997 A
- JP 2004346163 A
- JP 2003113136 A
- JP 2004244517 A
- JP 2003143914 A
- JP 2004346164 A
- JP 2003348523 A
- JP 2005112985 A
- JP 2003348524 A
- JP 2004211739 A
- JP 2006028414 A
- JP 2004211740 A
- JP 2006028415 A
- JP 2008119662 A
- JP 2007154153 A
- JP 8020660 A
- JP 2006120368 A
- JP 2004171994 A
- JP 2009064777 A


### Non-patent literature cited in the description


- *Polymer,* 2010, vol. 51, 623-631
- *Macromolecules,* 2005, vol. 38, 4147-4156